(19) Europäisches Patentamt
European Patent Office
Office européen des brevets

(11) **EP 4 431 938 A1**

(12) **EUROPEAN PATENT APPLICATION**
published in accordance with Art. 153(4) EPC

(43) Date of publication:
**18.09.2024 Bulletin 2024/38**

(21) Application number: **22889945.6**

(22) Date of filing: **31.10.2022**

(51) International Patent Classification (IPC):
*G01N 29/04* (2006.01)    *C08J 5/08* (2006.01)
*G01N 29/14* (2006.01)    *G01N 29/44* (2006.01)

(52) Cooperative Patent Classification (CPC):
**C08J 5/08; G01N 29/04; G01N 29/14; G01N 29/44**

(86) International application number:
**PCT/JP2022/040840**

(87) International publication number:
**WO 2023/080125 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2021 JP 2021182140
24.12.2021 JP 2021211118**

(71) Applicant: **Asahi Kasei Kabushiki Kaisha
Tokyo 100-0006 (JP)**

(72) Inventors:
• **ARATANI, Yusuke
  Tokyo 100-0006 (JP)**
• **AKIYAMA, Tsutomu
  Tokyo 100-0006 (JP)**
• **TANAKA, Yuji
  Tokyo 100-0006 (JP)**

(74) Representative: **D Young & Co LLP
3 Noble Street
London EC2V 7BQ (GB)**

(54) **VERIFICATION MODEL TRAINING DEVICE, VERIFICATION DEVICE, VERIFICATION MODEL TRAINING METHOD, VERIFICATION METHOD, PROGRAM, RECOVERY METHOD, CONTINUOUS FIBER-REINFORCED PLASTIC COMPOSITE MATERIAL, AND MANUFACTURING METHOD**

(57)    A testing model learning apparatus 1 that can test a fracture state of a produced material with a high accuracy includes a known material data input unit 11 that receives an input of known material data indicating a distribution of hammering sound data including a plurality of characteristic values related to a hammering sound generated when a known material of which fracture state is known is struck and the fracture state of the known material, a proportion for learning calculation unit 13 that determines, based on the known material data, classes for dividing the distribution, and calculates proportions for learning that are proportions that the hammering sound data corresponding to the fracture state is included in the respective classes, and a model learning unit 14 that learns a model that outputs a fracture state of an unknown material of which fracture state is unknown, based on the proportions for learning.

*FIG. 1*

EP 4 431 938 A1

**Description**

TECHNICAL FIELD

The present disclosure relates to a testing model learning apparatus, a testing apparatus, a learning method for a testing model, a testing method, a program, a recovery method, a continuous fiber reinforced thermoplastic, and a production method.

BACKGROUND

Conventionally, a method has been known for inferring a physical property of a resin composition based on information on the production conditions used to produce that resin composition. For example, PTL 1 discloses that a learning model for inferring a physical property of a resin composition is generated from information on the production conditions for producing the resin composition, and information on the production conditions is inputted into the learning model, so that the learning model outputs a physical property.

CITATION LIST

Patent Literature

PTL 1: JP 2020-163783 A

SUMMARY

(Technical Problem)

A testing of a material actually manufactured, however, is not conducted in the technique described in PTL 1, and thus testing the fracture state of a produced material with high accuracy has been needed.
In view of such circumstances, an object of the present disclosure is to provide a testing model learning apparatus, a testing apparatus, a learning method for a testing model, a testing method, a program, a recovery method, a continuous fiber reinforced thermoplastic, and a production method capable of testing the fracture state of a produced material with high accuracy.

(Solution to Problem)

In order to solve the above problem, the present inventors have conducted diligent research and conceived of a testing model learning apparatus, a testing apparatus, a learning method for a testing model, a testing method, a program, a recovery method, a continuous fiber reinforced thermoplastic, and a production method capable of testing the fracture state of a produced material with high accuracy, thereby completing the present disclosure.
Specifically, the present disclosure is as follows.

[1] A testing model learning apparatus comprising:

a known material data input unit that receives an input of known material data indicating a distribution of hammering sound data comprising a plurality of characteristic values related to a hammering sound generated when a known material of which fracture state is known is struck and the fracture state of the known material;
a proportion for learning calculation unit that determines, based on the known material data, a plurality of classes for dividing the distribution, and calculates proportions for learning that are proportions that the hammering sound data corresponding to the fracture state is included in the respective plurality of classes; and
a model learning unit that learns a model that outputs a fracture state of an unknown material of which fracture state is unknown, based on the proportions for learning.

[2] The testing model learning apparatus according to [1], wherein the proportion for learning calculation unit determines the plurality of classes by non-hierarchical clustering.
[3] The testing model learning apparatus according to [1] or [2], wherein the plurality of characteristic values are an amplitude and a duration.
[4] The testing model learning apparatus according to any one of [1] to [3], wherein the plurality of characteristic values related to the hammering sound are obtained by acoustic emission.

[5] A testing apparatus that conducts a test using a model, the model being learned with known material data indicating a distribution of hammering sound data comprising a plurality of characteristic values related to a hammering sound generated when a known material of which fracture state is known is struck and the fracture state of the known material, for outputting a fracture state of an unknown material of which fracture state is unknown, based on proportions for learning that are proportions that the hammering sound data is included in a respective plurality of classes in the distribution, the testing apparatus comprising:

an unknown material data input unit that receives an input of unknown material data indicating a distribution of hammering sound data indicating the plurality of characteristic values related to a hammering sound generated when the unknown material is struck;

a proportion for determination calculation unit that calculates proportions for determination that are proportions that the hammering sound data of which distribution is indicated by the unknown material data is included in the respective plurality of classes; and

a determination unit that inputs the proportions for determination to the model and causes the model to output a fracture state of the unknown material based on the proportions for determination.

[6] The testing apparatus according to [5], wherein the determination unit causes the model to output the fracture state based on a proportion for determination included in one of the plurality of classes in the hammering sound data and a proportion for determination included in another class that is different from the one class in the hammering sound data.

[7] The testing apparatus according to [5] or [6], wherein the plurality of classes are determined by dividing the distribution of the hammering data by non-hierarchical clustering.

[8] The testing apparatus according to any one of [5] to [7], wherein the plurality of characteristic values are an amplitude and a duration.

[9] The testing apparatus according to any one of [5] to [8], wherein the plurality of characteristic values related to the hammering sound are obtained by acoustic emission.

[10] A learning method for a testing model, comprising the steps of:

receiving an input of known material data indicating a distribution of hammering sound data comprising a plurality of characteristic values related to a hammering sound generated when a known material of which fracture state is known is struck and the fracture state of the known material,

determining, based on the known material data, a plurality of classes for dividing the distribution, and calculating proportions for learning that are proportions that the hammering sound data corresponding to the fracture state is included in the respective plurality of classes,

learning a model that outputs a fracture state of an unknown material of which fracture state is unknown, based on the proportions for learning.

[11] The learning method for a testing model according to [10], wherein the plurality of characteristic values related to the hammering sound are obtained by acoustic emission.

[12] A testing method performed by a testing apparatus that conducts a test using a model, the model being learned with known material data indicating a distribution of hammering sound data comprising a plurality of characteristic values related to a hammering sound generated when a known material of which fracture state is known is struck and the fracture state of the known material, for outputting a fracture state of an unknown material of which fracture state is unknown, based on proportions for learning that are proportions that the hammering sound data is included in a respective plurality of classes in the distribution, the testing method comprising the steps of:.

receiving an input of unknown material data indicating a distribution of hammering sound data indicating a plurality of characteristic values related to a hammering sound generated when the unknown material is struck;

calculating proportions for determination that are proportions that the hammering sound data of which distribution is indicated by the unknown material data is included in the respective plurality of classes; and

inputting the proportions for determination to the model and causing the model to output a fracture state of the unknown material based on the proportions for determination.

[13] The testing method according to [12], wherein the plurality of characteristic values related to the hammering sound are obtained by acoustic emission.

[14] A program for causing a computer to function as the testing model learning apparatus according to any one of [1] or [4].

[15] A program for causing a computer to function as the testing apparatus according to any one of [5] or [9].

[16] A method of recovering an unknown material, comprising the steps of:

receiving an input of data indicating the fracture state of the unknown material determined using the testing method according to [12] or [13],

determining a recovery condition for recovering an interface of the unknown material based on the fracture state; and

recovering the interface of the unknown material according to the recovery condition.

[17] A continuous fiber reinforced thermoplastic comprising continuous reinforcing fibers and a thermoplastic resin, measurable by the testing method according to [12] or [13],

the continuous fiber reinforced thermoplastic having a recovery ratio (%) expressed by the following Formula (1) in a range of 50 to 100%:

$$\text{the recovery ratio } (\%) = (B/A) \times 100 \qquad \text{Formula (1)}$$

(in the above Formula (1), A represents, when scanning electron microscope images (at a magnification ratio from 4000 to 4500) of a test specimen (a) cut out from the continuous fiber reinforced thermoplastic are obtained at 20 arbitrary-selected points so that cross-sections of continuous reinforcing fibers are included in the images, a number of continuous reinforcing fibers without voids at an interface between the continuous reinforcing fibers and the thermoplastic resin among continuous reinforcing fibers present in the images; and

B represents, when the continuous fiber reinforced thermoplastic is subjected to a load test and is then subjected to a recovery step after the load test, and scanning electron microscope images (at a magnification ratio from 4000 to 4500) of a test specimen (b) cut out from the continuous fiber reinforced thermoplastic after recovery are obtained at 20 arbitrary-selected points so that cross-sections of continuous reinforcing fibers in the continuous fiber reinforced thermoplastic after recovery are included in the images, a number of continuous reinforcing fibers without voids at the interface between the continuous reinforcing fibers and the thermoplastic resin among continuous reinforcing fibers present in the images).

[18] The continuous fiber reinforced thermoplastic according to [17], wherein the recovery step of the formula (1) is a step of heating the continuous fiber reinforced thermoplastic after the load test in a temperature range equal to or higher than a glass transition temperature of the thermoplastic resin in the continuous fiber reinforced thermoplastic and equal to or lower than the glass transition temperature + 150 °C.

[19] The continuous fiber reinforced thermoplastic according to [17] or [18], wherein the recovery step of the formula (1) comprises heating the continuous fiber reinforced thermoplastic after the load test at a temperature equal to or higher than the glass transition temperature of the thermoplastic resin and lower than a melting point of the thermoplastic resin.

[20] The continuous fiber reinforced thermoplastic according to any one of [17] to [19], wherein the recovery step of the formula (1) comprises heating the continuous fiber reinforced thermoplastic after the load test while a water absorption ratio of the continuous fiber reinforced thermoplastic after the load test is kept in a range of at least 0.3 mass%.

[21] The continuous fiber reinforced thermoplastic according to any one of [17] to [20], wherein the recovery step of the formula (1) comprises heating the continuous fiber reinforced thermoplastic after the load test under pressurization.

[22] The continuous fiber reinforced thermoplastic according to any one of [17] to [20], wherein the recovery step of the formula (1) comprises heating the continuous fiber reinforced thermoplastic after the load test without pressurization.

[23] A production method of the continuous fiber reinforced thermoplastic according to any one of [17] to [22], comprising

obtaining the continuous fiber reinforced thermoplastic by stacking continuous reinforcing fibers that have been surface-treated with a bundling agent (1) containing a coupling agent and a thermoplastic resin,

wherein an interfacial polishing strength of the continuous fiber reinforced thermoplastic is 0.8 to 1.2 times an interfacial polishing strength of a continuous fiber reinforced thermoplastic obtained by stacking continuous fibers that have been surface-treated only with the coupling agent and the thermoplastic resin.

[24] A production method of the continuous fiber reinforced thermoplastic according to any one of [17] to [22], comprising

obtaining the continuous fiber reinforced thermoplastic comprising a bundling agent (1) containing a coupling agent, continuous reinforcing fibers, and a thermoplastic resin by stacking the continuous reinforcing fibers and the thermoplastic resin,

wherein an interfacial polishing strength of the continuous fiber reinforced thermoplastic is twice or more an interfacial polishing strength of a continuous fiber reinforced thermoplastic obtained by stacking the continuous fibers when a surface treated portion by the bundling agent (1) is removed and the thermoplastic resin.

(Advantageous Effect)

According to the testing model learning apparatus, the testing apparatus, the learning method for a testing model, the testing method, the program, the recovery method, the continuous fiber reinforced thermoplastic, and the production method of the present disclosure, the fracture state of a produced unknown material can be tested with high accuracy.

BRIEF DESCRIPTION OF THE DRAWINGS

In the accompanying drawings:

FIG. 1 is a schematic diagram of a testing model learning apparatus according to the present embodiment;
FIG. 2 is a diagram illustrating one example of a hammering test;
FIG. 3 is a diagram illustrating one example of two pieces of known material data of which input is received by the known material data input unit illustrated in FIG. 1;
FIG. 4 is a diagram illustrating one example of a plurality of pieces of known material data, which is greater in number than the two pieces of known material data illustrated in FIG. 3;
FIG. 5 is a diagram illustrating one example of proportions for learning;
FIG. 6 is a diagram illustrating one example of the distribution of the proportions for learning;
FIG. 7 is a flowchart illustrating one example of the operation in the testing model learning apparatus illustrated in FIG. 1;
FIG. 8 is a schematic diagram of a testing apparatus according to the present embodiment;
FIG. 9 is a diagram in which proportions for determining of hammering data of an unknown material are added to the distribution of proportions for learning illustrated in FIG. 6;
FIG. 10 is a flowchart illustrating one example of the operation in the testing apparatus illustrated in FIG. 8;
FIG. 11 is a schematic diagram of a recovery control apparatus according to the present embodiment;
FIG. 12 is a flowchart illustrating one example of the operation in the testing model learning apparatus illustrated in FIG. 11.
FIG. 13 is a diagram illustrating the accuracies of evaluations of models according to algorithms;
FIG. 14 is a schematic diagram illustrating how the porosity between a continuous reinforcing fiber and a thermoplastic resin is calculated based on a scanning electron microscope image (at a magnification ratio of 4000) of a test specimen (b) cut out from a continuous fiber reinforced thermoplastic after a recovery step;
FIG. 15 is a schematic diagram of a cutout of a part of FIG. 14, more specifically, a schematic diagram of a cutout of the region between the dotted line depicting the similarity diagram of the shape of the interface between the continuous reinforcing fiber and the thermoplastic resin and the solid line depicting the shape of the interface between the continuous reinforcing fiber and the thermoplastic resin; and
FIG. 16 is a hardware block diagram of the testing model learning apparatus and the testing apparatus.

DETAILED DESCRIPTION

<Configuration of testing model learning apparatus>

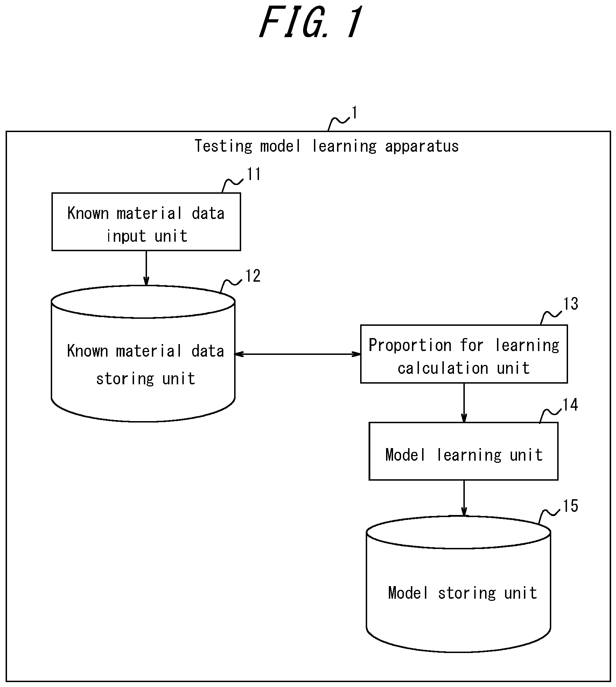

Referring to FIGS. 1 to 6, the configuration of a testing model learning apparatus of the present embodiment will be described.

As illustrated in FIG. 1, the testing model learning apparatus according to the present embodiment 1 includes a known material data input unit 11, a known material data storing unit 12, a proportion for learning calculation unit 13, a model learning unit 14, and a model storing unit 15.

The known material data input unit 11 may be configured by an input interface. The input interface is an interface that receives an input of information and may be a pointing device, keyboard, mouse, and the like. The input interface may also be an interface that receives an input of information received by a communication interface. For example, standards may be used for the communication interface, such as Ethernet® (Ethernet is a registered trademark in Japan, other countries, or both), FDDI (Fiber Distributed Data Interface), and Wi-Fi® (Wi-Fi is a registered trademark in Japan, other countries, or both). The known material data storing unit 12 and the model storing unit 15 may be configured by a memory. The memory may be configured by an HDD (Hard Disk Drive), an SSD (Solid State Drive), an EEPROM (Electrically Erasable Programmable Read-Only Memory), a ROM (Read-Only Memory), a RAM (Random Access Memory), or the like. The proportion for learning calculation unit 13 and the model learning unit 14 may configure a control unit (controller). The control unit may be configured by dedicated hardware, such as an ASIC (Application Specific Integrated Circuit) or FPGA (Field-Programmable Gate Array), may be configured by a processor, or may be configured by a combination of both.

The known material data input unit 11 receives an input of known material data, which indicates the distribution of hammering data including a plurality of characteristic values related to a hammering sound generated when a known material of which fracture state is known is struck, and the fracture state of the known material. A fracture state refers to the state of destruction of a material and includes "not fractured (normal)", "splitting fiber", "unimpregnated", and "interfacial fracture" states of the material. Note that the "unimpregnated" state is a state in which a resin forming the material has not fully penetrated into the reinforcing fibers because the time to form the material is short. Materials of which fracture state is unknown are referred to as "unknown materials" and known and unknown materials are sometimes simply referred to as "materials" without distinguishing between them.

Hammering data is data including a plurality of characteristic values related to a hammering sound generated when a material is struck in a hammering test. The material may be, for example, a continuous fiber reinforced thermoplastic, a resin material, a comb-like material, a metal material, a concrete material, wood, a paper material, a fiber material, glass, an organic natural material, a ceramic, and a combination of these. Of these, a continuous fiber reinforced thermoplastic and a resin material are particularly suitable for this testing method because of the complexity of fracture. The continuous fiber reinforced thermoplastic may be a material formed by impregnating fabrics of glass fibers or the like with a thermoplastic resin, followed by solidifying. Furthermore, the continuous fiber reinforced thermoplastic may be a unidirectional material or a material made of random fibers, carbon fibers, thermosetting resin, short fibers, etc.

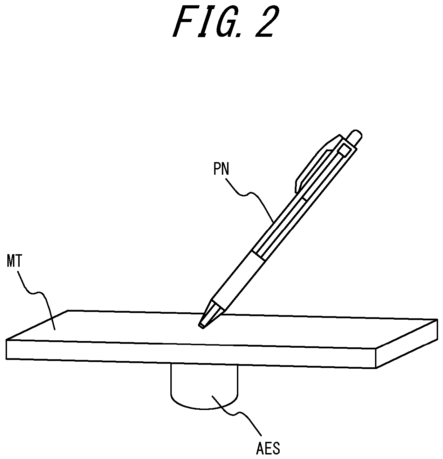

In a hammering test, as illustrated in FIG. 2, for example, vibrations and sound waves such as acoustic emission (AE) waves are emitted from a material MT that is struck by a pen PN, and an AE sensor provided on the surface of the material MT detects a plurality of characteristic values of the vibrations and sound waves. Examples of the vibrations and sound waves include sounds, AE, and ultrasonic waves. Of these, AE is preferred because it is less susceptible to the measurement environment and enables highly accurate testing of the fracture state. In the example illustrated in FIG. 2, the material MT is struck by the pen PN, but this is not limiting and the material MT may be struck by a tool such as a metal rod and a hammer. The AE sensor is preferably disposed in close proximity to the part of the material MT to be tested. The surface of the part to be tested is preferably smooth. Hence, the surface may be made pseudo-smooth by applying grease or the like in advance. In addition, it is preferable that the side of the material MT opposite to the side where the AE sensor is disposed is struck.

The plurality of characteristic values may be two or more of the amplitude (dB), duration ($\mu$s), frequency (Hz), sound energy (W/m$^2$), etc. Note that the plurality of characteristic values may be the amplitude and the duration. In such a configuration, a model learned by the model learning unit 14 enables the testing apparatus 2 to test the fracture state of an unknown material with higher accuracy. In the following, an example where the plurality of characteristic values are the amplitude and the duration will be described in detail.

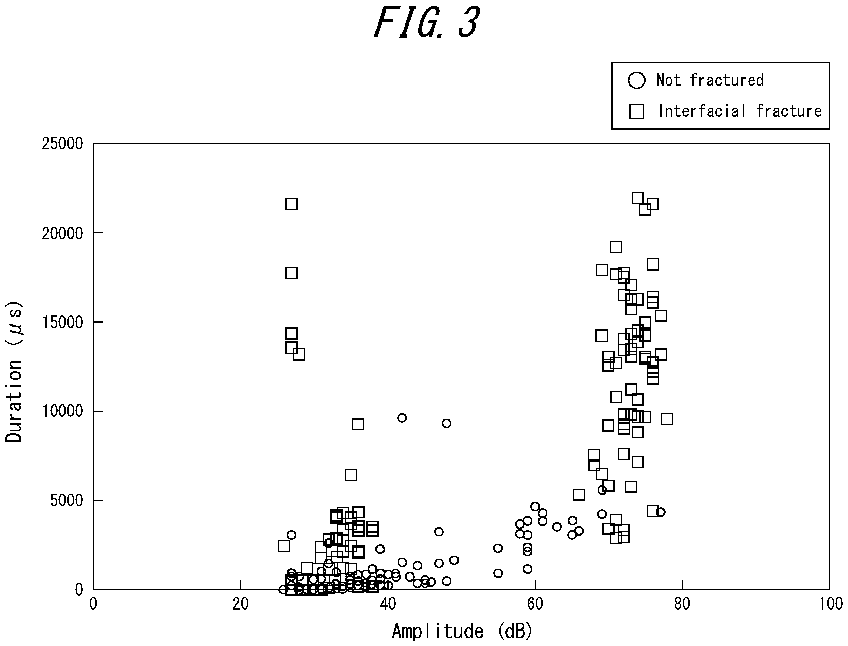

In the example illustrated in FIG. 3, hammering data including amplitudes and durations obtained by one known material of which fracture state is "not fractured" is struck (marked with circles in FIG. 3), and hammering data including amplitudes and durations obtained by one known material of which fracture state is the "interfacial fracture" is struck (marked with squares in FIG. 3) are indicated.

In such an example, the known material data input unit 11 receives an input of the known material data, which includes the distribution of hammering data including the amplitudes and the durations of hammering sounds generated when the known material of which fracture state is "not fractured" is struck, and the fracture state indicating that the fracture state of the known material is "not fractured". Similarly, the known material data input unit 11 receives an input of the known material data, which includes the distribution of hammering data including the amplitudes and durations of hammering sounds obtained when the known material of which fracture state is the "interfacial fracture" is struck, and the fracture state indicating that fracture state of the known material is the "interfacial fracture".

In FIG. 3, the hammering data of the one known material of which fracture state is "not fractured" and the hammering data of the one known material of which fracture state is the "interfacial fracture" are depicted. However, the known material data input unit 11 receives an input of known material data of multiple known materials, each having a fracture state of "not fractured", and input of known material data of multiple known materials, each of which fracture state is the "interfacial fracture".

Furthermore, the known material data input unit 11 may receive an input of known material data, which includes the distribution of hammering data including the amplitudes and the durations of hammering sounds generated when a known material of which fracture state is the "splitting fiber" is struck, and the fracture state indicating that the fracture state of the known material is the "splitting fiber". The known material data input unit 11 may receive an input of known material data, which includes the distribution of hammering data including the amplitudes and the durations of hammering sounds generated when a known material of which fracture state is the "unimpregnated" is struck, and the fracture state indicating that the fracture state of the known material is the "unimpregnated".

The known material data storing unit 12 stores the known material data that includes the distribution of hammering data including the plurality of characteristic values related to the hammering sound generated when the known material is struck and the fracture state indicating the fracture state of the known material, for which input has been received by the known material data input unit 11.

In the example illustrated in FIG. 3, the known material data storing unit 12 stores the known material data including the distribution of hammering data including the amplitudes and durations of hammering sounds generated when the known material of which fracture state is "not fractured" is struck and the fracture state indicating that the known material is "not fractured. Similarly, the known material data storing unit 12 stores the known material data including the distribution of hammering data including the amplitudes and durations of hammering sounds generated when the known material of which fracture state is "interfacial fracture" is struck and the fracture state indicating that the fracture state of the known material is "interfacial fracture. Although the hammering data of the one known material of which fracture state is "not fractured" and the hammering data of the one known material of which fracture state is the "interfacial fracture" are depicted in FIG. 3, the known material data input unit 11 stores known material data of multiple known materials, each having a fracture state of "not fractured", and known material data of multiple known materials, each having a fracture state of the "interfacial fracture".

Furthermore, in a configuration where the known material data input unit 11 receives an input of known material data including the distribution of hammering sound data including the amplitudes and the durations of hammering sounds generated when a known material of which fracture state is the "splitting fiber" is struck and the fracture state indicating that the fracture state of the known material is the "splitting fiber", the known material data storing unit 12 may store the known material data. In a configuration where the known material data input unit 11 receives an input of known material data including the distribution of hammering data including the amplitudes and the durations of hammering sounds generated when a known material of which fracture state is the "unimpregnated" is struck and the fracture state indicating that the fracture state of the known material is "unimpregnated", the known material data storing unit 12 may store the known material data.

The proportion for learning calculation unit 13 determines a plurality of classes for dividing the distribution of the hammering data based on the known material data, and calculates proportions for learning Ra, which are the proportions that the hammering data corresponding to the fracture state is included in the respective plurality of classes.

Specifically, initially, the proportion for learning calculation unit 13 determines a plurality of classes for dividing the distribution of the hammering data for each of the plurality of known materials included in the known material data having a fracture state of "not fractured" and the hammering data for each of the plurality of known materials included in the known material data having a fracture state of "interfacial fracture". For example, the training ratio calculator 13 may determine the plurality of classes by non-hierarchical clustering. Specifically, the proportion for learning calculation unit 13 may determine the plurality of classes for dividing the distribution of the hammering data by using the K-means method.

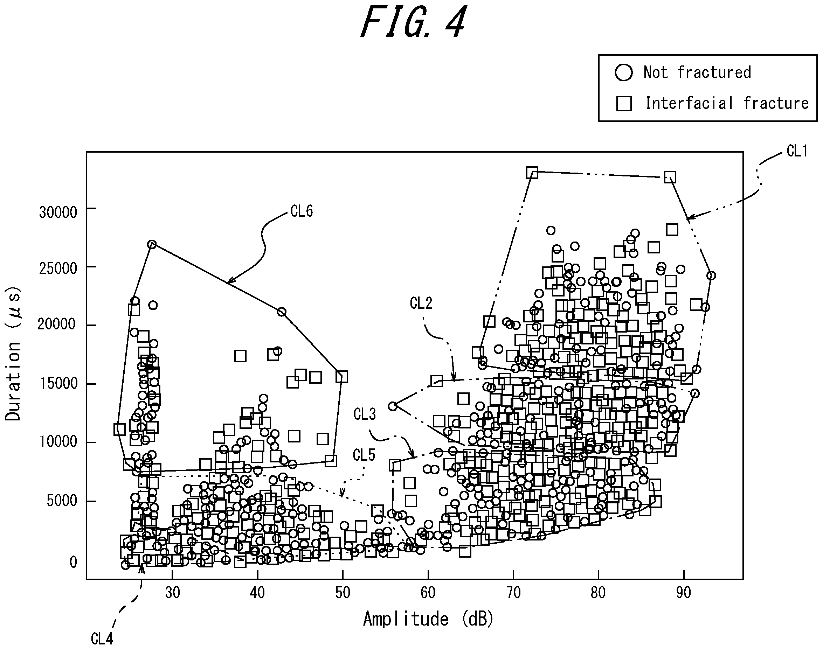

FIG. 4 illustrates the distribution of hammering data for each of the multiple known materials included in the known material data having a fracture state of "not fractured" and hammering data for each of the multiple known materials included in the known material data having a fracture state of "interfacial fracture". In the example in FIG. 4, the proportion for learning calculation unit 13 determines the six classes CL1 to CL6 by using the K-means method.

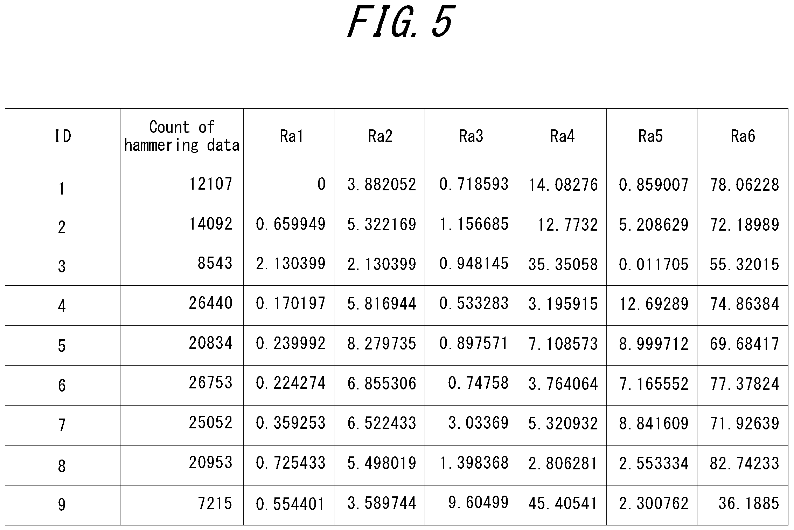

Next, the proportion for learning calculation unit 13 calculates the proportions that the hammering data is included in the respective classes for each known material. FIG. 5 depicts the counts of hammering data and the proportions for learning Ra that the hammering data is in the respective six classes CL1 to CL6, for each identification (ID) that uniquely identifies a known material.

In the example depicted in FIG. 5, for the known material identified by ID "1", the proportion for learning Ra1 that the hammering data is included in the class CL1 is 0%, the proportion for learning Ra2 that the hammering data is included in the class CL2 is about 3.88%, the proportion for learning Ra3 that the hammering data is included in the class CL3 is about 0.72%, the proportion for learning Ra4 that the hammering data is included in the class CL4 is about 14.08%, the proportion for learning Ra5 that the hammering data is included in the class CL5 is about 0.86%, and the proportion for learning Ra6 that the hammering data is included in the class CL6 is about 78.06%.

The model learning unit 14 learns a model that outputs the fracture state of an unknown material based on the proportions for learning. The model learning unit 14 may learn a model using an algorithm, such as Random forest, MLP (Multilayer perceptron), Logisticregression, SVM (Support Vector Machine), and kNN (K-Nearest Neighbor Algorithm).

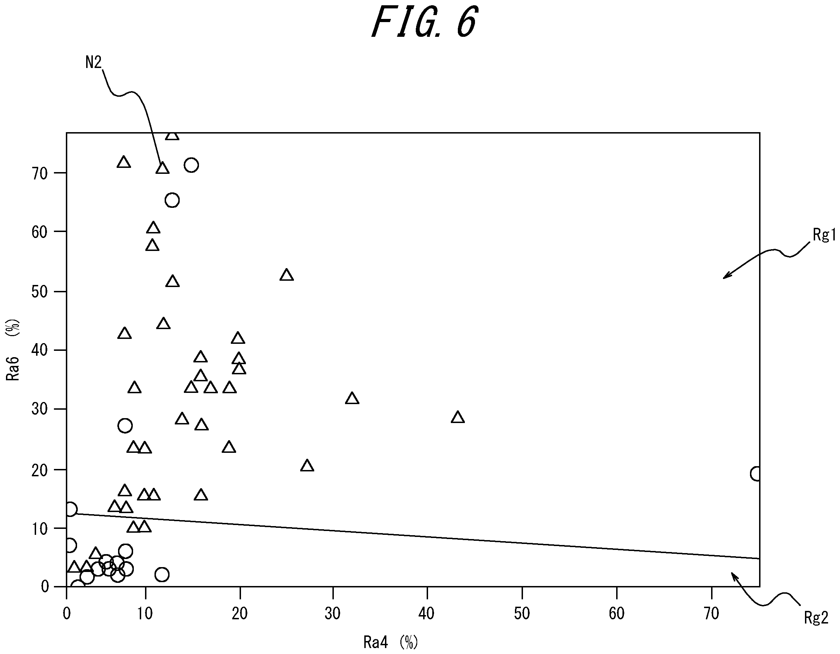

Specifically, the model learning unit 14 learns a model that outputs the fracture state of an unknown material of which fracture state is unknown, based on the distribution of known materials, in the proportions for learning Ra of two of the plurality of classes CL determined by the proportion for learning calculation unit 13. FIG. 6 illustrates the distribution of hammering data of known materials, with the proportion for learning Ra4 illustrated in FIG. 5 as the horizontal axis and the proportion for learning Ra6 as the vertical axis. As an example, the proportion for learning Ra4 of the known material corresponding to ID "2" illustrated in FIG. 5 is about 12.77%, and the proportion for learning Ra6 of the known material is about 72.19%. Therefore, in FIG. 6, the triangle N2 indicating that the fracture state of the known material corresponding to ID "2" is "interfacial fracture" is plotted at the position where the proportions for learning Ra4 is about 12.77% and the proportions for learning Ra6 is about 72.19%. Similarly, in FIG. 6, triangles indicating that the fracture state of known materials is "interfacial fracture" and circles indicating that the fracture state of known materials is "not fractured" are plotted for other known materials based on the proportions for learning Ra4 and Ra6.

In this manner, the model learning unit 14 stores the proportions for learning Rai (i = 1 to M, where M is the number of classes CL) that the hammering data is included in the class CLi and the proportions for learning Raj (j = 1 to M, where j ≠ i) that the hammering data is included in the class CLj, for each known material. The model learning unit 14 then stores the fracture states corresponding to the range of proportions for learning Rai (i = 1 to M, where M is the number of classes CL) and the proportions for learning Raj (j = 1 to M, where j ≠ i) corresponding to the respective plurality of classes. As a result, a model capable of outputting the fracture state based on the proportions for learning Rai and Raj is learned.

In the example illustrated in FIG. 6, known materials with the fracture state of "interfacial fracture" are distributed greater in number than known materials with the fracture state of "not fractured" within the range Rg1 of the proportions for learning Ra4 and Ra6. In addition, known materials with the fracture state of "not fractured" are distributed greater in number than known materials with the fracture state of "interfacial fracture" within the range Rg2 of the proportions for learning Ra4 and Ra6.

In the example illustrated in FIG. 6, i = 4 and j = 6, but the model learning unit 14 learns the model for all combinations of classes CLi and CLj. In such a configuration, the model may output the fracture state for every combination of classes CLi and CLj.

In the above, the examples in which the fracture states are "not fractured" and "interfacial fracture" have been described. However, the model learning unit 14 may learn a model in the same manner by additionally using known materials of which the fracture states are "splitting fiber" and "unimpregnated". In such a configuration, the model may output a fracture state of "not fractured", "interfacial fracture", "splitting fiber", and "unimpregnated" for every combination of classes CLi and CLj. In addition, the model may output whether the material needs to be replaced or not according to the fracture state of the material, or may output repair condition for the material according to the fracture state of the material.

Furthermore, during the learning of the training data, the model learning unit 14 may set the importance corresponding a combination of classes so as to approach the fracture state of actual training data as closely as possible. Specifically, the model learning unit 14 sets the importance of a candidate fracture state, which will be described later, for each combination of classes determined for the known material data so that the fracture state of the known material data is output with the highest accuracy.

The model storing unit 15 stores the model learned by the model learning unit 14.

<Operation of testing model learning apparatus>

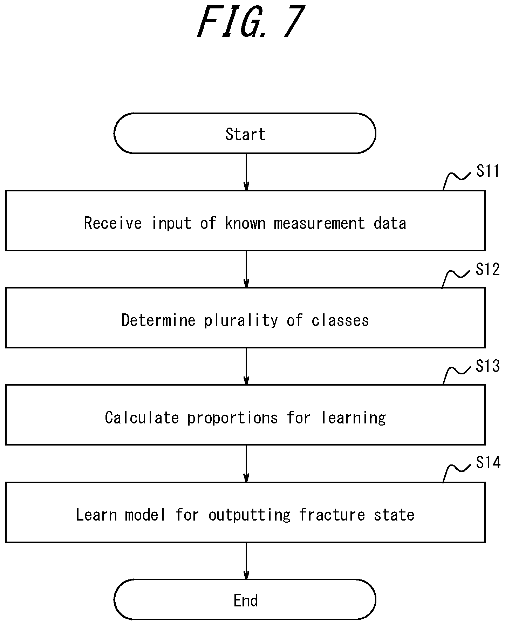

Now, the operation of the testing model learning apparatus 1 according to the present embodiment will be described with reference to FIG. 7. FIG. 7 is a flowchart illustrating one example of the operation of the testing model learning apparatus 1 according to the present embodiment. The operation in the testing model learning apparatus 1 described with reference to FIG. 7 corresponds to one example of a learning method for a testing model by the testing model learning apparatus 1 according to the present embodiment.

In step S11, the known material data input unit 11 receives an input of known material data, which indicates the distribution of hammering data including a plurality of characteristic values related to a hammering sound generated when a known material of which fracture state is known is struck, and the fracture state of the known material.

In step S12, the proportion for learning calculation unit 13 determines a plurality of classes CL for dividing the distribution of the hammering data based on the known material data.

In step S13, the proportion for learning calculation unit 13 calculates proportions for learning Ra, which are the proportions that hammering data corresponding to the fracture state is included in the respective plurality of classes CL.

In step S14, the model learning unit 14 learns a model that outputs a fracture state of an unknown material of which fracture state is unknown based on the proportions for learning Ra.

<Configuration of testing apparatus>

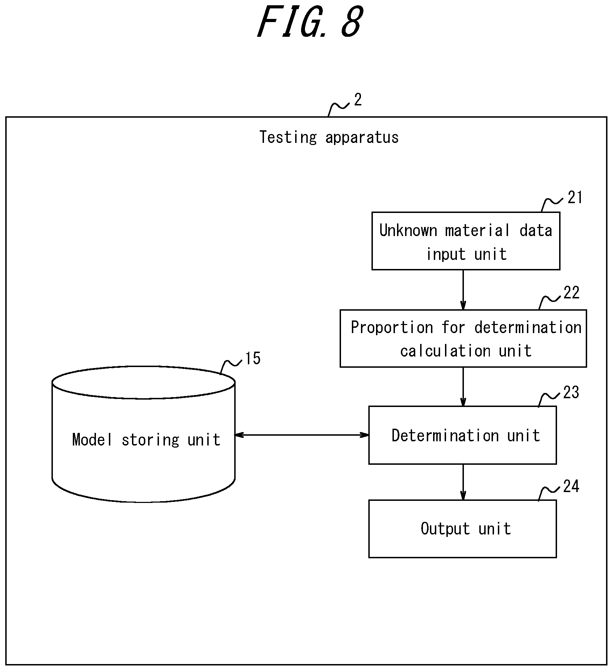

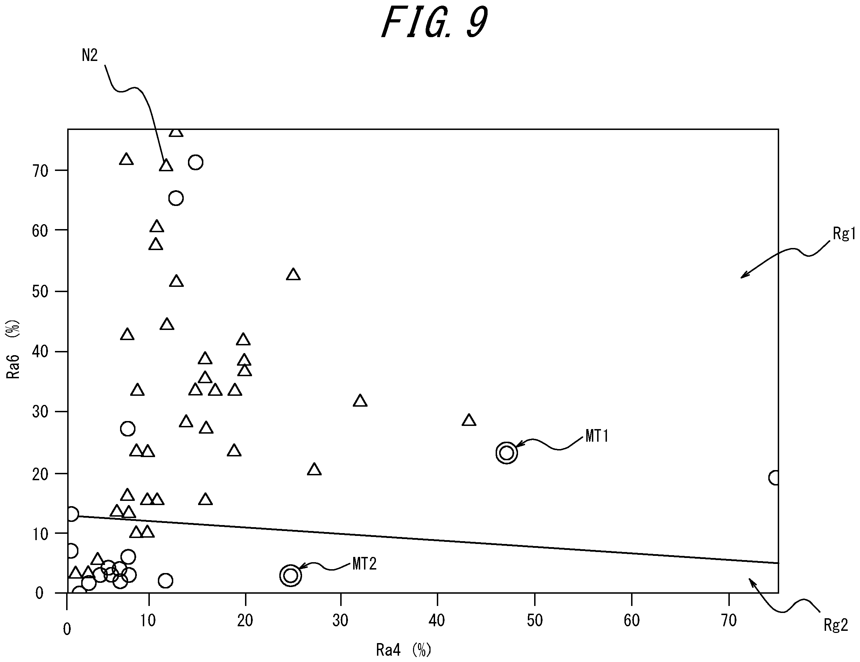

Referring to FIGS. 8 and 9, the configuration of the testing apparatus 2 of the present embodiment will be described. The testing apparatus 2 may be configured to be integrated with the testing model learning apparatus 1 or may be configured as a separate apparatus.

The testing apparatus 2 according to the present embodiment conducts a test using a model, the model being learned with known material data indicating the distribution of hammering sound data including a plurality of characteristic values related to a hammering sound generated when a known material of which fracture state is known is struck and the fracture state of the known material, for outputting a fracture state of an unknown material of which fracture state is unknown, based on the proportions for learning Ra, which are the proportions indicating that the hammering sound data is included in the respective plurality of classes CL in the distribution. The testing apparatus 2 may be configured as a portable apparatus capable of testing a material installed on a product, such as a car, for example. As illustrated in FIG. 8, the testing apparatus 2 includes an unknown material data input unit 21, a proportion for determination calculation unit 22, a determination unit 23, an output unit 24, and a model storing unit 15. The testing apparatus 2 may also include one or more of the known material data input unit 11, the known material data storing unit 12, the proportion for learning calculation unit 13, and the model learning unit 14 of the testing model learning apparatus 1.

The unknown material data input unit 21 may be configured by an input interface. The proportion for determination calculation unit 22 and the determination unit 23 may configure a control unit. The output unit 24 may be configured by an output interface. The output interface is an interface that outputs information and may be, for example, a display. The output interface may be configured as a communication interface for outputting information to other devices.

The model storing unit 15 stores a model obtained by the testing model learning apparatus 1 described above. In other words, the model storing unit 15 provided in the testing apparatus 2 may be the same as the model storing unit 15 provided in the testing model learning apparatus 1. The testing apparatus 2 may receive the model from the testing model learning apparatus 1 via a communication network or may obtain the model from the testing model learning apparatus 1 via any medium. When the testing apparatus 2 is configured to be integrated with the testing model learning apparatus 1, the model storing unit 15 of the testing apparatus 2 may be the model storing unit 15 of the testing model learning apparatus 1.

The unknown material data input unit 21 receives an input of unknown material data indicating the distribution of hammering data indicating a plurality of characteristic values related to a hammering sound generated when an unknown material is struck. The types of the plurality of characteristic values indicated by the hammering data of which input is received by the unknown material data input unit 21 are the same as the types of the plurality of characteristic values indicated by the hammering data of which input is received by the known material data input unit 11. As in the example above, in a configuration where the plurality of characteristic values indicated by the hammering data of which input is received by the known material data input unit 11 are the amplitude and the duration, the plurality of characteristic values indicated by the hammering data of which input is received by the unknown material data input unit 21 are the amplitude and the duration.

The proportion for determination calculation unit 22 calculates proportions for determination Rb, which are the proportions that the hammering data of which distribution is indicated by the unknown material data is included in the respective plurality of classes CL.

The determination unit 23 inputs the proportions for determination Rb to the model and causes the model to output the fracture state of the unknown material based on the proportions for determination Rb. Specifically, the determination unit 23 may cause the fracture state to be output based on a proportion for determination Rb included in one of the plurality of classes CL in the hammering data and a proportion for determination Rb included in another class CL that is different from the one class CL in the hammering data.

FIG. 9 is a diagram in which marks indicating proportions for determination Rb of hammering data of the unknown material is plotted to the distribution of the proportions for learning Ra of hammering data of the known materials illustrated in FIG. 6. In the example in FIG. 9, the model may output "interfacial fracture" as the fracture state of an unknown material of which proportions for determination Rb4 and Rb6 based on the hammering data are included in the range Rg1. In addition, the model may output "not fractured" as the fracture state of unknown materials of which proportions for determination Rb4 and Rb6 based on hammering data are included in the range Rg2.

In the example in FIG. 9, the proportions for determination Rb4 and the proportions for determination Rb6 of one unknown material MT1 are about 48% and about 22%, respectively, and the proportions for determination Rb4 and the proportions for determination Rb6 of another unknown material MT2 are about 25% and about 4%, respectively. In such an example, the proportions for determination Rb4 and Rb6 of the unknown material MT1 fall within the range Rg1 that has been described with reference to FIG. 6, while the proportions for determination Rb4 and Rb6 of the unknown material MT2 fall within the range Rg2 that has been described with reference to FIG. 6. Thus, the model outputs that the fracture state of the unknown material MT1 is "interfacial fracture" and the fracture state of the unknown material MT2 is "not fractured".

In this manner, the determination unit 23 causes the model to output the fracture state for each combination of classes CLi and CLj, based on the proportions for determination Rbi of hammering data included in the class CLi and the proportion for determination Rbj of the hammering data included in the class CLj, in the hammering data of an unknown material.

In addition, the determination unit 23 may determine the fracture state for each combination of the class CLi and the class CLj output by the model as the candidate fracture state, and determine the fracture state based on the importance that has been set in advance for each candidate fracture state corresponding to the combination of the class CLi and the class CLj. As described above, the importance is set by the model learning unit 14 of the testing model learning apparatus 1.

In an example where the number of classes CL is 3, for example, the importances that have been set in advance to the combinations of classes CL1 and CL2, CL2 and CL3, and CL3 and CL1 are 70, 40, and 35, respectively. In such an example, the fracture state "not fractured" is output based on the proportions for determination Rb1 and Rb2 of the classes CL1 and CL2, the fracture state "interfacial fracture" is output based on the proportions for determination Rb2 and Rb3 of the classes CL2 and CL3, and the fracture state "interfacial fracture" is output based on the proportions for determination Rb3 and Rb1 of the classes CL3 and CL1, for example. In this case, the determination unit 23 selects "not fractured" as the candidate fracture state based on the proportions for determination Rb1 and Rb2 of the classes CL1 and CL2, "interfacial fracture" as the candidate fracture state based on the proportions for determination Rb2 and Rb3 of the classes CL2 and CL3, and "interfacial fracture" as the candidate fracture state based on the proportions for determination Rb3 and Rb1 of the classes CL3 and CL1. Here, the determination unit 23 calculates that the importance corresponding to the candidate fracture state "not fractured" is 70, and the importance corresponding to the candidate fracture state "interfacial fracture" is 40 + 35 = 75. Since the importance corresponding to the candidate fracture state "interfacial fracture" is higher than the importance corresponding to the candidate fracture state "not fractured", the determination unit 23 determines that the fracture state is "interfacial fracture".

In addition, the determination unit 23 may also determine whether an unknown material is repairable or not based on the fracture state of the unknown material. The method by which the determination unit 23 determines whether an unknown material is repairable or not may be any method.

As an example, the determination unit 23 may determine whether an unknown material is repairable or not based on the fracture state and the repairability information indicating whether the material is repairable or not, which have been stored in the memory in advance so as to be associated with each other. Specifically, the determination unit 23 may determine that an unknown material is repairable if the repairability information stored associated with the fracture state of the unknown material indicates repairable, and determine that the unknown material is irreparable if the repairability information stored associated with the fracture state of the unknown material indicates irreparable.

As another example, the determination unit 23 may determine whether an unknown material is repairable or not based on the fracture state and a value indicating the degree of fracture, which have been stored in the memory in advance so as to be associated with each other. Specifically, the determination unit 23 may determine that an unknown material is repairable if the value indicating the degree of fracture stored associated with the fracture state is within the specified range, and determine that the unknown material is not repairable if the value indicating the degree of fracture is outside the specified range.

The output unit 24 outputs the data indicating the fracture state of the unknown material, which has been caused to be output from the model by the determination unit 23, to a display or other device. For example, the output unit 24 may output data indicating the fracture state of the unknown material, to a recovery control apparatus 3, which will be described below.

As an example, the output unit 24 may not output data with the fracture state of "not fractured" to the recovery control apparatus 3, but may output, to the recovery control apparatus 3, data which has the fracture state of one of "interfacial fracture", "splitting fiber", and "unimpregnated" and which has been determined to be repairable, of data of which . In such a configuration, unknown materials with the fracture state of "not fractured" may be returned for use as it is, for example. Or, unknown materials with the fracture state of irreparable may be collected.

In the above, an example in which the model outputs whether the fracture state of an unknown material is "not fractured" or "interfacial fracture" has been described. However, in a configuration where the testing model learning apparatus 1 learns the model by further using known materials with fracture states of "splitting fiber" and "unimpregnated", the testing apparatus 2 may cause the model to output "not fractured", "interfacial fracture", "splitting fiber", or "unimpregnated" using the model.

In addition, the unknown material data input unit 21 may also receive an input of a plurality of pieces of unknown material data obtained by striking one unknown material multiple times. In such a configuration, the proportion for determination calculation unit 22 calculates a plurality of proportions for determination Rb based on the plurality of pieces of unknown material data. In addition, the determination unit 23 causes the model to output a plurality of fracture states based on the plurality of proportions for determination Rb. The determination unit 23 may then determine that the fracture state that is the most frequent, among the plurality of fracture states output by the model, is the fracture state of the unknown material.

<Operation of testing apparatus>

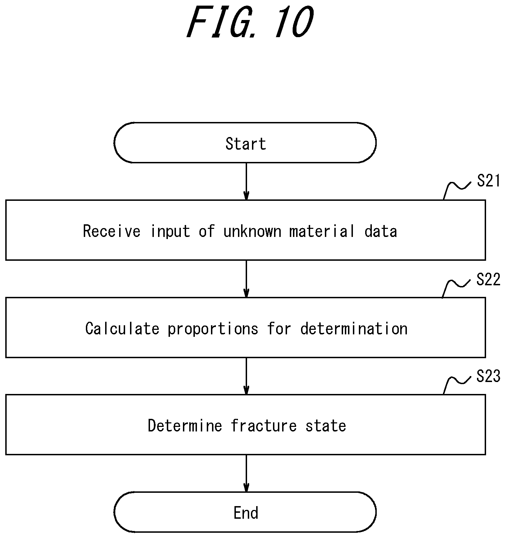

Now, the operation of the testing apparatus 2 according to the present embodiment will be described with reference to FIG. 10. FIG. 10 is a flowchart illustrating one example of the operation of the testing apparatus 2 according to the present embodiment. The operation of the testing apparatus 2 described with reference to FIG. 10 corresponds to one example of a testing method by the testing apparatus 2 according to the present embodiment. Furthermore, this operation is executed by the testing apparatus 2 that conducts a test using a model, the model being learned with known material data indicating a distribution of hammering sound data including a plurality of characteristic values related to a hammering sound generated when a known material of which fracture state is known is struck and the fracture state of the known material, for outputting a fracture state of an unknown material, based on proportions for learning Ra that are proportions indicating that the hammering sound data is included in a respective plurality of classes CL in the distribution. Before the testing apparatus 2 performs the operation, an existing (e.g., used) molded article may be disassembled into parts and a part containing a continuous fiber reinforced thermoplastic may be collected among disassembled parts. In such a case, the testing apparatus 2 performs the operation using the continuous fiber reinforced thermoplastic contained in the collected part as the unknown material.

In step S21, the unknown material data input unit 21 receives an input of unknown material data indicating the distribution of hammering sound data indicating a plurality of characteristic values related to a hammering sound generated when the unknown material is struck.

In step S22, the proportion for determination calculation unit 22 calculates proportions for determination Rb that are proportions that the hammering data of which distribution is indicated by the unknown material data is included in the respective plurality of classes CL.

In step S23, the determination unit 23 inputs the proportions for determination Rb to the model and causes the model to output the fracture state of the unknown material based on the proportions for determination Rb. At that time, the determination unit 23 may specify the fracture state output from the model as a candidate fracture state and determine the fracture state based on the importance of the candidate fracture state. Thereafter, the output unit 42 may output data indicating the fracture state.

<Configuration of recovery control apparatus>

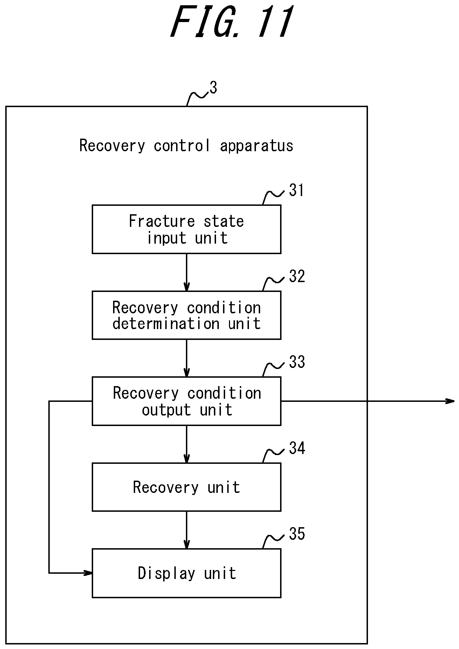

As illustrated in FIG. 11, the recovery control apparatus 3 according to the present embodiment includes a fracture state input unit 31, a recovery condition determination unit 32, and a recovery condition output unit 33. The recovery control apparatus 3 may further include a recovery unit 34. The recovery control apparatus 3 may further include a display unit 35.

The fracture state input unit 31 is configured by an input interface, the recovery condition determination unit 32 is configured by a controller, and the recovery condition output unit 33 is configured by an output interface. Furthermore, the recovery unit 34 is configured by a heater. The recovery unit 34 may also be configured by a heater and one or more of a pressurizer and a water absorption unit. The display unit 35 may be configured by a display interface such as an organic EL (Electro Luminescence) and liquid crystal panel.

The recovery control apparatus 3 may also include one or more of the unknown material data input unit 21, the proportion for determination calculation unit 22, the determination unit 23, the output unit 24, and the model storing unit 15 of the above-mentioned testing apparatus 2. The recovery control apparatus 3 may further include one or more of the known material data input unit 11, the known material data storing unit 12, the proportion for learning calculation unit 13, and the model learning unit 14 of the testing model learning apparatus 1.

The fracture state input unit 31 receives an input of data indicating the fracture state of an unknown material output by the output unit 24 of the testing apparatus 2.

The recovery condition determination unit 32 determines a recovery condition for recovering the interface of the unknown material based on the fracture state. If the unknown material is a composite material containing two or more materials with different chemical structures, the interface is the surface where the materials with the different chemical structures are in contact with each other. In a configuration where the unknown material is a continuous fiber reinforced thermoplastic, the interface is, for example, the interface between the continuous reinforcing fibers and a thermoplastic resin. The recovery condition may include a condition related to a treatment to be applied to the unknown material for recovering the interface of the unknown material, and may be, for example, one or more of a temperature condition for heating the unknown material, a pressure condition, and a water absorption condition. The condition of a recovery step, which will be described below, may also be selected as the recovery condition as appropriate.

The recovery condition output unit 33 may output the recovery condition to the recovery unit 34. The recovery condition output unit 33 may also send a control signal indicating the recovery condition to a recovery apparatus that has the same function as the recovery unit 34. In a configuration where the recovery condition output unit 33 sends a control signal to a recovery apparatus, the recovery control apparatus 3 does not need to include the recovery unit 34. The recovery condition output unit 33 may also output the recovery condition to the display unit 35.

The recovery unit 34 recovers the interface of the unknown material according to the recovery condition calculated by the recovery condition determination unit 32. Specifically, in a configuration where the material is a composite material containing two or more materials having different chemical structures (e.g., a continuous fiber reinforced thermoplastic), the recovery unit 34 recovers the interface of the unknown material by performing the recovery step to be described below. As described above, in the configuration where the recovery condition output unit 33 sends a control signal indicating the recovery condition to a recovery apparatus as described above, the recovery apparatus recovers the interface of the unknown material according to the recovery condition indicated by the control signal.

(Recovery step)

Now, the recovery step performed by the recovery unit 34 will be described in detail. The recovery step of the present embodiment may be a step of heating a continuous fiber reinforced thermoplastic that has been subjected to a load test in a temperature range from the glass transition temperature of a thermoplastic resin included in the continuous fiber reinforced thermoplastic or higher, to the glass transition temperature of the thermoplastic resin + 150 °C or lower or lower than the melting point of the thermoplastic resin. This allows for the repair of voids at the interface between the continuous reinforcing fibers and the thermoplastic resin to progress.

In the present embodiment, it is preferable to heat the continuous fiber reinforced thermoplastic that has been subjected to a load test within a temperature range of the glass transition temperature of the thermoplastic resin included in the continuous fiber reinforced thermoplastic or higher and lower than the melting point of the thermoplastic resin. It is more preferable that the heating temperature range for heating the continuous fiber reinforced thermoplastic that has been subjected to a load test is from the glass transition temperature of the thermoplastic resin + 100 °C to the melting point of the thermoplastic resin - 50 °C, it is even more preferable that the heating temperature range is from the glass transition temperature of the thermoplastic resin + 50 °C to the melting point of the thermoplastic resin - 30 °C, and it is still even more preferable that the heating temperature range is from the glass transition temperature of the thermoplastic resin + 30 °C to the melting point of the thermoplastic resin - 20 °C. Here, the glass transition temperature refers to the temperature determined when the dry thermoplastic resin is subjected to a measurement by DSC. When the heating temperature in the recovery step is within the above range, the recovery ratio of the continuous fiber reinforced thermoplastic increases and the shape of the composite material is more likely to be maintained before and after the recovery step.

In addition, when two or more thermoplastic resins are included in the continuous fiber reinforced thermoplastic, it is preferable to heat the material at a temperature equal to or higher than the highest glass transition temperature of the two or more glass transition temperatures of the thermoplastic resins in the recovery step.

In the present embodiment, the time for heating in the temperature range from the glass transition temperature of the thermoplastic resin or higher, to the glass transition temperature of the thermoplastic resin + 150 °C or lower or lower than the melting point of the thermoplastic resin is not particularly limited, and is preferably 15 minutes or longer, for example. The upper limit of the heating time may be preferably 10 hours or shorter, more preferably 2 hours or shorter, and even more preferably 1 hour or shorter.

The recovery step of the present embodiment may be a step of heating the continuous fiber reinforced thermoplastic that has been subjected to a load test in the specified temperature range, as described above. The heating atmosphere for heating (or the atmosphere of the recovery step) is preferably at least one condition selected from the group consisting of an unpressurized (atmospheric pressure) condition, a pressurized condition, and a water absorption condition.

The preferred form of the recovery step of the present embodiment is to perform the recovery step under at least one condition selected from the group consisting of an unpressurized (atmospheric pressure) condition, a pressurized condition, and a water absorption condition.

In the present embodiment, the unpressurized (atmospheric pressure) condition means a condition of 0.1 MPa or less, and the pressurized condition means a condition of more than 0.1 MPa and 25 MPa or less. In addition, the water absorption condition means a condition where the water absorption ratio of the continuous fiber reinforced thermoplastic of the present embodiment is at least 0.3% or more, and it is preferable that the water absorption ratio is 0.3% or more and 2% or less. An example of the water absorption treatment where the water absorption ratio of the continuous fiber reinforced thermoplastic is controlled within the above range includes allowing the continuous fiber reinforced thermoplastic that has been subjected to a load test to absorb water for 18 hours in water at 80 °C. The water absorption treatment may be performed by the water absorption unit that composes the recovery unit 34 described above.

Note that the water absorption ratio (%) is calculated by the following formula.

Water absorption ratio (%) = (mass of continuous fiber reinforced thermoplastic after water absorption treatment - mass of continuous fiber reinforced thermoplastic before water absorption treatment) / mass of continuous fiber reinforced thermoplastic before water absorption treatment $\times$ 100

Heating in the recovery step of the present embodiment may be performed under pressurization. In the case where the recovery step in the formula (1) representing the recovery ratio in the present embodiment is performed on the continuous fiber reinforced thermoplastic after a load test under pressurization (for example, at 20 MPa), it is preferable to heat the continuous fiber reinforced thermoplastic for 15 minutes or longer in a temperature range equal to or higher than the glass transition temperature of the thermoplastic resin included in the continuous fiber reinforced thermoplastic and equal to or lower than the glass transition temperature + 100 °C.

There are no limitations on the method of pressurization described above. Examples include pressurization using a continuous compression molding machine or press machine, pressurization using an autoclave, and pressurization in a mold with a foaming material.

Heating in the recovery step of the present embodiment may be performed without pressurization, or it may be performed under a pressure lower than atmospheric pressure (e.g., 0.1 MPa or lower). An example of a pressure condition lower than atmospheric pressure (e.g., 0.1 MPa or lower) includes, for example, a method by performing in a vacuum dryer.

If the recovery step of the present embodiment is performed on the continuous fiber reinforced thermoplastic after a load test without pressurization (for example, under atmospheric pressure), the recovery step in the formula (1) representing the recovery ratio in the present embodiment includes heating for 15 minutes or longer in a temperature range equal to or higher than the glass transition temperature of the thermoplastic resin included in the continuous fiber reinforced thermoplastic and lower than the glass transition temperature of the thermoplastic resin + 100 °C. This allows for the repair of voids at the interface between the continuous reinforcing fibers and the thermoplastic resin to further progress.

The recovery step in the present embodiment may include a cooling step. Examples of the cooling step include the method of performing cooling at room temperature when the recovery step is performed under tunpressurized condition, or cooling the mold, etc. with cooling water when the recovery step is performed under a pressurized condition.

The heating in the recovery step of the present embodiment may be performed under the condition that the continuous fiber reinforced thermoplastic has absorbed water. The water absorption ratio of the continuous fiber reinforced thermoplastic is preferably 0.3% or more.

In the present embodiment, heating the continuous fiber reinforced thermoplastic that has been subjected to a load test under the condition that water has been absorbed is performed preferably at the glass transition temperature of the thermoplastic resin included in the continuous fiber reinforced thermoplastic + 50 °C or lower, and more preferably at the glass transition temperature of the thermoplastic resin + 30 °C or lower. The heating step in the present embodiment is not limited, but may be performed in water or in a humidified environment.

A preferred recovery step of the present embodiment is to heat the continuous fiber reinforced thermoplastic which has been subjected to a load test for 15 to 60 minutes at a humidity of 0 to 100% RH, under a pressure of 0.5 to 10 Mpa, and at a temperature of 80 to 265 °C using a heating means (e.g., a heater).

The heating means used for the recovery step in the present embodiment is not limited, as long as the heating means can produce a heating temperature of 80 to 265 °C. Examples include thermostatic baths, molding machines, hot-air circulating dryers, thermostatic humidity chambers, or vacuum dryers.

One mode of the recovery step is to heat the continuous fiber reinforced thermoplastic after a load test for 15 to 30 minutes in the temperature range of 180 to 260 °C without pressurization (under a pressure of 0.1 MPa or less). Heating is performed under an inert gas atmosphere, preferably a nitrogen or argon atmosphere.

Another mode of the recovery step is to heat the continuous fiber reinforced thermoplastic after a load test under pressurization (under a pressure of 0.5 to 5 MPa) in the atmosphere in the temperature range of 80 to 150 °C at a humidity of 90 to 100% RH for 30 to 60 minutes. The continuous fiber reinforced thermoplastic may be pressurized by the pressurizer composing the recovery unit 34 described above.

-Recovery ratio of the long-term property-

The recovery ratio of the long-term property against a load is one indicator indicating recovery of a fatigue property of the continuous fiber reinforced thermoplastic of the present embodiment. It can be evaluated as follows. A vibration fatigue test is repeated on the continuous fiber reinforced thermoplastic at an arbitrary strength until the test count is reached an arbitrary count. After the continuous fiber reinforced thermoplastic is subjected to the recovery step, the vibration fatigue test is repeated under the same conditions. The recovery ratio of the long-term property is evaluated from a value obtained by dividing the number of fractures after the recovery step by the number of fractures of the new continuous fiber reinforced resin under the same conditions.

The recovery ratio of the long-term property (%) of the present embodiment is expressed by the formula as described in the Examples section below, and the recovery ratio of the long-term property (%) of the continuous fiber reinforced thermoplastic of the present embodiment is preferably 65% or more, and more preferably 80% or more.

-Recovery ratio of the bending strength-

The recovery ratio of the bending strength is one indicator indicating recovery of a fatigue property of the continuous fiber reinforced thermoplastic of the present embodiment. It can be evaluated as follows. A bending test, which is one example of a load test, is conducted. After the continuous fiber reinforced thermoplastic is subjected to the recovery step, the bending test is conducted again in the same manner. The recovery ratio of the bending strength is evaluated from a value obtained by dividing the bending strength (MPa) obtained from the second bending test by the bending strength (MPa) of the continuous fiber reinforced resin obtained from the first bending test.

The recovery ratio of the bending strength (%) of the present embodiment is expressed by the formula as described in the Examples section below, and the recovery ratio of the bending strength (%) of the continuous fiber reinforced thermoplastic of the present embodiment is preferably 65% or more, and more preferably 80% or more.

-Recovery ratio of the bending elastic modulus-

The recovery ratio of the bending elastic modulus is one indicator indicating recovery of a fatigue property of the continuous fiber reinforced thermoplastic of the present embodiment. It can be evaluated as follows. A bending test, which is one example of a load test, is conducted. After the continuous fiber reinforced thermoplastic is subjected to the recovery step, the bending test is conducted in the same manner. The recovery ratio of the bending elastic modulus is evaluated from a value obtained by dividing the bending elastic modulus (GPa) obtained from the second bending test by the bending elastic modulus (GPa) of the continuous fiber reinforced resin obtained from the first bending test.

The recovery ratio of the bending elastic modulus (%) of the present embodiment is expressed by the formula as described in the Examples section below, and the recovery ratio of the bending elastic modulus (%) of the continuous fiber reinforced thermoplastic of the present embodiment is preferably 65% or more, and more preferably 80% or more.

The display unit 35 displays the recovery conditions. In such a configuration, the operator may check the recovery conditions and make various settings to recover the interface of an unknown material according to the recovery conditions.

<Operation of recovery apparatus>

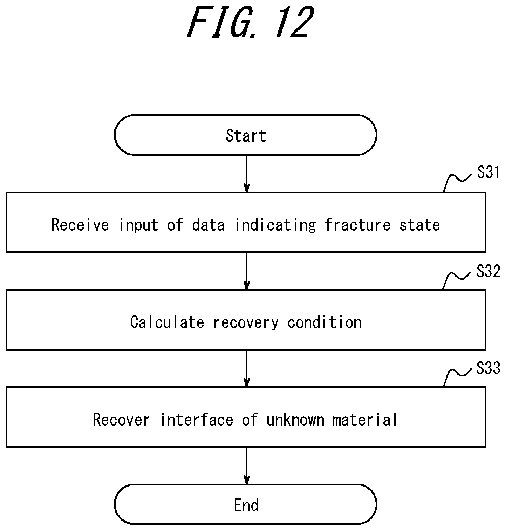

Now, the operation of the recovery control apparatus 3 according to the present embodiment will be described with reference to FIG. 12. FIG. 12 is a flowchart illustrating the operation of the recovery control apparatus 3 according to the present embodiment. The operation in the recovery control apparatus 3 described with reference to FIG. 12 corresponds to one example of the recovery method of the recovery control apparatus 3 according to the present embodiment.

In step S31, the fracture state input unit 31 receives an input of data indicating the fracture state of an unknown material output by the output unit 24 of the testing apparatus 2.

In step S32, the recovery conditions for recovering the interface of the unknown material are determined based on the fracture state.

In step S33, the interface of the unknown material is recovered using the recovery conditions. At this time, the recovery control unit 3 having the recovery unit 34 or a recovery apparatus may accommodate the unknown material and recover the interface of the accommodated unknown material. In such a configuration, after the interface of the unknown material is recovered, the unknown material is removed from the recovery control unit 3 or the recovery apparatus. Furthermore, the unknown material with the recovered interface may be collected and used to mold into a part.

As described above, according to the present embodiment, the testing model learning apparatus 1 includes the known material data input unit 11 that receives an input of known material data indicating a distribution of hammering sound data including a plurality of characteristic values related to a hammering sound generated when a known material of which fracture state is known is struck and the fracture state of the known materials; the learning rate calculation unit 13 that determines, based on the hammering data, a plurality of classes CL in the distribution and calculates proportions for learning Ra that are proportions that the hammering data is included in the respective plurality of classes CL; and the model learning unit 14 that learns a model that outputs a fracture state of an unknown material based on the proportions for learning Ra. Furthermore, according to the present embodiment, the testing apparatus 2 includes the unknown material data input unit 21 which receives an input of unknown material data indicating the distribution of hammering data including a plurality of characteristic values related to a hammering sound generated when an unknown material of which fracture state is unknown is struck; the proportion for determination calculation unit 22 that calculates proportions for determination Rb that are proportions that the hammering data of which distribution is indicated by the unknown material data is included in the respective plurality of classes CL; and the determination unit that inputs the proportions for determination Rb into the model and causes the model to output the fracture state of the unknown material based on the proportions for determination Rb. This allows the testing model learning apparatus 1 and the testing apparatus 2 to test the fracture state of a produced unknown material with high accuracy.

Furthermore, according to the present embodiment, the plurality of characteristic values are the amplitude and the duration. This allows the fracture state of the produced unknown material to be tested with even higher accuracy.

In addition, according to the present embodiment, the testing apparatus 2 causes the model to output a fracture state based on the proportions for determination Rb included in one of the plurality of classes CL and the proportion for determination Rb included in another class CL that is different from the one class in the hammering sound data. This allows the testing apparatus 2 to test the fracture state of the produced unknown material with higher accuracy than apparatuses that output the fracture state based on the distribution of hammering data without determining classes CL.

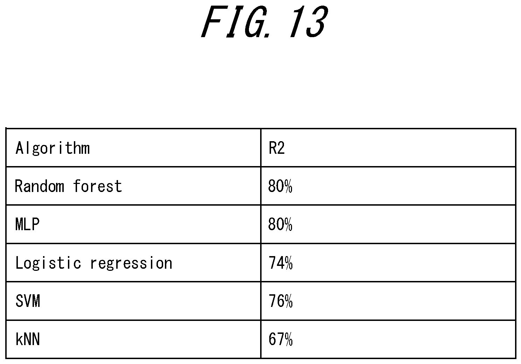

Furthermore, according to the present embodiment, when the testing apparatus 2 performed a test using models learned by the testing model learning apparatus 1 using the Random forest, MLP, Logistic regression, SVM, and kNN algorithms, the coefficients of determination R2 indicating the evaluation accuracies of the models were 80%, 80%, 74%, 76%, and 67%, respectively, as illustrated in FIG. 13. In this manner, the testing model learning apparatus 1 can test the fracture state of a produced unknown material with higher accuracy by learning a model using the Random forest or MLP algorithm.

In addition, according to the present embodiment, a material can be tested prior to shipment of a product, allowing a more appropriate decision to be made as to whether or not the product can be shipped.

<Continuous fiber reinforced thermoplastic>

As described above, a material that can be measured by the testing method described above is, for example, a continuous fiber reinforced thermoplastic containing continuous reinforcing fibers and a thermoplastic resin. The following is a detailed description of a continuous fiber reinforced thermoplastic that can be tested by the testing method described above.

The continuous fiber reinforced thermoplastic of the present embodiment (hereinafter simply referred to as "composite material") contains continuous reinforcing fibers and a thermoplastic resin, and has a recovery ratio of 50% or more expressed by the following formula (1).

$$\text{Recovery ratio} = (B/A) \times 100 \qquad\qquad \text{Formula (1)}$$

(In the above Formula (1), A represents, when scanning electron microscope images (at a magnification ratio from 4000 to 4500) of a test specimen (a) cut out from the continuous fiber reinforced thermoplastic are obtained at 20 arbitrary-selected points so that substantially circular cross-sections of continuous reinforcing fibers are included in the images, the number of continuous reinforcing fibers without voids at the interface between the continuous reinforcing fibers and the thermoplastic resin among continuous reinforcing fibers present in the images; and

B represents, when the continuous fiber reinforced thermoplastic is subjected to a load test and is then subjected to the recovery step after the load test, and scanning electron microscope images (at a magnification ratio from 4000 to 4500) of a test specimen (b) cut out from the continuous fiber reinforced thermoplastic after recovery are obtained at 20 arbitrary-selected points so that substantially circular cross-sections of continuous reinforcing fibers are included in the images, the number of continuous reinforcing fibers without voids at the interface between the continuous reinforcing fibers and the thermoplastic resin among continuous reinforcing fibers present in the images.)

When the recovery ratio is within the above range, the damage incurred at the interface between the continuous fibers and the thermoplastic resin and a fatigue property or physical property of the continuous fiber reinforced thermoplastic that has been degraded due to that damage can be easily recovered.

The recovery ratio in the present embodiment is preferably 60% or more, more preferably 70% or more, even more preferably 70 to 100%, and further preferably 80 to 100%.

<Recovery ratio>

The recovery ratio in the present embodiment is one of the characteristics of the continuous fiber reinforced thermoplastic of the present embodiment, and is an indicator indicating the extent to which the interfacial state between the continuous reinforcing fibers and the thermoplastic resin, which constitute the continuous fiber reinforced thermoplastic, is restored compared to that of the continuous fiber reinforced thermoplastic before the specific load test, when the specific load test and the specified recovery step are performed. Hence, when the recovery ratio is within the above range, the damage at the interface between the continuous fibers and the thermoplastic resin and a fatigue property or physical property of the continuous fiber reinforced thermoplastic that has been degraded due to such damage can be easily recovered. This allows for repeated use of members or the like made from the continuous fiber reinforced thermoplastic, and also improves the handleability of the composite material at high temperatures.

More specifically, the recovery ratio in the present embodiment refers to a characteristic representing, when the continuous fiber reinforced thermoplastic containing continuous reinforcing fibers and the thermoplastic resin is subjected to a specific load test to obtain a continuous fiber reinforced thermoplastic subjected to the specific load test (also referred to as the continuous fiber reinforced thermoplastic after the load test), the continuous fiber reinforced thermoplastic after the load test is then subjected to a specified recovery step to obtain a continuous fiber reinforced thermoplastic (also referred to as the continuous fiber reinforced thermoplastic after the recovery step), a test specimen is sampled from at least a portion of the continuous fiber reinforced thermoplastic after the recovery step, and the test specimen is observed under an electron microscope, the ratio of repair of voids at the interface between continuous reinforcing fibers and the thermoplastic resin in the continuous fiber reinforced thermoplastic after the recovery step. Note that the continuous fiber reinforced thermoplastic that has been subjected to a load test and the recovery step after the load test is also referred to as the continuous fiber reinforced thermoplastic after recovery.

In the above formula (1), A represents, when scanning electron microscope images (at a magnification ratio of 4000 to 4500, for example, 4000) of a test specimen (a) cut out from the continuous fiber reinforced thermoplastic are obtained at 20 arbitrary-selected points so that a substantially circular cross-section of one continuous reinforcing fiber is included in each image, the number of continuous reinforcing fibers without voids at the interface between the continuous reinforcing fibers and the thermoplastic resin in the continuous fiber reinforced thermoplastic among the 20 continuous reinforcing fibers.

Similarly, in the above formula (1), B represents, when the continuous fiber reinforced thermoplastic is subjected to a load test and the recovery step after the load test, and scanning electron microscope images (at a magnification ratio of 4000 to 4500, for example, 4000) of a test specimen (b) cut out from the continuous fiber reinforced thermoplastic after recovery are obtained at 20 arbitrary-selected points so that one continuous reinforcing fiber is included in each image, the number of continuous reinforcing fibers without voids at the interface between the continuous reinforcing fibers and the thermoplastic resin among the 20 continuous reinforcing fibers.

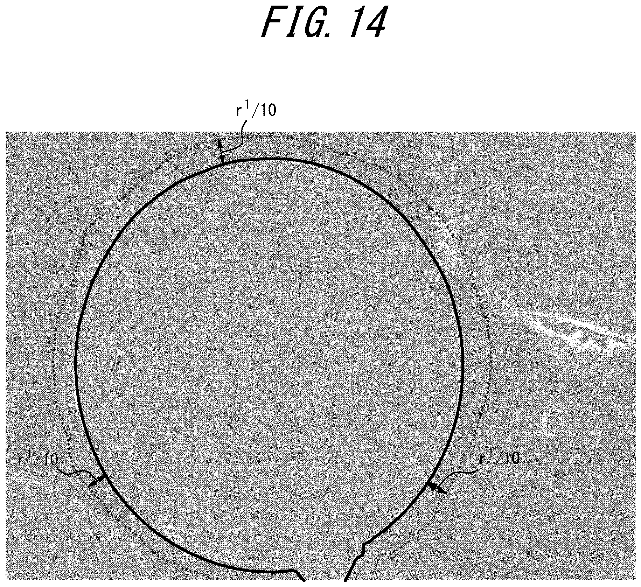

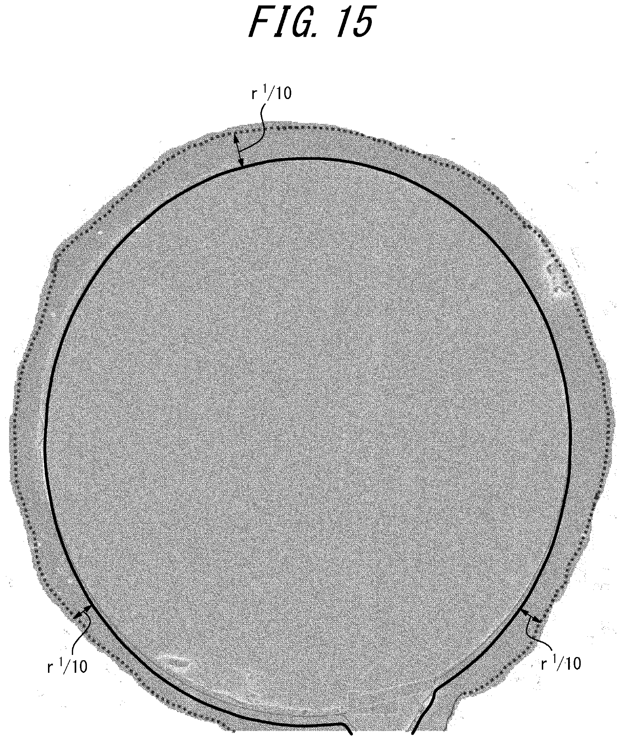

Further, in this specification, the determination as to whether there is any void or not between the continuous reinforcing fibers and the thermoplastic resin is made as follows. If the porosity in the outer circumferential region in the thermoplastic resin, which is outwardly distant from the interface between the continuous reinforcing fibers and the thermoplastic resin by one-tenth (1/10) the radius (r1), is 10% or less, it is determined that there is no void between (a single) continuous reinforcing fiber and the thermoplastic resin. Details are described with reference to FIGS. 14 and 15.

FIG. 14 is a schematic diagram illustrating how determination as to whether there is any void or not between a continuous reinforcing fiber and the thermoplastic resin is made based on a scanning electron microscope image (at a magnification ratio of 4000) of a test specimen (b) cut out from a continuous fiber reinforced thermoplastic after the recovery step. In the image illustrated in FIG. 14, three substantially circular cross-sections of continuous reinforcing fibers are depicted, with the interface between the continuous reinforcing fiber and the thermoplastic resin in the center of FIG. 14 drawn with the solid line. Furthermore, in FIG. 14, a similarity shape diagram of the shape of the interface, i.e., the solid line shape, between the continuous reinforcing fiber and the thermoplastic resin at points outwardly distant from the interface between the continuous reinforcing fiber and the thermoplastic resin by one-tenth the cross-sectional radius (r1) of the single continuous reinforcing fiber in the center is drawn with the dotted line along the solid line shape. FIG. 15 is a schematic diagram of a cutout of the region between the dotted line drawing the similarity shape diagram of the shape of the interface between the continuous reinforcing fiber and the thermoplastic resin and the solid line drawing the shape of the interface between the continuous reinforcing fiber and the thermoplastic resin.

The region between the dotted line and the solid line (the cut-out area illustrated in FIG. 15) is defined as the outer circumferential region, and it is determined that there is no void between the (single) continuous reinforcing fiber and the thermoplastic resin if the porosity within this outer circumferential region is 10% or less. In FIGS. 14 and 15, the white regions are the void regions. If the cross sections of continuous reinforcing fibers are shown in white, for example, void regions may be shown in black. Hence, the later-described counting of the number of continuous reinforcing fibers without voids at the interface between the continuous reinforcing fibers and the thermoplastic resin is described with reference to an example where the void regions are white regions.

Thus, in the present embodiment, the number of continuous reinforcing fibers without voids at the interface between the continuous reinforcing fibers and the thermoplastic resin is counted in the following procedures (I) to (III).

(I) A scanning electron microscope image of the test specimen (a) or test specimen (b) is binarized using image analysis software (Imaged developed by the National Institutes of Health in the United States). A substantially circular cross-section of a single continuous reinforcing fiber in the image is drawn in a solid line. Then, a similarity shape diagram of the shape in the solid line (the interface between the continuous reinforcing fiber and the thermoplastic resin) at points outwardly distant from the solid line by one-tenth the cross-sectional radius (r1) of the single continuous reinforcing fiber is drawn in a dotted line along the shape of the solid line.

(II) The region obtained by extracting the solid line portion (cross-sectional view of the single continuous reinforcing fiber) from the similarity shape diagram is defined as the outer circumferential region. The total area of the white portions showing voids within this outer circumferential region is calculated. When the porosity represented by the following formula (x) is 10% or less, it is determined that there is no void.

$$\text{Total area of white region / total area of outer circumferential region} \times 100 \qquad (x)$$

(III) the procedures described in (I) and (II) are conducted on scanning electron microscope images of the test specimen (a) or test specimen (b) captured at 20 arbitrary-selected points. Then, the number of continuous reinforcing fibers surrounded by the outer circumferential region with a porosity of 10% or less is counted to determine A and B.

Note that the cross-sectional radius (r1) of the continuous reinforcing fiber mentioned above refers to the radius of one substantially circular cross-section of a continuous reinforcing fiber drawn in a solid line in a scanning electron microscope image. This radius (r1) is calculated for each of the above-described 20 arbitrary-selected points. Furthermore, the cross-sectional radius (r1) of one continuous reinforcing fiber is calculated by determining the circumference length of a substantially circular cross-section of the continuous reinforcing fiber drawn in a solid line (i.e., the circumference of the cross-section of the substantially circular continuous reinforcing fiber) using the above image analysis software, and dividing the circumference length by $2\pi$.

Note that the recovery ratio of the continuous fiber reinforced thermoplastic of the present disclosure is determined as follows. The continuous fiber reinforced thermoplastic is subjected to a load test (e.g., vibration fatigue test, bending test, or impact test) and then subjected to a specified recovery step. A test specimen (b) is prepared by cutting it with a band saw, and the cross-section perpendicular to the length direction of the continuous reinforcing fibers is polished by using a polishing machine. Subsequently, the polished surface is observed under a field emission scanning electron microscope (FESEM) to count the number B of continuous reinforcing fibers without voids at the interfacial region between one continuous reinforcing fiber and the thermoplastic resin. A cut and polished test specimen (a) of the continuous fiber reinforced thermoplastic prior to the load test is prepared by the same method as described above. The number A of continuous reinforcing fibers without voids at the interfacial region between one continuous fiber and the thermoplastic resin in the observed test specimen (a) is determined. The recovery ratio (%) can then be obtained by dividing B by A and multiplying by 100.

One example of preparing the test specimen (a) in the present embodiment involves as follows. A test specimen of 10 mm × 10 mm is cut out from an arbitrary part of the continuous fiber reinforced thermoplastic using a band saw. Subsequently, the test specimen is polished by a polishing machine under a polishing pressure of 416 g/cm$^2$ using water-resistant polishing paper No. #2000 for 10 minutes, a silicon carbide film with a particle size of 9 $\mu$m for 5 minutes, an alumina film with a particle size of 5 $\mu$m for 5 minutes, an alumina film with a particle size of 3 $\mu$m for 5 minutes, an alumina film with a particle size of 1 $\mu$m for 5 minutes, and colloidal silica (BAIKALOX 0.1 CR) with a particle size of 0.1 $\mu$m using buffing abrasive paper foam polyurethane for 5 minutes, in this sequence. In the process, water is added at about 7 mL/min while polishing.

On the other hand, one example of the method for preparing the test specimen (b) in the present embodiment is as follows. (1) After the continuous fiber reinforced thermoplastic is subjected to the load test and recovery step mentioned above, the continuous fiber reinforced thermoplastic is cut out using a band saw, or (2) after the continuous fiber reinforced thermoplastic is cut out using a band saw, the load test and recovery step mentioned above are performed, followed by the following polishing step. In the polishing step, polishing is carried out by a polishing machine under a polishing pressure of 416 g/cm$^2$ using water-resistant polishing paper No. #2000 for 10 minutes, a silicon carbide film with a particle size of 9 $\mu$m for 5 minutes, an alumina film with a particle size of 5 $\mu$m for 5 minutes, an alumina film with a particle size of 3 $\mu$m for 5 minutes, an alumina film with a particle size of 1 $\mu$m for 5 minutes, and colloidal silica (BAIKALOX 0.1CR) with a particle size of 0.1 $\mu$m using buffing abrasive paper foam polyurethane for 5 minutes, in this sequence. In the process, water is added at about 7 mL/min while polishing.

<Load test>

A load test in the present embodiment refers to a test that applies mechanical energy to at least a portion of a test specimen (a) of the continuous fiber reinforced thermoplastic to examine the physical property of the continuous fiber reinforced thermoplastic and the microstructure (interfacial state between continuous reinforcing fibers and the thermoplastic resin) of the continuous fiber reinforced thermoplastic. Examples thereof include a vibration fatigue test, a bending test, and an impact test.

Accordingly, a load test in the present embodiment may be at least one test selected from the group consisting of a vibration fatigue test, a bending test, and an impact test.

The vibration fatigue test is performed under the conditions described in the Examples section below. Specific conditions applicable to a vibration fatigue test in the present embodiment include cutting a test specimen for a vibration fatigue test from a produced continuous fiber reinforced thermoplastic in accordance with ASTM-D1822 standard, and testing the test specimen using a servo strength tester at a test temperature of 20 to 30 °C (in the examples described later, 23 °C), a frequency of 10 to 30 Hz (in the examples described later, 20 Hz), a waveform of sine wave, a chuck interval of 20 to 40 mm (in the examples described later, 35 mm).

A bending test of the present embodiment is performed under the conditions described in the Examples section below. Specific conditions applicable to a bending test in the present embodiment include cutting a strip-shaped test specimen for a bending test with a length of 70 mm to 150 mm (in the examples described later, 100 mm), a width of 5 mm to 15 mm (in the examples described later, 10 mm), and a thickness of 1 mm to 3 mm (in the examples described later, 2 mm) from a produced continuous fiber reinforced thermoplastic, drying the test specimen in a vacuum dryer at 65 to 95 °C (in the examples described later, 80 °C) for 10 hours or longer (in the examples, 18 hours or longer), and testing the test specimen using a universal material tester with a three-point bending jig, with a span interval of thickness $\times$ 10 mm or more (in the examples, thickness $\times$ 16 mm), at a speed of 0.5 to 2 mm/min (in the examples, 1 mm/min), in an environment of 20 to 30 °C (in the examples, 23 °C) and 20 to 70% RH (in the examples, 50% RH), and an environment of 100 °C and 50% RH.

An impact test of the present embodiment is performed under the conditions described in the Examples section below.

Specific conditions applicable to an impact test in the present embodiment include cutting a test specimen for an impact test with a length of 100 mm to 250 mm (in the examples described later, 150 mm), a width of 70 mm to 150 mm (in the examples described later, 100 mm), and a thickness of 1 mm to 3 mm (in the examples described later, 2 mm) from a produced continuous fiber reinforced thermoplastic, fixing the test specimen for an impact test onto a stainless steel jig with a hole with a diameter of 15 mm to 45 mm (in the examples described later, 30 mm). A steel-made striker with a hemispherical tip (with a diameter of 10 mm to 24 mm, in the examples described later, 16 mm) is allowed to free-fall onto the center of the test specimen for an impact test and to collide with the test specimen.

<Recovery characteristic of physical property of continuous fiber reinforced thermoplastic>

A recovery characteristic of a physical property of the continuous fiber reinforced thermoplastic of the present embodiment can be evaluated as follows. A physical property test such as a bending or tensile test, for example, is conducted. After the continuous fiber reinforced thermoplastic undergoes fracture, it is subjected to a recovery step, followed by conducting the same physical property test under similar conditions. The obtained strength or modulus is divided by the strength or modulus obtained from the physical property test of the new continuous fiber reinforced resin under the same conditions.

In other words, in one cycle consisting of one load test followed by one recovery step, the continuous fiber reinforced thermoplastic of the present embodiment can recover the initial physical property of the continuous fiber reinforced thermoplastic even after undergoing multiple, i.e., two or more, cycles of the load test and recovery step. For example, the recovery ratio of the long-term property, the recovery ratio of the bending strength, and the recovery ratio of the bending elastic modulus described above all represent the recovery characteristics of the physical properties of the continuous fiber reinforced thermoplastic by calculating the ratio of the physical properties after the two load tests to the physical properties after the first load test. Furthermore, to achieve the characteristic of being recoverable to (almost) the initial physical property of the continuous fiber reinforced thermoplastic even after conducting multiple cycles of a load test and the recovery step, it is preferable that the recovery step includes a step of heating the continuous fiber reinforced thermoplastic that has been subjected to the load test to a temperature equal to or greater than the glass transition temperature of the thermoplastic resin contained in the continuous fiber reinforced thermoplastic + 150 °C for 15 minutes or longer, that a polyamide resin is selected as the thermoplastic resin and a glass fiber substrate is selected as the continuous reinforcing fibers, and that 1 to 10 layers (preferably 6 layers) of polyamide resin and 1 to 9 layers (preferably 5 layers) of glass fiber substrate are stacked, with the layers of polyamide resin and the layers of glass fiber substrate stacked alternately.

<Handleability under high temperature environment>

The handleability of the continuous fiber reinforced thermoplastic of the present embodiment in a high-temperature environment can be evaluated based on the thickness change of the continuous fiber reinforced thermoplastic when it is heated to the melting temperature (the melting point or glass transition temperature in cases where there is no melting point) of the thermoplastic resin contained in the continuous fiber reinforced thermoplastic. More specifically, the handleability in a high temperature environment can be evaluated by the method described in Examples. Good handleability of the continuous fiber reinforced thermoplastic in a high-temperature environment can minimize the degradation in appearance or physical properties due to molding of the continuous fiber reinforced thermoplastic.

In this specification, the thickness change and the retainability of the shape of the continuous fiber reinforced thermoplastic during heating, as described in the following examples, are measured as indicators of the handleability of the continuous fiber reinforced thermoplastic at high temperatures. The reason is as follows. Since a continuous fiber reinforced thermoplastic is typically produced under pressurization, residual stress remains in the continuous fiber reinforced thermoplastic per se. Hence, when the continuous fiber reinforced thermoplastic is heated, the residual stress is released, causing the resin component within the continuous fiber reinforced thermoplastic to expand, resulting in deformation. This makes it difficult to handle the continuous fiber reinforced thermoplastic. Indeed, a smaller thickness change of the continuous fiber reinforced thermoplastic during heating tends to indicate better handleability at high temperatures.

(Preferred form of continuous fiber reinforced thermoplastic)

The fiber reinforced thermoplastic of the present embodiment includes continuous reinforcing fibers, a thermoplastic resin, and a bundling agent (1) containing a coupling agent, and is obtained by stacking the continuous reinforcing fibers and the thermoplastic resin,
wherein the interfacial polishing strength is preferably 0.8 to 1.2 times that of a reference composite material as measured by (i) to (ii) below:

(i) the reference composite material is prepared by stacking continuous reinforcing fibers and the thermoplastic resin, where the continuous reinforcing fibers are surface-treated only with the same coupling agent as the coupling agent in the bundling agent (1) in the same amount as the above-described coupling agent; and
(ii) the interfacial polishing strength of the reference composite material is measured.

When the interfacial polishing strength of the continuous fiber reinforced thermoplastic according to the present embodiment is 0.8 to 1.2 times the interfacial polishing strength of the reference composite material, the adhesion between the continuous reinforcing fibers and the thermoplastic resin becomes excellent. As a result, it becomes easier to control the recovery ratio in the range of 50% to 100% when subjected to the specified load test and specified recovery step of the present embodiment.

The method for producing the reference continuous reinforcing fibers involves preparing an aqueous solution containing the bundling agent (1) including the coupling agent, and surface-treating the continuous reinforcing fibers by immersing them in the aqueous solution containing the bundling agent (1) (at 50 to 90 °C) for 1 to 30 minutes, preferably for 1 to 10 minutes. In this specification, a solution of a mixture of 0.5 mass% of $\gamma$-aminopropyl triethoxysilane and 95.5 mass% of pure water is used as the aqueous solution containing the bundling agent (1).

(Another preferred form of continuous fiber reinforced thermoplastic)

The fiber reinforced thermoplastic of the present embodiment is a fiber reinforced thermoplastic obtained by stacking continuous reinforcing fibers surface-treated with a bundling agent (1) and a thermoplastic resin,
wherein the interfacial polishing strength of the continuous fiber reinforced thermoplastic is preferably twice or more the interfacial polishing strength of a continuous fiber reinforced thermoplastic that has not undergone surface treatment with the bundling agent (1) (or from which the surface treatment with the bundling agent (1) has been removed).

In other words, the continuous fiber reinforced thermoplastic of the present embodiment is a continuous fiber reinforced thermoplastic including continuous reinforcing fibers, a thermoplastic resin, and a bundling agent (1), and is obtained by stacking the continuous reinforcing fibers and the thermoplastic resin,
wherein 0.01 mass% or more of the bundling agent (1) is included relative to the total amount of the continuous fiber reinforced thermoplastic (taken as 100 mass%), and the interfacial polishing strength of the continuous fiber reinforced thermoplastic is preferably twice or more the interfacial polishing strength of a continuous fiber reinforced thermoplastic containing less than 0.001 mass% of the bundling agent (1).

The use of continuous reinforcing fibers surface-treated with the bundling agent (1) exhibits twice or more the interfacial polishing strength of a continuous fiber reinforced thermoplastic that is not substantially surface-treated with the bundling agent (1).

Based on the above, in cases where the interfacial polishing strength is considered to be important, it is preferable that the continuous reinforcing fibers of the present embodiment are surface-treated with the bundling agent (1). In other words, the continuous fiber reinforced thermoplastic contains preferably 0.01 mass% or more, more preferably 0.03 mass% or more of the bundling agent (1) relative to the total amount of the continuous fiber reinforced thermoplastic (taken as 100 mass%).

Note that the bundling agent (1) preferably contains one or more selected from the group consisting of a silane coupling agent, a lubricant, and a binding agent.

In the present embodiment, the following method can be used as one example of the method of measuring the above-described interfacial polishing strength. A test specimen for a polishing strength measurement was cut out from the continuous fiber reinforced thermoplastic, and was polished using a polishing machine under the following conditions under a polishing pressure from 100 to 300 g/cm$^2$ (200 g/cm$^2$ in the examples) while gradually increasing the polishing pressure by 10 to 30 g/cm$^2$ (by 20 g/cm$^2$ in the examples). The polished surface was observed under a field emission scanning electron microscope to determine the maximum polishing pressure under which no void was formed between the continuous reinforcing fibers and the thermoplastic resin. The pressure one step before the polishing pressure under which a void(s) is observed between one continuous reinforcing fiber and the thermoplastic resin is determined as the maximum polishing pressure. For example, if a void(s) is observed after applying a polishing pressure of 520 g/cm$^2$, the maximum polishing pressure is 500 g/cm$^2$.

It is preferable that the applicable polishing conditions in the present embodiment are as follows: using water-resistant polishing paper No. #2000 for 5 to 30 minutes (10 minutes in the examples), a silicon carbide film with a particle size of 5 to 13 $\mu$m (9 $\mu$m in the examples) for 1 to 30 minutes (5 minutes in the examples), an alumina film with a particle size of 2 to 8 $\mu$m (5 $\mu$m in the examples) for 1 to 30 minutes (5 minutes in the examples), an alumina film with a particle size of 1 to 6 $\mu$m (3 $\mu$m in the examples) for 1 to 30 minutes (5 minutes in the examples), an alumina film with a particle size of 0.5 to 2 $\mu$m (1 $\mu$m in the examples) for 1 to 30 minutes (5 minutes in the examples), and colloidal silica (BAIKALOX 0.1CR) with a particle size of 0.05 to 0.2 $\mu$m (0.1 $\mu$m in the examples) using buffing abrasive paper foam polyurethane for 1 to 30 minutes (5 minutes in the examples), in this sequence. Each polishing was performed while adding water at approximately 1 to 15 mL/min (7 mL/min in the examples).

[Form of continuous fiber reinforced thermoplastic]

The form of the continuous fiber reinforced thermoplastic in the present embodiment is not particularly limited, and the following various forms are possible. Examples include a form in which continuous reinforcing fibers in the form of a woven fabric, knitted fabric, braid string, or pipe are compounded with a thermoplastic resin, a form in which continuous reinforcing fibers aligned in one direction are compounded with a thermoplastic resin, a form in which yarns composed of continuous reinforcing fibers and a thermoplastic resin are aligned in one direction and shaped, a form in which yarns composed of continuous reinforcing fibers and a thermoplastic resin are align in one direction and shaped, and a form in which yarns composed of continuous reinforcing fibers and a thermoplastic resin are shaped into a woven fabric, a knitted fabric, a braid string, or a pip, for example.

The continuous fiber reinforced thermoplastic of the present embodiment may be a flat plate body which may be a laminate comprising layers of continuous reinforcing fibers and layers of a thermoplastic resin. For example, the length direction of the continuous reinforcing fibers may be aligned so as to be substantially parallel to the surface of the flat plate body. The term layer of continuous reinforcing fibers refers to a layer which includes continuous reinforcing fibers (e.g., base material of the continuous reinforcing fibers), and may be a layer in which the continuous reinforcing fibers are impregnated with a thermoplastic resin up to the inside thereof.

Examples of the form of an intermediate material before being shaping into the continuous fiber reinforced thermoplastic include, but are not particularly limited, combined filament yarns of continuous reinforcing fibers and resin fibers; coated yarns in which the periphery of a bundle of continuous reinforcing fibers is coated with a resin; continuous reinforcing fibers having a resin impregnated therein are formed into a tape; continuous reinforcing fibers sandwiched between resin films; continuous reinforcing fibers having resin powder adhered thereto; a braid made of a bundle of continuous reinforcing fibers as a core material and resin fibers surrounding the bundle; reinforcing fibers in which a resin has been impregnated between the reinforcing fibers; and reinforcing fibers in which in which the reinforcing fibers and the molten resin are brought into contact with each other.

[Method of producing continuous fiber reinforced thermoplastic]

The production method of the continuous fiber reinforced thermoplastic of the present embodiment is not particularly limited, and a wide variety of methods may be used.

In one production method of the continuous fiber reinforced thermoplastic, base materials composing a continuous fiber reinforced thermoplastic (e.g., a base material made of continuous reinforcing fibers and a base material made of a thermoplastic resin) are cut or shaped according to a desired composite material. The sheets of the base materials are laminated or stacked in number that is determined based on the thickness of an intended product, and are set in a mold so as to conform to the shape of the mold.

The above base materials may be cut one by one, or may be cut after a desired number of sheets are overlapped one another. From the viewpoint of productivity, it is preferable to cut the base materials after they are overlapped one another. The cutting may be achieved by any means, such as a water jet, a saw blade press machine, a hot saw blade press machine, a laser, and a plotter, for example. Of these, a hot saw blade press machine is preferably used because a good cross section is obtained and a laminate of multiple sheets of base materials is cut while cut ends are welded together, which improves the handability. Although an appropriate cutting shape can be identified through try and error, it is preferable that the appropriate cutting shape is determined according to the shape of a mold through a simulation by computer aided engineering (CAE).

The above base materials may be shaped in any manner, and may be formed into a sheet shape, for example.

After the substrates of thermoplastic resin and the substrates of continuous reinforcing fibers stacked alternately (such as laminating multiple substrates of continuous reinforcing fibers and multiple substrates of thermoplastic resin alternately) are set in a mold, the mold is closed, followed by compressing. The temperature of the mold is adjusted to a temperature equal to or higher than the melting point of the thermoplastic resin to cause the thermoplastic resin to melt for shaping. The mold clamping pressure is, but is not limited to, preferably 1 MPa or more, and more preferably 3 MPa or more. Furthermore, after the mold is clamped and compression molding is carried out, the mold clamping pressure may be released for degassing or the like. It is preferable that compression molding is carried out for as long time as possible to the extent where the thermoplastic resin which is used does not undergo thermal aging from the viewpoint of imparting strength. Nevertheless, from the viewpoint of productivity, the compression molding time is preferably within 2 minutes, more preferably within 1 minute.

Other methods include a method in which the base materials to compose the continuous fiber reinforced thermoplastic are continuously fed by a double belt press machine or a continuous compression molding machine, heated to the melting point of the thermoplastic resin or higher, compression molded under an arbitrary pressure, and cooled to the crystallization temperature or the glass transition temperature of the thermoplastic resin or lower for production.

In the production method of the continuous fiber reinforced thermoplastic of the present embodiment, the continuous fiber or the base material of continuous reinforced fibers is preferably surface-treated with a bundling agent (1) prior to lamination with the base material of the thermoplastic resin. This further improves the interfacial polishing strength or the like.

The interfacial polishing strength of the continuous fiber reinforced thermoplastic obtained by the production method of the continuous fiber reinforced thermoplastic of the present embodiment is preferably 0.80 to 1.20 times, more preferably 0.85 to 1.15 times the interfacial polishing strength of a continuous fiber reinforced thermoplastic obtained by using a coupling agent only as the bundling agent (1) for the surface treatment of the continuous reinforcing fibers.

The interfacial polishing strength of the continuous fiber reinforced thermoplastic obtained by the production method of the continuous fiber reinforced thermoplastic of the present embodiment is preferably twice or more, more preferably three times or more, and even more preferably four times or more the interfacial polishing strength of a continuous fiber reinforced thermoplastic when the surface-treated portion by the bundling agent (1) for the continuous reinforcing fibers is removed.

The interfacial polishing strength can be determined as follows, as described in the above or following examples. The continuous fiber reinforced resin material is cut by a band saw. Polishing is carried out while varying the polishing pressure applied to the cross-section perpendicular to the length direction of the continuous reinforcing fibers. After polishing, each polished surface is observed under a FESEM, and the maximum polishing pressure under which no void(s) has been formed between the continuous reinforcing fiber and the resin is determined. More specifically, it can be measured with the method described in the examples below. When a coupling agent, preferably only an amino silane, is used as the bundling agent (1) for the continuous reinforcing fibers, the production method of the continuous fiber reinforced thermoplastic includes a method including treating continuous reinforcing fiber substrates in an electric furnace or similar means to remove the bundling agent (1), and after the removal, and producing the continuous fiber reinforced thermoplastic using the continuous reinforcing fiber substrates to which the coupling agent has been added; and a method including preparing continuous reinforcing fiber substrates using continuous reinforcing fibers treated only with the coupling agent, and then producing the continuous fiber reinforced thermoplastic. When the bundling agent (1) for the continuous reinforcing fibers is removed, the production method of the continuous fiber reinforced thermoplastic includes a method including treating the continuous reinforcing fiber substrates in an electric furnace or similar means to remove the bundling agent (1), and then producing the continuous fiber reinforced thermoplastic using the continuous reinforcing fiber substrates from which the bundling agent (1) has been removed; and a method including preparing continuous reinforcing fiber substrates using continuous reinforcing fibers that have not been treated with the bundling agent (1) and then producing the continuous fiber reinforced thermoplastic.

In the present embodiment, the method of removing the surface-treated portion by the bundling agent (1) for the continuous reinforcing fibers includes, specifically, when the continuous reinforcing fibers are glass fibers, the surface-treated portion by the bundling agent (1) is removed by placing the glass fibers in an electric furnace and heating them at 600 °C for 3 hours, for example. Alternatively, when the continuous reinforcing fibers are carbon fibers, the surface treated portion by the bundling agent (1) is removed by keeping at 350 °C for 30 minutes under an argon atmosphere, for example.

When the interfacial strength of the continuous fiber reinforced thermoplastic is within this range, the recovery ratio of the continuous fiber reinforced thermoplastic tends to be increased.

The production method of the continuous fiber reinforced thermoplastic of the present embodiment is a production method of a continuous fiber reinforced thermoplastic obtained by stacking continuous reinforcing fibers that have been surface-treated with a bundling agent (1) containing a coupling agent and a thermoplastic resin, wherein the interfacial polishing strength of the continuous fiber reinforced thermoplastic is preferably 0.8 to 1.2 times (more preferably 0.85 to 1.15 times) the interfacial polishing strength of a continuous fiber reinforced thermoplastic obtained by stacking continuous reinforcing fibers surface-treated with a bundling agent (2) having a higher content of coupling agent than that in the bundling agent (1) (for example, the content of coupling agent is 50% or more of the total mass, preferably only coupling agent is contained) and the thermoplastic resin.

The bundling agent (2) in the present embodiment preferably has a higher content of coupling agent than the content of the coupling agent contained in the bundling agent (1), and is a mixed solution of the coupling agent (γ-aminopropyl triethoxysilane) and pure water, for example. It is preferred that the coupling agent accounts for 50 mass% or more of the total amount of the bundling agent (2).

In the present embodiment, the case where surface treatment is performed only with a coupling agent, the surface treatment agent (e.g., bundling agent (1)) is a solution of the coupling agent and water, preferably a mixture of γ-aminopropyl triethoxysilane and pure water.

In addition, a suitable bundling agent (1) in the present embodiment is a solution or dispersion of a coupling agent, preferably γ-aminopropyl triethoxysilane, pure water, a lubricant, and a binding agent.

The production method of a continuous fiber reinforced thermoplastic of the present embodiment is a production method of a continuous fiber reinforced thermoplastic containing a bundling agent (1), continuous reinforcing fibers, and a thermoplastic resin, and is obtained by stacking the continuous reinforcing fibers and the thermoplastic resin, wherein the interfacial polishing strength of the continuous fiber reinforced thermoplastic is preferably twice or more (preferably three times or more, more preferably four times or more) the interfacial polishing strength of a continuous fiber reinforced thermoplastic obtained by stacking continuous reinforcing fibers from which surface treatment by the bundling agent (1) has been removed and the thermoplastic resin.

Based on the above, when the interfacial polishing strength is considered to be important, it is preferable that the continuous reinforcing fibers of the present embodiment are surface-treated with a bundling agent.

(Continuous reinforcing fibers)

The continuous fiber reinforced thermoplastic in the present embodiment contains continuous reinforcing fibers as an essential component. The continuous reinforcing fibers in the present embodiment may be continuous reinforcing fibers used for commonly-used continuous fiber reinforced thermoplastics.

Examples of the above continuous reinforcing fibers include, but are not limited to, glass fibers, carbon fibers, plant fibers, aramid fibers, ultra-high strength polyethylene fibers, polybenzazole-based fibers, liquid crystal polyester fibers, polyketone fibers, metal fibers, and ceramic fibers.

Glass fibers, carbon fibers, plant fibers, and aramid fibers are preferable from the viewpoint of mechanical properties, thermal properties, and versatility, whereas glass fibers are preferable from the viewpoint of productivity. One type of continuous reinforcing fibers mentioned above may be used alone, or two or more types may be used in combination.

The above continuous reinforcing fibers are preferably surface-treated with a surface treatment agent such as the bundling agent (1).

The content of the continuous reinforcing fibers of the present embodiment is preferably 90 to 525 mass%, preferably 150 to 340 mass%, and preferably 180 to 300 mass%, per 100% mass of the continuous fiber reinforced thermoplastic.

The average single yarn diameter of the continuous reinforcing fibers in the present embodiment is preferably 8 to 23 μm, and more preferably 14 to 19 μm.

<Bundling agent>

When glass fibers are selected as the continuous reinforcing fibers in the present embodiment, the glass fibers may be treated with a surface treatment agent, and the bundling agent (1) may be used as the surface treatment agent.

The bundling agent (1) (also referred to as sizing agent) preferably contains one or more selected from the group consisting of a silane coupling agent, a lubricant, and a binding agent, and more preferably contains at least a binding agent or a silane coupling agent.

Furthermore, the above bundling agent (1) may be a mixture consisting of a silane coupling agent and a binding agent, or a mixture consisting of a silane coupling agent, a lubricant, and a binding agent.

The continuous fiber reinforced thermoplastic having a low porosity can be obtained by using the bundling agent (1) that forms a strong bonding between the glass fibers and the resin coated around the glass fibers.

In the present embodiment, the bundling agent (1) may be added externally to a material used or may be included internally in a material used. For example, a lubricant may be included in a commercial thermoplastic resin product used.

Similarly, the above bundling agent (2) also preferably contains one or more selected from the group consisting of a silane coupling agent, a lubricant, and a binding agent, and more preferably contains at least a binding agent or a silane coupling agent.

--Silane coupling agent--

The above silane coupling agent is generally used as a surface treatment agent for glass fibers, and contributes to enhancing the interfacial adhesive strength.

Examples of the above silane coupling agent include, but are not limited to, aminosilanes such as γ-aminopropyl trimethoxysilane, γ-aminopropyl triethoxysilane, and N-β-(aminoethyl)-γ-aminopropylmethyl dimethoxysilane; mercaptosilanes such as γ-mercaptopropyl trimethoxysilane and γ-mercaptopropyl triethoxysilane; epoxysilanes; vinylsilanes, and maleic acid. In the case where a polyamide is used as the thermoplastic resin, it is preferable to select a polyamide that easily bonds to carboxyl or amino groups which are the end groups of the polyamide-based resin, and amino silanes are preferred.

-Lubricant-

The above lubricant contributes to improving the spreadability of glass fibers.

As the above lubricant, any conventional liquid or solid lubricating materials can be used according to the intended purpose as long as it doe not inhibit a silane coupling agent and a binding agent, and examples thereof include, but are not limited to, animal or plant waxes or mineral waxes such as carnauba wax and lanolin wax; and surfactants such as fatty acid amides, fatty acid esters, fatty acid ether, aromatic esters, and aromatic ether.

-Binding agent-

The above binding agent contributes to improving the bundlability of the glass fibers and the interfacial adhesive strength.

As the material of the above binding agent, a polymer or a thermoplastic resin (c) other than the thermoplastic resin serving as the primary material of the continuous fiber reinforced thermoplastic can be used according to the intended purpose.

Examples of the polymer as the above binding agent include, but are not limited to, a homopolymer of acrylic acid, a copolymer of acrylic acid and another copolymerizable monomer, and salts of primary, secondary, and tertiary amines with these, for example. In addition, polyurethane-based resins synthesized from an isocyanate such as m-xylylene diisocyanate, 4,4'-methylenebis(cyclohexylisocyanate), and isophorone diisocyanate, and a polyester- or polyether-based diol are also suitably used, for example.

The homopolymer of the above acrylic acid has a weight average molecular weight of preferably from 1,000 to 90,000 and more preferably from 1,000 to 25,000.

The other polymerizable monomer composing the copolymer of the above acrylic acid and the other copolymerizable monomer is, but not limited to, one or more monomers selected from the group consisting of acrylic acid, maleic acid, methacrylic acid, vinyl acetic acid, crotonic acid, isocrotonic acid, fumaric acid, itaconic acid, citraconic acid, and mesaconic acid (except for cases where only acrylic acid is used), among monomers having a hydroxyl group and/or carboxyl group, for example. It is preferable that the copolymerizable monomer includes one or more ester-based monomers.

Examples of primary, secondary, and tertiary amines of a homopolymer or copolymer of the above acrylic acid include, but are not limited to, triethylamine salts, triethanolamine salts, and glycine salts, for example. The degree of neutralization is preferably 20 to 90%, and more preferably 40 to 60%, from the viewpoint of improving the stability of a mixed solution with other agents (such as a silane coupling agent) which are used together, and reducing the amine odor.

The weight average molecular weight of the polymer of acrylic acid composing the salt is not particularly limited, but is preferably in the range of 3,000 to 50,000. The weight average molecular weight of the polymer is preferably 3,000 or more from the viewpoint of improving the bundlability of the glass fibers, and is preferably 50,000 or less from the viewpoint of improving the properties when being formed into a composite shaped article.

In the present embodiment, the case where polyamide is used as the thermoplastic resin, it is preferable to use a resin that has good wettability to the polyamide resin or has a surface tension close to that of the polyamide resin as the binding agent. Specifically, for example, an emulsion of a polyurethane resin or an emulsion of a polyamide resin or a modified product thereof can be selected.

Examples of the thermoplastic resin (c) used as the binding agent include, but are not limited to, polyolefin-based resins, polyamide-based resins, polyurethane-based resins, polyacetal-based resins, polycarbonate-based resins, polyester-based resins, polyether ketone, polyether ether ketone, polyether sulfone, polyphenylene sulfide, thermoplastic polyetherimide, thermoplastic fluorine-based resins, and modified thermoplastic resins produced by modifying these resins, for example. It is preferable that the thermoplastic resin (c) used as the binding agent is a thermoplastic resin (c) and/or a modified thermoplastic resin (c) which is the same as the resin covering the peripheries of continuous reinforcing fibers, because the adhesion between the glass fibers and the thermoplastic resin is improved after they are processed into a composite material.

Further, the thermoplastic resin (c) used as the binding agent is more preferably a modified thermoplastic resin (d) from the viewpoint of further improving the adhesion between the continuous reinforcing fibers and the thermoplastic resin covering the continuous reinforcing fibers, and reducing the ratio of an emulsifier component or eliminating the need for an emulsifier in a case in which the bundling agent in an aqueous dispersion is made to adhere to the glass fibers.

Here, the term modified thermoplastic resin (d) refers to a material obtained through copolymerization of a monomer component which can form the main chain of the thermoplastic resin (c) with a different monomer component for the purpose of modifying the properties of the thermoplastic resin (c) to thereby modify the hydrophilicity, the crystallinity, the thermodynamic properties, and the like.

Examples of the modified thermoplastic resin (d) used as the binding agent include, but are not limited to, modified polyolefin-based resins, modified polyamide-based resins, and modified polyester-based resins.

A modified polyolefin resin as the above binding agent refers to a copolymer of an olefinic monomer such as ethylene and propylene and a monomer that is copolymerizable with the olefinic monomer such as an unsaturated carboxylic acid and/or an ester thereof, or a homopolymer of a monomer that is copolymerizable with an olefinic monomer such as an unsaturated carboxylic acid and/or an ester thereof, and is produced by known methods. It may be a random copolymer produced through copolymerization of an olefinic monomer and an unsaturated carboxylic acid and/or an ester thereof, or may be a graft copolymer in which an unsaturated carboxylic acid is grafted to an olefin.

Examples of the above olefinic monomer include, but are not limited to, ethylene, propylene, and 1-butene. These monomers may be used alone or in a combination of two or more.

Examples of the monomer copolymerizable with the above olefinic monomer include unsaturated carboxylic acids such as acrylic acid, maleic acid, maleic anhydride, methacrylic acid, vinyl acetic acid, crotonic acid, isocrotonic acid, fumaric acid, itaconic acid, citraconic acid, and mesaconic acid, and esterified forms of these unsaturated carboxylic acids (e.g., methyl esters, ethyl esters), for example. These monomers may be used alone or in a combination of two or more.

In the case where the above modified polyolefin resin is a copolymerization of an olefinic monomer and a monomer that is copolymerizable with the olefinic monomer, the monomer ratios of the olefinic monomer to the monomer copolymerizable with that olefinic monomer are preferably 60 to 95 mass% of the olefinic monomer to 5 to 40 mass% of the monomer copolymerizable with the olefinic monomer, and more preferably 70 to 85 mass% of the olefinic monomer to 15 to 30 mass% of the monomer copolymerizable with the olefinic monomer, with respect to the total mass of the copolymer taken as 100 mass%. When the mass% of the olefinic monomer is 60 mass% or more, a favorable affinity with the matrix is achieved. On the other hand, when the mass% of the olefinic monomer is 95 mass% or less, a good water dispersibility of the modified polyolefin-based resin is achieved, facilitating uniform application of the modified polyolefin-based resin to the continuous reinforcing fibers.

In the modified polyolefin-based resin used as the above binding agent, a modified group such as a carboxyl group introduced through copolymerization may be neutralized with a basic compound. Examples of the basic compound include, but are not limited to, alkalis such as sodium hydroxide and potassium hydroxide; and amines such as ammonia, monoethanolamine, and diethanolamine, for example. The weight average molecular weight of the modified polyolefin-based resin used as a binding agent is not particularly limited, but is preferably 5,000 to 200,000, and more preferably 50,000 to 150,000. The weight average molecular weight is preferably 5,000 or more from the viewpoint of improving the bundlability of the glass fibers, and is preferably 200,000 or less from the viewpoint of emulsification stability when used in a water dispersion.

The modified polyamide-based resin used as the above binding agent refers to a modified polyamide compound in which a hydrophilic group such as a polyalkylene oxide chain or a tertiary amine component is introduced to the molecular chain. Such a modified polyamide-based resin can be produced by any of the known methods.

A modified polyamide-based resin having a polyalkylene oxide chain introduced to the molecular chain thereof is produced through copolymerization of a modified polyethylene glycol or polypropylene glycol which is partially or entirely modified to a diamine or dicarboxylic acid, for example. A modified polyamide-based resin having a tertiary amine component introduced thereto is produced through copolymerization of aminoethylpiperazine, bisaminopropyl-piperazine, $\alpha$-dimethylamino $\epsilon$-caprolactam, or the like, for example.

The modified polyester-based resin used as the above binding agent refers to a copolymer of a polycarboxylic acid or anhydride thereof and a polyol, and the copolymer has a hydrophilic group in the molecular skeleton thereof including terminals. Such a modified polyester-based resin can be produced by any of the known methods.

Examples of the above hydrophilic group include a polyalkylene oxide group, a sulfonic acid salt, a carboxyl group, and neutralized salts thereof, for example. Examples of the polycarboxylic acid or anhydride thereof include an aromatic dicarboxylic acid, a sulfonic acid group-containing aromatic dicarboxylic acid, an aliphatic dicarboxylic acid, an alicyclic dicarboxylic acid, and a polycarboxylic acid having three or more functionalities.

Examples of the above aromatic dicarboxylic acid include, but are not limited to, phthalic acid, terephthalic acid, isophthalic acid, orthophthalic acid, 1,5-naphthalene dicarboxylic acid, 2,6-naphthalene dicarboxylic acid, and phthalic anhydride, for example.

Examples of the above sulfonic acid group-containing aromatic dicarboxylic acid include, but are not limited to, sulfoterephthalic acid salts, 5-sulfoisophthalic acid salts, and 5-sulfoothophthalic acid salts.

Examples of the above aliphatic dicarboxylic acid or alicyclic dicarboxylic acid include, but are not limited to, fumaric acid, maleic acid, itaconic acid, succinic acid, adipic acid, azelaic acid, sebacic acid, dimer acids, 1,4-cyclohexanedicarboxylic acid, succinic anhydride, and maleic anhydride, for example.

Examples of the above polycarboxylic acid having three or more functionalities include, but are not limited to, trimellitic acid, pyromellitic acid, trimellitic anhydride, and pyromellitic anhydride, for example.

Among these, from the viewpoint of improving the heat resistance of the modified polyester-based resin, it is preferable that 40 to 99 mol% of the all polycarboxylic acid components is an aromatic dicarboxylic acid. In addition, from the viewpoint of the emulsification stability when the modified polyester-based resin is used in a water dispersion, it is preferable that 1 to 10 mol% of the all polycarboxylic acid components is a sulfonic acid group-containing aromatic dicarboxylic acid.

Examples of the polyol composing the above modified polyester-based resin include diols, as well as polyols with three or more functionalities.

Examples of the above diols include, but are not limited to, ethylene glycol, diethylene glycol, polyethylene glycol, propylene glycol, polypropylene glycol, polybutylene glycol, 1,3-propanediol, 1,4-butanediol, 1,6-hexanediol, neopentyl glycol, polytetramethylene glycol, 1,4-cyclohexanediol, 1,4-cyclohexanedimethanol, and Bisphenol A and an alkylene oxide adduct thereof, for example. Examples of the above polyols having three or more functionalities include trimethylolpropane, glycerin, and pentaerythritol.

The copolymerization ratio of the polycarboxylic acid or anhydride thereof to the polyol composing the above modified polyester-based resin is preferably 40 to 60 mass% of the polycarboxylic acid or anhydride thereof to 40 to 60 mass% of the polyol, and more preferably 45 to 55 mass% of the polycarboxylic acid or anhydride thereof to 45 to 55 mass% of the polyol, with respect to the total mass of the copolymer components taken as 100 mass%.

The weight average molecular weight of the above modified polyester-based resin is preferably from 3,000 to 100,000 and more preferably from 10,000 to 30,000. The weight average molecular weight of the modified polyester-based resin is preferably 3,000 or more from the viewpoint of improving the bundlability of the glass fibers, and is preferably 100,000 or less from the viewpoint of the emulsification stability when used in a water dispersion.

One polymer or thermoplastic resin used as the binding agent may be used alone, or two or more of these may be used in combination.

In the present embodiment, one or more polymers selected from a homopolymer of acrylic acid, a copolymer of acrylic acid and another copolymerizable monomer, and salts of primary, secondary, and tertiary amines of these are used in an amount of preferably 50 mass% or more, and more preferably 60 mass% or more, with respect to the total amount of the binding agent taken as 100 mass%.

The amount of the bundling agent (1) contained in the continuous fiber reinforced thermoplastic in the present embodiment is preferably 0.1 to 3 mass%, and more preferably 0.2 to 2 mass%, with respect to 100 mass% of the continuous reinforcing fibers. When the content of the bundling agent (1) is within the above range, the surface characteristics of the continuous reinforcing fibers can be effectively modified, which improves the adhesion between the continuous reinforcing fibers and the thermoplastic resin.

In the present embodiment, in the case where the bundling agent (1) is made from a silane coupling agent and a binding agent, the amount of the bundling agent (1) to be provided and adhered, as the total mass of the silane coupling agent and the binding agent, is preferably 0.1 to 3 mass%, more preferably 0.2 to 2 mass%, and even more preferably 0.2 to 1 mass%, with respect to 100 mass% of the glass fibers. The amount of the bundling agent (1) to be adhered, as the total mass of the silane coupling agent and the binding agent, is preferably 0.1 mass% or more from the viewpoint of controlling the bundlability of the glass fibers and improving the interfacial adhesive strength, and is preferably 3 mass% or less from the viewpoint of the handleability of the yarns, with respect to 100 mass% of the glass fibers.

Alternatively, in the present embodiment, in the case where the bundling agent (1) is made from a silane coupling agent, a lubricant, and a binding agent, the amount of the bundling agent (1) to be adhered, as the total mass of the silane coupling agent, the lubricant, and the binding agent, is preferably 0.1 to 3 mass%, more preferably 0.2 to 2 mass%, and even more preferably 0.2 to 1 mass%, with respect to 100 mass% of glass fibers. The amount of the bundling agent (1) to be adhered, as the total mass of the silane coupling agent and the binding agent, is preferably 0.1 mass% or more from the viewpoint of controlling the bundlability of the glass fibers and improving the interfacial adhesive strength, and is preferably 3 mass% or less from the viewpoint of the handleability of the yarns, with respect to 100 mass% of the glass fibers.

<Composition of bundling agent (1) for glass fibers>

In the present embodiment, when glass fibers are selected as continuous reinforcing fibers, the blending amount of the silane coupling agent in the bundling agent (1) for the glass fibers (hereinafter also referred to as bundling agent for glass fibers) is preferably from 0.1 to 2 mass%, more preferably from 0.1 to 1 mass%, and even more preferably from 0.2 to 0.5 mass% with respect to 100 mass% of the glass fibers, from the viewpoint of improving the bundlability of the glass fibers, improving the interfacial adhesive strength, and improving the mechanical strength of a composite shaped article.

The amount of the lubricant in the bundling agent for glass fibers is preferably 0.01 mass% or more and more preferably 0.02 mass% or more with respect to 100 mass% of the glass fibers, from the viewpoint of imparting a sufficient lubricity, and is preferably 1 mass% or less and more preferably 0.5 mass% or less from the viewpoint of improving the interfacial adhesive strength and improving the mechanical strength of a composite shaped article.

The blending amount of the binding agent in the bundling agent for glass fibers is preferably from 1 to 25 mass%, more preferably from 3 to 15 mass%, and even more preferably from 3 to 10 mass% with respect to 100 mass% of the glass fibers, from the viewpoint of controlling the bundlability of the glass fibers, improving the interfacial adhesive strength, and improving the mechanical strength of a composite shaped article.

In the present embodiment, when glass fibers are used as continuous reinforcing fibers and the bundling agent for glass fibers is made from a silane coupling agent, a lubricant, and a binding agent, it is preferable that the bundling agent for the glass fibers contains 0.1 to 2 mass% of the silane coupling agent, 0.01 to 1 mass% of the lubricant, and 1 to 25 mass% of the binding agent, and it is preferable that these components are diluted with water so that the total mass of the bundling agent for glass fibers is adjusted to 100 mass%.

<Mode of use of bundling agent>

In the present embodiment, the bundling agent for glass fibers may be prepared in any forms, such as in a form of a water solution, a form of a colloidal dispersion, and a form of an emulsion with the aid of an emulsifier, depending on how the bundling agent for glass fibers is used. The bundling agent is preferably used in the form of a water solution from the viewpoint of improving the dispersion stability of the bundling agent and improving the heat resistance.

The glass fibers as continuous reinforcing fibers composing the continuous fiber reinforced thermoplastic of the present embodiment are continuously produced in a known glass fiber production step by applying the above-described bundling agent (1) to glass fibers using a known method such as a roller-type applicator, and drying the produced glass fibers.

Similarly, in the case where carbon fibers are selected as the continuous reinforcing fibers, a bundling agent (1) may be used, and the bundling agent (1) is preferably made from a coupling agent, a lubricant, and a binding agent. The coupling agent may be one that is compatible with hydroxyl groups present on the surfaces of carbon fibers. The binding agent may be one that has a good wettability with or a surface tension close to the surface tension of the selected thermoplastic resin, or the lubricant may be one that does not inhibit the coupling agent and the binding agent.

There are no limitations on the type of bundling agent used for carbon fibers, and any known type can be used. Specifically, for example, those described in JP 2015-101794 A can be used.

In the case in which other continuous reinforcing fibers are used, the type and amount of the bundling agent to be applied may be appropriately selected from bundling agents that can be used for glass fibers or carbon fibers, depending on the characteristics of the continuous reinforcing fibers, and it is preferable that the type and amount of the bundling agent to be applied may be those for a bundling agent used for carbon fibers.

<Shape of continuous reinforcing fibers>

The continuous reinforcing fibers of the present embodiment are a multifilament of a plurality of filaments, and have a single yarn count of preferably 30 to 15,000 from the viewpoint of the handleability.

The single yarn diameter R of the continuous reinforcing fibers is preferably 2 to 30 $\mu$m, more preferably 4 to 25 $\mu$m, even more preferably 6 to 20 $\mu$m, and most preferably 8 to 18 $\mu$m, from the viewpoint of the strength and from the viewpoint of the handleability.

The product RD of the single yarn diameter R ($\mu$m) and the density D (g/cm$^3$) of the continuous reinforcing fibers of the present embodiment is preferably from 5 to 100 $\mu$m·g/cm$^3$, more preferably from 10 to 50 $\mu$m·g/cm$^3$, even more preferably from 15 to 45 $\mu$m·g/cm$^3$, and still more preferably from 20 to 45 $\mu$m·g/cm$^3$, from the viewpoint of the handleability of the continuous reinforcing fibers and the strength of the composite material.

The density D of the continuous reinforcing fibers of the present embodiment can be measured using a specific gravity meter.

On the other hand, the single yarn diameter R ($\mu$m) of the continuous reinforcing fibers of the present embodiment can be calculated from the density D (g/cm$^3$), the fiber fineness (dtex), and the single yarn count using the following formula (2):

[Math. 1]

$$\text{Formula (2)}$$

$$\text{single yarn diameter} = 20 \times \sqrt{\frac{\text{fiber fineness}}{\pi \times \text{single yarn count} \times \text{density}}}$$

Further, the single yarn diameter R ($\mu$m) can be measured by an SEM observation of a single yarn of the continuous reinforcing fiber.

In the above Formula (2), in order to control a product RD of the continuous reinforcing fiber (= single yarn count $\times$ density) to fall within a certain range, the fiber fineness (dtex) and the single yarn count may be appropriately selected according to the density of commercially available continuous reinforcing fibers. For example, in a case in which glass fibers are used as continuous reinforcing fibers, the density of glass fibers is about 2.5 g/cm$^3$. Thus, a glass fiber having a single yarn diameter of 2 to 40 $\mu$m may be selected. Specifically, when the single yarn diameter of glass fibers is 9 $\mu$m, a product RD of 23 is given if glass fibers having a fiber fineness of 660 dtex and a single yarn count of 400 are selected. Or, when the single yarn diameter of glass fibers is 17 $\mu$m, a product RD of 43 is given if glass fibers having a fiber fineness of 11,500 dtex and a single yarn count of 2,000 are selected. In a case in which carbon fibers are used as continuous reinforcing fibers, the density of carbon fibers is about 1.8 g/cm$^3$. Thus, a carbon fiber having a single yarn diameter of 2.8 to 55 $\mu$m may be selected. Specifically, when the single yarn diameter of carbon fibers is 7 $\mu$m, a product RD of 13 is given if carbon fibers having a fiber fineness of 2,000 dtex and a single yarn count of 3,000 are selected. In a case in which aramid fibers are used as continuous reinforcing fibers, the density of aramid fibers is about 1.45 g/cm$^3$. Thus, aramid fibers having a single yarn diameter of 3.4 to 68 $\mu$m may be selected. Specifically, when the single yarn diameter of aramid fibers is 12 $\mu$m, a product RD of 17 is given if aramid fibers having a fiber fineness of 1,670 dtex and a single yarn count of 1,000 are selected.

Continuous reinforcing fibers, e.g., glass fibers, are manufactured by measuring out and mixing raw material glass, obtaining molten glass by melting the raw material glass in a melting furnace, spinning the molten glass into glass filaments, applying the bundling agent (1), and winding the filaments by a spinning machine into the form of direct winding roving (DWRs), cakes, twisted yarns, and the like, for example.

Continuous reinforcing fibers may take any form, but continuous reinforcing fibers wound into yarns, cakes, and DWRs are preferable because the productivity and the stability of production in the resin coating step are increased. From a viewpoint of the productivity, DWRs are the most preferable.

The form of the continuous reinforcing fiber is not particularly limited, and various forms such as a woven fabric, a knitted fabric, braid string, pipe, a non-crimp fabric, and a unidirectional material can be exemplified, and preferred forms are a woven fabric, a non-crimp fabric, and a unidirectional material.

(Thermoplastic resin)

The continuous fiber reinforced thermoplastic in the present embodiment contains a thermoplastic resin as an essential component. Examples of the thermoplastic resin include, but are not limited to, polyolefin-based resins such as polyethylene and polypropylene; polyamide-based resins such as polyamide 6, polyamide 66, polyamide 46, polyamide 612, polyamide 6I, polyamide 1010, polyamide 12, polyamide 610, polyamide 410, and polyamide 12; polyester-based resins such as polyethylene terephthalate, polybutylene terephthalate, and polytrimethylene terephthalate; polyacetal-based resins such as polyoxymethylene; polycarbonate-based resins; polyether-based resins such as polyether ketone, polyether ether ketone, polyether glycol, polypropylene glycol, and polytetramethylene ether glycol; polyether sulfone; polyphenylene sulfide; thermoplastic polyetherimide; thermoplastic fluorine-based resins such as a tetrafluoroethylene-ethylene copolymer; and polyurethane-based resins; acrylic resins; and modified thermoplastic resins produced by modifying these, for example. As a mixture as the thermoplastic resin in the present embodiment, one thermoplastic resin may be used alone or two or more thermoplastic resins may be used.

The term "thermoplastic resin" in this specification refers to thermoplastic resin(s) that is a matrix resin in a laminate of 1 or more (layers) and 100 or fewer (layers) of continuous reinforcing fibers and 1 or more and 200 or fewer layers of a thermoplastic resin constituting the continuous fiber reinforced thermoplastic, which is so-called prepreg. On the other hand, "thermoplastic resin (c)" in this specification refers to the resin used in the bundling agent (1), which is an optional component used for surface modification of continuous reinforcing fibers.

As a preferable thermoplastic resin of the present embodiment, among the above-described thermoplastic resins, polyolefin-based resins, polyamide-based resins, polyester-based resins, polyether-based resins, polyether sulfone, polyphenylene sulfide, thermoplastic polyetherimide, and thermoplastic fluorine-based resins are preferable; polyolefin-based resins, modified polyolefin-based resins, polyamide-based resins, polyester-based resins, polyurethane-based resins, and acrylic resins are more preferable, from the viewpoint of the mechanical properties and versatility; and polyamide-based resins and polyester-based resins are even more preferable when the viewpoint of the thermal properties is added. Furthermore, polyamide-based resins are more preferable from the viewpoint of durability against repeatedly applied loads.

-Polyester-based resin-

The polyester-based resin in the thermoplastic resin of the present embodiment refers to a polymeric compound having a -CO-O- (ester) bond in the main chain thereof.

Examples of the above polyester-based resin include, but are not limited to, polyethylene terephthalate, polybutylene terephthalate, polytetramethylene terephthalate, poly-1,4-cyclohexylenedimethylene terephthalate, and polyethylene-2,6-naphthalene dicarboxylate, for example.

The polyester-based resin may be a homopolyester, or may be a copolymerized polyester. One of these polyester-based resins may be used alone or as a mixture of two or more.

When a copolymerized polyester is used as the thermoplastic resin of the present embodiment, a preferred copolymerized polyester is a copolymerized polyester obtained through copolymerization of homopolyester with a third component as appropriate. Examples of the third component include, but are not limited to, diol components such as diethylene glycol, neopentyl glycol, and polyalkylene glycol; and dicarboxylic acid components such as adipic acid, sebacic acid, phthalic acid, isophthalic acid, and sodium 5-sulfoisophthalate, for example.

In addition, a polyester-based resin made from a raw material derived from a biomass resource can be used, and examples thereof include aliphatic polyester-based resins such as polylactic acid, polybutylene succinate, and polybutylene succinate adipate, and aromatic polyester-based resins such as polybutylene adipate terephthalate, for example.

-Polyamide-based resin-

The polyamide-based resin in the thermoplastic resin of the present embodiment refers to a polymeric compound having a -CO-NH- (amide) bond in the main chain thereof. Examples thereof include aliphatic polyamide, aromatic polyamide, and wholly aromatic polyamide.

Examples of the above polyamide-based resin include, but are not limited to, polyamides obtained through ring-opening polymerization of a lactam, polyamides obtained through self-condensation of an ω-aminocarboxylic acid, and polyamides obtained through condensation of a diamine and a dicarboxylic acid, and copolymers of these, for example. One of these polyamide-based resins may be used alone, or two or more of these may be used as a mixture.

Examples of the above lactam include, but are not limited to, pyrrolidone, caprolactam, undecanelactam, and dodecalactam, for example.

Examples of the above ω-aminocarboxylic acid include, but are not limited to, an ω-amino fatty acid which is a ring-opening compound of a lactam by water, for example. Each of a lactam or ω-aminocarboxylic acid may be condensed by using two or more types of monomers in combination.

Examples of the above diamine (as a monomer) include, but are not limited to, straight chain aliphatic diamines such as hexamethylenediamine and pentamethylenediamine; branched-chain aliphatic diamines such as 2-methylpentanediamine and 2-ethylhexamethylenediamine; aromatic diamines such as p-phenylenediamine and m-phenylenediamine; and alicyclic diamines such as cyclohexanediamine, cyclopentanediamine, and cyclooctanediamine, for example.

Examples of the above dicarboxylic acid (as a monomer) include, but are not limited to, aliphatic dicarboxylic acids such as adipic acid, pimelic acid, and sebacic acid; aromatic dicarboxylic acids such as phthalic acid and isophthalic acid; and alicyclic dicarboxylic acids such as cyclohexanedicarboxylic acid, for example. As to each of the diamines or dicarboxylic acids as a monomer, one of diamines or dicarboxylic acid may be condensed alone or in combination of two or more of these.

Examples of the polyamide-based resin of the present embodiment include, but are not limited to, aliphatic polyamides such as polyamide 4 (poly α-pyrrolidone), polyamide 6 (polycaproamide), polyamide 11 (polyundecanamide), polyamide 12 (polydodecanamide), polyamide 46 (polytetramethylene adipamide), polyamide 66 (polyhexamethylene adipamide), polyamide 610, polyamide 612; semi-aromatic polyamides such as polyamide 6T (polyhexamethylene terephthalamide), polyamide 9T (polynonane methylene terephthalamide), polyamide 6I (polyhexamethylene isophthalamide); and copolymerized polyamides containing these as constituents, for example.

Examples of the above copolymerized polyamides include, but are not limited to, a copolymer of hexamethylene adipamide and hexamethylene terephthalamide, a copolymer of hexamethylene adipamide and hexamethylene isophthalamide, and a copolymer of hexamethylene terephthalamide and 2-methylpentanediamine terephthalamide, for example.

In the present embodiment, when a polyamide resin is used as the thermoplastic resin, the thermoplastic resin preferably contains 50 to 99 parts by mass of (C) an aliphatic polyamide and 1 to 50 parts by mass of (D) a semi-aromatic polyamide, wherein the (D) semi-aromatic polyamide contains a dicarboxylic acid unit containing at least 75 mol% of an isophthalic acid unit, and a diamine unit containing at least 50 mol% of a diamine unit having a carbon number of 4 to 10.

When the thermoplastic resin of the present embodiment contains the (C) aliphatic polyamide and the (D) semi-aromatic polyamide in the above range, physical properties (the strength, the rigidity, the high-temperature characteristics, the water absorption characteristics, the impact characteristics, the appearance, and the like) of the continuous fiber reinforced thermoplastic tend to be improved as compared with a case where only the (C) aliphatic polyamide is included as a polyamide.

In the present embodiment, the sum of the contents of the (C) aliphatic polyamide and the (D) semi-aromatic polyamide is preferably 70 to 100 mass%, more preferably 80 to 100 mass%, and even more preferably 90 to 100 mass%, per 100 mass% of the thermoplastic resin.

Examples of the above (C) aliphatic polyamide include, but are not limited to, polyamide 4, polyamide 6, polyamide 11, polyamide 12, polyamide 46, polyamide 66, polyamide 610, and polyamide 612.

In addition, the content of the (C) aliphatic polyamide in the thermoplastic resin of the present embodiment is preferably 50 to 99 mass%, more preferably 60 to 90 mass%, and even more preferably 70 to 80 mass%, with respect to the total amount (100 mass%) of polyamide-based resins contained in the thermoplastic resin.

Examples of the above (D) semi-aromatic polyamide include, but are not limited to, polyamide 6I, polyamide 9I, and polyamide 10I.

The sum of the amounts of the isophthalic acid unit and the diamine unit having a carbon number of 4 to 10 is preferably from 80 to 100 mol%, more preferably from 90 to 100 mol%, and even more preferably from 95 to 100 mol%, with respect to 100 mol% of all constituent units constituting the (D) semi-aromatic polyamide.

Note that the proportion of the monomer units constituting the (D) semi-aromatic polyamide can be measured by, for example, 13C nuclear magnetic resonance spectroscopy (NMR).

The proportion of the isophthalic acid unit in the dicarboxylic acid unit in the (D) semi-aromatic polyamide is at least 75 mol%, preferably 85 mol% or more, and more preferably 90 mol% or more. When the proportion of the isophthalic acid unit in the dicarboxylic acid unit is within any of the above ranges, the high-temperature characteristics and the water absorption characteristics tend to be improved.

The proportion of the diamine unit having a carbon number of 4 to 10 in the diamine unit in the (D) semi-aromatic polyamide is at least 50 mol%, preferably 60 mol% or more, and more preferably 70 mol% or more. When the proportion of the diamine unit having a carbon number of 4 to 10 in the diamine unit is within any of the above ranges, the high-temperature characteristics and the water absorption characteristics tend to be improved.

The content of the (D) semi-aromatic polyamide in 100 mass% of polyamides in the thermoplastic resin is preferably 1 to 50 mass%, more preferably 10 to 40 mass%, and even more preferably 20 to 30 mass%.

The end groups of the (C) aliphatic polyamide and the (D) semi-aromatic polyamide may be capped by a known end-capping agent, and the sum of the end capped amounts of the (C) aliphatic polyamide and the (D) semi-aromatic polyamide of which end groups are capped by a known end-capping agent, expressed as an equivalent to 1 g of polyamides of the (C) aliphatic polyamide and the (D) semi-aromatic polyamide in total, is preferably 5 to 180 μeq/g, more preferably 10 to 170 μeq/g, even more preferably 20 to 160 μeq/g, particularly preferably 30 to 140 μeq/g, and most preferably 40 to 140 μeq/g. When the end cupped amount is within any of the above ranges, physical properties (the strength, the rigidity, the high-temperature characteristics, the water absorption characteristics, the impact characteristics, the appearance, and the like) tend to be improved.

Here, the end cupped amount is the total amount of amino ends and carboxyl ends which are capped with a capping agent. The end cupped amount can be measured using 1H-NMR, and specifically can be measured by the method described in Examples to be described below.

The end group concentration of the above (C) aliphatic polyamide is preferably a half or less, more preferably two-fifths or less, of the end group concentration of the (D) semi-aromatic polyamide. When the end group concentration of the (C) aliphatic polyamide is half or less of the end group concentration of the (D) semi-aromatic polyamide, physical properties (the strength, the rigidity, the high-temperature characteristics, the water absorption characteristics, the impact characteristics, the appearance, and the like) tend to be improved.

The end group concentrations of the (C) aliphatic polyamide and the (D) semi-aromatic polyamide can be measured using 1H-NMR, and specifically can be measured by the method described in Examples to be described below.

The difference in the peak temperature of tan δ between the (C) aliphatic polyamide and the (D) semi-aromatic polyamide is preferably 45 to 100 °C, more preferably 50 to 90 °C, and even more preferably 60 to 90 °C. When the difference in the peak temperature of tanδ between the (C) aliphatic polyamide and the (D) semi-aromatic polyamide is within any of the above ranges, the high-temperature characteristics and the water absorption characteristics tend to be improved.

The peak temperatures of tan δ of the (C) aliphatic polyamide and the (D) semi-aromatic polyamide can be measured using, for example, a viscoelastic measurement analyzer, and specifically can be measured by the method described in Examples to be described below.

The difference in the viscosity between the (C) aliphatic polyamide and the (D) semi-aromatic polyamide is preferably 3 times or more, and more preferably 4 times or more in view of the strength, rigidity, moldability, and appearance.

The viscosity of a thermoplastic resin can be determined by an MFR measurement (according to ISO 1133), and specifically can be observed by the method described in Examples to be described below.

The content of thermoplastic resin of the present embodiment is preferably 16 to 53 mass%, preferably 23 to 40 mass%, and preferably 25 to 36 mass% with respect to 100 mass% of the continuous fiber reinforced thermoplastic.

[Additives]

The continuous fiber reinforced thermoplastic of the present embodiment may contain additives as needed. The composite material of the present embodiment may contain, for example, colorants, anti-aging agents, antioxidants, weathering agents, metal deactivators, light stabilizers, heat stabilizers, UV absorbers, antimicrobial/antifungal agents, odor control agents, conductivity-imparting agents, dispersing agents, softening agents, plasticizers, cross-linking agents, co-cross-linking agents, vulcanizing agents, vulcanization aids, foaming agents, foaming aids, flame retardants, vibration damping agents, nucleating agents, neutralizing agents, lubricants, anti-blocking agents, dispersants, flow modifiers, and mold release agents.

The content of the additives in the present embodiment may be 3 mass% or less with respect to 100 mass% of the continuous fiber reinforced thermoplastic.

<Coloring agent>

Examples of the above colorant include carbon black, nigrosine, an aluminum pigment, titanium dioxide, ultramarine blue, cyanine blue, cyanine green, quinacridone, diatomite, monoazo salt, perylene, disazo pigments, condensed azo pigments, isoindoline, red iron oxide, nickel titanium yellow, diketone pyrrolopyrrole, metal salts, perylene red, metal oxides, bismuth vanadate, cobalt green, cobalt blue, anthraquinone, phthalocyanine green, and phthalocyanine blue. Among them, black colorants are preferable, and carbon black and nigrosine are more preferable.

The continuous fiber reinforced thermoplastic of the present embodiment suitably contains, with respect to 100 parts by mass of thermoplastic resin, 90 to 525 parts by mass of the continuous reinforcing fibers and 0 to 2 parts by mass of components (e.g., the bundling agent (1) and additives) other than these with respect to 100 parts by mass of thermoplastic resin, more suitably contains 150 to 340 parts by mass of the continuous reinforcing fibers and 0 to 1 parts by mass of components other than these.

[Application of continuous fiber reinforced thermoplastic]

The continuous fiber reinforced thermoplastic of the present embodiment can be suitably used in applications of structural materials, such as aircraft, automobiles, construction materials, and robots.

In automotive applications, it can be used for, but not limited to, chasses and frames, wheel and suspension parts, drive train parts, interior parts, exterior parts, and functional parts, for example.

Specifically, the continuous fiber reinforced thermoplastic can be suitably used as parts including: steering shafts, mounts, sunroofs, steps, roof trims, door trims, trunks, boot lids, bonnets, seat frames, seat backs, retractors, retractor mount brackets, clutches, gears, pulleys, cams, AGs, elastic beams, baffling, lamps, reflectors, glazing, front end modules, back door inners, brake pedals, steering wheels, electric members, sound absorbing materials, door exterior and interior panels, instrument panels, rear gates, ceiling beams, seats, seat frames, wiper arms, electric power steering (EPS) components, micro motors, heat sinks, boxes for engine control unit (ECU) boxes, ECU housings, housing for steering gearboxes, plastic housing, housings for electric vehicle (EV) motors, wire harnesses, in-vehicle meters, combination switches, micro motors, springs, dampers, wheels, wheel covers, frames, sub frames, side frames, frames for motorcycles, fuel tanks, oil pans, intake manifolds, propeller shafts, drive motors, monocock parts, hydrogen tanks, electrodes for fuel cells, panels, floor panels, skin panels, doors, cabins, roofs, hoods, valves, exhaust gas recirculation (EGR) valves, variable valve timing units, connecting rods, cylinder bores, members (engine mounting, front floor cloths, footwell cloths, seat cloths, inner sides, rear cloths, suspensions, pillar reinforcements, front sides, front panels, uppers, dash panel cloths, steering), tunnels, fastening inserts, crush boxes, crush rails, corrugates, roof rails, upper bodies, side rails, braiding, door surrounding assemblies, members for airbags, body pillars, dash to pillar gusset plates, suspension towers, bumpers, body pillar lowers, front body pillars, reinforcements (instrument panels, rails, roofs, front body pillars, roof rails, roof side rails, lockers, door belt lines, front floor under, front body pillar upper, front body pillar lower, center pillars, center pillar hinges, door outside panels), side outer panels, front door window frames, minimum intrusion cabin system (MICS) bulks, torque boxes, radiator supports, radiator fans, water pumps, fuel pumps, electronically controlled throttle bodies, engine control ECUs, starters, alternators, manifolds, transmissions, clutches, dash panels, dash panel insulator pads, door side impact protection beams, bumper beams, door beams, bulk heads, outer pads, inner pads, rear seat rods, door panels, door trim board sub-assembly, energy absorbers (bumpers and shock absorbers), shock absorbing bodies, shock absorbing garnishes, pillar garnishes, roof side inner garnishes, resin ribs, side rail front spacers, side rail rear spacers, seat belt pretensioners, airbag sensors, arms (suspensions, lower, hood hinges), suspension links, shock absorbing brackets, fender brackets, inverter brackets, inverter modules, hood inner panels, hood panels, cowl louvers, cowl top outer front panels, cowl top outer panels, floor silencers, damp sheets, hood insulators, fender side panel protectors, cowl insulators, cowl top ventilator louvers, cylinder head covers, tire deflectors, fender supports, strut tower bars, mission center tunnels, floor tunnels, radiator core supports, luggage panels, luggage floors, accelerator pedals, and accelerator pedal bases.

[Shaping of continuous fiber reinforced thermoplastic]

The continuous fiber reinforced thermoplastic of the present embodiment can be further shaped. Examples of the shaping method include a method in which the continuous fiber reinforced thermoplastic of the present embodiment is cut into a piece in a predetermined size, and is heat compression pressed by a press molding machine while being heated with an infrared heater.

[Hybrid composite material]

The continuous fiber reinforced thermoplastic in the present embodiment may be used as a hybrid composite material. The hybrid composite material is preferably produced by injecting a non-continuous reinforcing material to the continuous fiber reinforced thermoplastic in the present embodiment so that they are integrated. More specifically, the hybrid composite material may be produced by further injection filling a hybridizing thermoplastic resin composition to a continuous fiber reinforced thermoplastic containing continuous reinforcing fibers and a thermoplastic resin. The production process of the hybrid material may include setting base materials used for the above-mentioned continuous fiber reinforced thermoplastic (for example, a base material made of continuous reinforcing fibers, a base material made of a thermoplastic resin, or a base material made of a continuous fiber reinforced thermoplastic) into a mold and closing the mold, pressing the mold, waiting for a predetermined period of time, and then injecting a certain hybridizing thermoplastic resin composition into the mold to cause the thermoplastic resin in the base materials and the hybridizing thermoplastic resin composition to be joined together to produce the hybrid composite material.

The timing of injection filling of the certain hybridizing thermoplastic resin composition greatly affects the interfacial strength between both thermoplastic resins (between the thermoplastic resin in the continuous fiber reinforced thermoplastic and the thermoplastic resin in the hybridizing thermoplastic resin composition). The timing of injection filling of the certain hybridizing thermoplastic resin composition is preferably within 30 seconds after the temperature of the mold reaches the melting point or higher or the glass transition temperature or higher of the thermoplastic resin composing the base material used for the continuous fiber reinforced thermoplastic, after the base materials are set in the mold and the mold is closed.

The mold temperature at which the certain hybridizing thermoplastic resin composition is injection filled is preferably equal to or higher than the melting point or equal to or higher than the glass transition temperature of the thermoplastic resin that composes the base material used for the continuous fiber reinforced thermoplastic, and which is to be bonded to the hybridizing thermoplastic resin composition. The mold temperature is more preferably a temperature of the melting point + 10 °C or higher or the glass transition temperature + 10 °C or higher of the thermoplastic resin which composes the base material used for the continuous fiber reinforced thermoplastic, and which is to be joined with the hybridizing thermoplastic resin composition, and is more preferably a temperature of the melting point + 20 °C or higher or the glass transition temperature + 20 °C or higher, even more preferably a temperature of the melting point + 30 °C or higher or the glass transition temperature + 30 °C or higher.

In the hybrid composite material of the present embodiment, it is preferable that the joined portion formed by injection molding between the thermoplastic resin composing the base material used for the continuous fiber reinforced thermoplastic and the hybridizing thermoplastic resin composition has irregularities where the both resins are mixed together.

Setting the mold temperature to be equal to or higher than the melting point of the hybridizing thermoplastic resin composition to be injected, and setting the resin holding pressure during injection molding to a high value, for example, so as to be equal or higher than 1 MPa are effective in improving the interfacial strength. For enhancing the interfacial strength, the above holding pressure is preferably set to 5 MPa or more, and more preferably 10 MPa or more.

Further, from the viewpoint of enhancing the interfacial strength, it is preferable to keep the mold pressure for a long time, for example, for 5 seconds or longer, preferably 10 seconds or longer, and more preferably a time period until the mold temperature becomes equal to or lower than the melting point of the hybridizing thermoplastic resin composition.

(Hybridizing thermoplastic resin composition)

The hybridizing thermoplastic resin composition which is used for injection molding to produce the above hybrid composite material is not particularly limited as long as it is a thermoplastic resin composition generally used for injection molding.

In the present embodiment, examples of the thermoplastic resin contained in the hybridizing thermoplastic resin composition include, but are not limited to, resin compositions obtained by mixing one or two or more thermoplastic resins, such as polyethylene, polypropylene, polyvinyl chloride, acrylic resins, styrene-based resins, polyethylene terephthalate, polybutylene terephthalate, polyarylate, polyphenylene ether, modified polyphenylene ether resins, fully aromatic polyester, polyacetal, polycarbonate, polyetherimide, polyether sulfone, polyamide-based resins, polysulfone, polyether ether ketone, and polyether ketone.

The above hybridizing thermoplastic resin composition may contain various fillers blended thereto. The hybridizing thermoplastic resin composition may be a black resin composition containing a colorant.

Examples of the filler include short- and long-fiber materials, which are non-continuous reinforcing materials of the same material as the material of the continuous reinforcing fibers.

In this specification, a non-continuous reinforcing material refers to fibers with a number average fiber length of 3 mm or less as measured by the following method. Continuous reinforcing fibers, on the other hand, are fibers with a number average fiber length exceeding 3 mm as measured by the following method.

A test specimen to be measured is cut out from the hybridizing thermoplastic resin composition or hybrid composite material. The test specimen is heated in air at 650 °C for 180 minutes in an electric furnace to fully incinerate and remove resin components to separate only non-continuous reinforcing material. Thereafter, 10 fibers are arbitrarily sampled and the lengths of 10 fibers are measured under an optical microscope. The average fiber length was calculated using the following formula.

$$\text{Average number fiber length} = (\Sigma Li)/10$$

Li: Length of each fiber (mm)

When glass short or long fibers are used as the non-continuous reinforcing material, the same bundling agent as the bundling agent (1) applied to the continuous reinforcing fibers composing the continuous fiber reinforced thermoplastic of the present embodiment may be used. The bundling agent (1) preferably includes a silane coupling agent, a lubricant, and a binding agent. As the silane coupling agent, the lubricant, and the binding agent, those used for the above-described bundling agent (1) for the continuous reinforcing fibers can be used.

The thermoplastic resin contained in the hybridizing thermoplastic resin composition used for injection molding is preferably a thermoplastic resin similar to, more preferably the same thermoplastic resin composition as, the thermoplastic resin composing the continuous fiber reinforced thermoplastic, from the viewpoint of the interfacial strength with the thermoplastic resin to be joined together. Specifically, when polyamide 66 is used as the thermoplastic resin for the surface to be joined, the resin material in the hybridizing thermoplastic resin composition used for injection molding is preferably polyamide 66.

Other examples include a molding method in which base materials used for the continuous fiber reinforced thermoplastic are set in a mold and the mold is compressed by a double belt press machine; a method in which a mold frame is disposed so as to surround the four sides of arranged base materials used for the continuous fiber reinforced thermoplastic and is pressurized by a double belt press machine for achieving molding; and a method in which a compression molding machine set to one or more temperatures is used together with a compression molding machine for cooling set to one or more temperatures, and molds having base materials used for the continuous fiber reinforced thermoplastic set therein are loaded to the compression molding machines in sequence for achieving molding.

EXAMPLES

Hereinafter, the present disclosure will be specifically described with reference to examples and comparative examples. The present disclosure, however, is not limited to these examples, and it is needless to say that the present disclosure can be practiced in a wide variety of modifications without departing from the scope of the gist of the present disclosure.

[Recovery ratio of bending strength, recovery ratio of bending elastic modulus, and recovery ratio of continuous fiber reinforced thermoplastic]

(Measurements of recovery ratio of bending strength and recovery ratio of bending elastic modulus)

Before conducting bending tests, strip-shaped test specimens (A1) with a length of 100 mm, a width of 10 mm, and a thickness of 2 mm were cut from continuous fiber reinforced thermoplastics prepared in examples and comparative examples, and dried in a vacuum dryer at 80 °C for 18 hours or longer. The bending strength (MPa) and the bending elastic modulus (GPa) were then measured by conducting a bending test as one example of a load test using Instron universal testing machine in each of an environment of 23 °C and 50% RH and an environment of 100 °C and 50% RH, using a three-point bending jig, a span interval set to the thickness × 16 (mm) at a speed of 1 mm/min. After conducting the bending test on the test specimen (A1), the test specimen was recovered according to the recovery step described in each example to produce a test specimen (B1). Subsequently, a bending test was performed on the recovered test specimen (B1) of the continuous fiber reinforced thermoplastic. The obtained bending strength or bending elastic modulus was then divided by the bending strength or bending elastic modulus of the test specimen (A1) of the continuous fiber reinforced thermoplastic before the load test, to thereby determine the recovery ratio of the bending strength or recovery ratio of the bending elastic modulus.

Recovery ratio of bending strength (%) = bending strength of test specimen (B1) / bending strength of test speciment (A1) × 100 Recovery ratio of bending elastic modulus (%) = bending elastic modulus of test specimen (B1) / bending elastic modulus of test speciment (A1) × 100

(Method of calculating recovery ratio)

A continuous fiber reinforced resin shaped articles before and after the load test were each cut using a band saw. The cut pieces were then polished using a polishing machine (small high-precision specimen preparation system IS-POLISHER ISPP-1000 (Ikegami Seiki Co., Ltd.)) while applying a polishing pressure of 416 g/cm$^2$ to the polishing surface. Polishing was carried out using water-resistant polishing paper No. #2000 for 10 minutes, a silicon carbide film with a particle size of 9 μm for 5 minutes, an alumina film with a particle size of 5 μm for 5 minutes, an alumina film with a particle size of 3 μm for 5 minutes, an alumina film with a particle size of 1 μm for 5 minutes, and colloidal silica (BAIKALOX 0.1CR) with a particle size of 0.1 μm using buffing abrasive paper foam polyurethane for 5 minutes, in this sequence. In the process, water was added at about 7 mL/min while polishing to prepare a test specimen before the load test (A2) and a test specimen after the load test (B2). The polished surfaces of the test specimens (A2) and (B2) were observed under a field emission scanning electron microscope (FESEM (S-4700, Hitachi High-Technologies Corporation)) under the following conditions. Among 20 arbitrary-selected continuous reinforcing fibers, the number of fibers that did not have any voids between a single reinforcing fiber and the thermoplastic resin covering that fiber was determined.

The determination as to whether there was any void or not between the continuous reinforcing fibers and the thermoplastic resin coating the continuous reinforcing fiber was made according to the steps illustrated in FIGS. 14 and 15 described above. If the porosity in the outer circumferential region in the thermoplastic resin, which was outwardly distant from the interface between the continuous reinforcing fibers and the thermoplastic resin by one-tenth (1/10) the radius (r1) of a single continuous reinforcing fiber, was 10% or less, it was determined that there was no void between the single continuous reinforcing fiber and the thermoplastic resin coating the single continuous reinforcing fiber.

Furthermore, the method for measuring the void ratio (%) involves using the obtained field emission scanning electron microscope image. In the image, the area within the thermoplastic resin, which was outwardly distant from the interface between the continuous reinforcing fiber and the thermoplastic resin by one-tenth the radius (r1) of the single continuous reinforcing fiber, was considered the outer circumferential region. In this region, any black areas were considered voids. Through image analysis, the ratio of the void region to the total area of the outer circumferential region within the resin was calculated as the void ratio (%).

More specifically, a test specimen (Aa) was cut out from the later-described continuous fiber reinforced thermoplastic before the load test and was polished according to the above-described conditions. Images were taken within 50 fields of view (at a magnification ratio from 4000 to 4500) under a field emission scanning electron microscope. Among 20 arbitrary-selected continuous reinforcing fibers present in these images, the number A of continuous reinforcing fibers without voids at the interface between the continuous reinforcing fibers and the thermoplastic resin was counted.

Next, the continuous fiber reinforced thermoplastic after the later-described load test was subjected to the later-described recovery step to produce a continuous fiber reinforced thermoplastic after recovery. Subsequently, a test specimen (Bb) was cut out from the continuous fiber reinforced thermoplastic after recovery and polished according to the above-described conditions. Images were taken within 50 fields of view (at a magnification ratio from 4000 to 4500) under a field emission scanning electron microscope. Among 20 arbitrary-selected continuous reinforcing fibers present in these images, the number B of continuous reinforcing fibers without voids at the interface between the continuous reinforcing fibers and the thermoplastic resin was counted.

The recovery ratio (%) of the continuous fiber reinforced thermoplastic was calculated by substituting the measured numbers A and B into the following Equation (1).

$$\text{Recovery ratio (\%)} = (B/A) \times 100$$

In the following, conditions for the method of calculating the recovery ratio by each load test are described in detail.

<Calculation of recovery ratio by bending test>

A test specimen (A1) was cut out from the continuous fiber reinforced thermoplastic before the above-described bending test, and was polished according to the above-described conditions. Images were taken within 50 fields of view (at a magnification ratio from 4000 to 4500) under a field emission scanning electron microscope. Among 20 arbitrary-selected continuous reinforcing fibers present in these images, the number Ai of continuous reinforcing fibers without voids at the interface between the continuous reinforcing fibers and the thermoplastic resin was counted.

Next, the continuous fiber reinforced thermoplastic after the above-described bending test was subjected to the recovery step described in each of the later-described examples and comparative examples to produce a continuous fiber reinforced thermoplastic after recovery. Then, a test specimen (B1) was cut out from the location where the bending test was conducted and was polished according to the above-described conditions. Images were taken within 50 fields of view (at a magnification ratio from 4000 to 4500) under a field emission scanning electron microscope. Among 20 arbitrary-selected continuous reinforcing fibers present in these images, the number Bi of continuous reinforcing fibers without voids at the interface between the continuous reinforcing fibers and the thermoplastic resin was counted. Then, the recovery ratio (%) from the bending test was calculated as Bi/Ai × 100 using the above Formula (1).

<Calculation of recovery ratio by impact test>

A test specimen (A2) was cut out from the continuous fiber reinforced thermoplastic before an impact test and was polished according to the above-described conditions. Images were taken within 50 fields of view (at a magnification ratio from 4000 to 4500) under a field emission scanning electron microscope. Among 20 arbitrary-selected continuous reinforcing fibers present in these images, the number Aii of continuous reinforcing fibers without voids at the interface between the continuous reinforcing fibers and the thermoplastic resin was counted.

Next, a test specimen (A2) with a length of 150 mm, a width of 100 mm, and a thickness of 2 mm was cut out from the continuous fiber reinforced thermoplastic. The cut test specimen (A2) was then fixed onto a stainless steel jig with a hole of diameter 30 mm. A steel-made striker with a hemispherical tip (with a diameter of 16 mm) was allowed to free-fall onto the center of the test specimen and to collide with the test specimen, thereby conducting the impact test. Thereafter, a test specimen (A2) after the impact test was subjected to the recovery step described in each of the later-described examples and comparative examples. Subsequently, the area where the impact test was conducted was cut out from the test specimen, and the cut test specimen (A2) was polished using a polishing machine (small high-precision specimen preparation system IS-POLISHER ISPP-1000 (Ikegami Seiki Co., Ltd.)) under the above-described conditions to produce a test specimen (B2). The test specimen (B2) was then observed under a field emission scanning electron microscope (FESEM (S-4700, Hitachi High-Technologies Corporation)) to observe the polished surface of the test specimen (B2) after the impact test. Among 20 arbitrary-selected continuous reinforcing fibers present in the image (at a magnification ratio from 4000 to 4500) of the test specimen (B2), the number Bii of continuous reinforcing fibers without voids at the interface between the continuous reinforcing fibers and the thermoplastic resin was counted. Then, the recovery ratio (%) from the impact test was calculated as Bii/Aii $\times$ 100 using the above Formula (1).

[Recovery ratio of long-term property]

A tensile impact dumbbell Type S test specimen (C) was prepared according to the ASTM-D1822 standard from the continuous fiber reinforced thermoplastic prepared in each of the examples and comparative examples, and a vibration fatigue test was performed by EHF-EB50kN-40L (RV) (Shimadzu Corporation) at a test temperature of 23 °C, a frequency of 20 Hz, with a waveform of sine wave, and a chuck interval set to 35 mm. When the number of breaks reached 10,000 in the fatigue test under a load stress of 250 MPa, the first fatigue test was stopped. The test specimen (C) was then subjected to the recovery method described in each example. After recovery, a second fatigue test was conducted under the same conditions as the first fatigue test, and the number of breaks (NB2) in the second fatigue test under a load stress of 250 MPa was determined. Then, another test specimen (C), for which the first vibration fatigue test was not conducted, was prepared, and the number of breaks (NB1) in the vibration fatigue test at 250 MPa on the other test specimen (C) was determined under the same conditions as the second vibration fatigue test. Thereafter, the recovery ratio of long-term property (%) was calculated as the number of breaks (NB2) divided by the number of breaks (NB1) $\times$ 100.

Recovery ratio of long-term property (%) = (number of breaks (NB2) / breaks (NB1)) $\times$ 100

[Interfacial polishing strength of continuous fiber reinforced thermoplastic]

A shaped article of the continuous fiber reinforced resin produced in each of the examples and comparative examples was cut using a band saw. The cut test specimen (D) was polished using a polishing machine (small high-precision specimen preparation system IS-POLISHER ISPP-1000 (Ikegami Seiki Co., Ltd.)). The polishing was performed under the following conditions while increasing the polishing pressure from 200 g/cm$^2$ by 20 g/cm$^2$. The polishing surface was observed under a field emission scanning electron microscope (FESEM (S-4700, Hitachi High-Technologies Corporation)) to determine the maximum polishing pressure under which no void was formed between one continuous reinforcing fiber and the thermoplastic resin. The pressure one step before the polishing pressure under which a void(s) is observed between one continuous reinforcing fiber and the thermoplastic resin is determined as the maximum polishing pressure. For example, if a void(s) is observed after applying a polishing pressure of 520 g/cm$^2$, the maximum polishing pressure is 500 g/cm$^2$.

The above polishing conditions were as follows: using water resistant polishing paper No. #2000 for 10 minutes, a silicon carbide film having a particle size of 9 $\mu$m for 5 minutes, an alumina film having a particle size of 5 $\mu$m for 5 minutes, an alumina film having a particle size of 3 $\mu$m for 5 minutes, an alumina film having a particle size of 1 $\mu$m for 5 minutes, and colloidal silica (BAIKALOX 0.1CR) with a particle size of 0.1 $\mu$m using buffing abrasive paper foam polyurethane for 5 minutes, in this sequence. Each polishing was performed while adding water at about 7 mL/min.

[Handleability of continuous fiber reinforced thermoplastic at high temperatures]

A test specimen (E) of 50 mm $\times$ 50 mm was cut from each continuous fiber reinforced thermoplastic produced in the examples and comparative examples using a band saw. The test specimen was then heated using an infrared heater (INFRASTEIN H7GS-71298NGK, NGK INSULATORS, LTD., a wavelength of 3 to 7 $\mu$m) to the melting temperature of the thermoplastic resin used in each example. The thickness change before and after heating ((thickness of the continuous fiber reinforced thermoplastic after heating) / (thickness of the continuous fiber reinforced thermoplastic before heating)) was evaluated. A ratio of 1.2 or less was rated "good", while a ratio greater than 1.2 was rated "poor".

Note that the reason why the thickness change of the continuous fiber reinforced thermoplastic was measured as an indicator of the handleability of the continuous fiber reinforced thermoplastic at high temperatures was that residual stress remains in the continuous fiber reinforced thermoplastic per se because the continuous fiber reinforced thermoplastic is typically produced while applying pressure. Hence, when the continuous fiber reinforced thermoplastic is heated, the residual stress is released, causing the resin component within the continuous fiber reinforced thermoplastic to expand, resulting in deformation. This makes it difficult to handle the continuous fiber reinforced thermoplastic.

In addition, as one indicator of the handleability of the continuous fiber reinforced thermoplastic at high temperatures, the following criteria were used to confirm the retainability of the shape of the test specimen (E).

<Criteria for retainability of shape>

A test specimen (E) of 300 mm × 300 mm was cut from each continuous fiber reinforced thermoplastic produced in the examples and comparative examples using a band saw. The test specimen was then heated using an infrared heater (INFRASTEIN H7GS-71298NGK, NGK INSULATORS, LTD., a wavelength of 3 to 7 $\mu$m) to the melting temperature of the thermoplastic resin used in each example or comparative example + 30 °C. Subsequently, the test specimen was placed in a box-shaped mold with dimensions of 200 mm (long side) × 200 mm (short side) at the bottom, with a side length of 50 mm, and an angle of 60 degrees between the top and the sides. The temperature of the mold had been adjusted to the glass transition temperature of each resin + 100 °C. Pressing was carried out under a pressure of 15 MPa for 1 minute. The resulting molded article was placed in an electric furnace to remove the resin. Finally, the angle between the bottom and the side of the continuous reinforcing fibers was measured. When the angle was from 45 degrees to 70 degrees, the specimen was rated "good", otherwise it was rated "poor".
The materials used in the examples and comparative examples are as follows.

[Continuous reinforcing fibers]

Glass fibers 1 (GF1): Glass fibers were produced in which 0.30 mass% of a bundling agent (1) was attached to 100 mass% of glass fibers with a fiber fineness of 1.15 g/m and a single yarn count of 2,000. The winding configuration was DWR and the average single yarn diameter was about 18 $\mu$m. This bundling agent (1) was prepared by copolymerizing 2.0 mass% of $\gamma$-aminopropyl triethoxysilane (Tokyo Chemical Industry Co., Ltd.), 1 mass% of polyethylene wax, 2 mass% of non-yellowing urethane emulsion (TOYOPOLYMER CO., LTD.), and 10 mass% of methyl methacrylate, and the resultant was adjusted with deionized water so as to contain 3 mass% of the copolymerized compound with a weight average molecular weight of 20,000.
Glass fiber 2 (GF2): GF1 was treated at 600 °C for 3 hours in an electric furnace to produce glass fiber 2 from which the surface treatment agent (bundling agent (1)) was removed.
Glass fibers 3 (GF3): Glass fiber 2 was immersed in a 0.5 mass% water solution of $\gamma$-aminopropyl triethoxysilane (KBE-903, manufactured by Shin-Etsu Chemical Co., Ltd.) for 30 minutes and dried at 110 °C for 3 hours. The resultant was dried at 110 °C for 3 hours to produce glass fiber 3 (GF3) treated only with the coupling agent.

[Preparation of continuous reinforcing fiber base material]

Glass cloth: Continuous reinforcing fiber base materials were produced by weaving the above glass fibers 1 to 3 as warps and wefts using a repia loom (weave width: 1 m). The produced glass cloth was plain weave, and had a weave density of 6.5/25 mm and a basis weight of 640 g/m$^2$. The glass cloth made from glass fiber 1 (GF1) is referred to as glass cloth 1 (or GC1), the glass cloth made from glass fiber 2 (GF2) as glass cloth 2 (or GC2), and the glass cloth made from glass fiber 3 (GF3) as glass cloth 3 (or GC3).

[Thermoplastic resin]

Resin 1: Polyamide 66

A polymerization reaction of the polyamide was carried out by the "thermal melting polymerization method" as follows.
A 50-mass% homogeneous equimolar water solution of raw monomers was prepared by dissolving 1500 g of an equimolar salt of adipic acid (Wako Pure Chemical Industries) and hexamethylenediamine (Tokyo Chemical Industry Co., Ltd.) and 200 g of adipic acid in 1500 g of distilled water. The water solution was charged in an autoclave with a content of 6.2 L, which was replaced with nitrogen. The solution was concentrated by gradually venting water vapor until the concentration of the solution reached 65 mass% while stirring at a temperature of 110 °C or higher and 140 °C or lower. The internal temperature was then raised to 230 °C. At this time, the pressure of the autoclave was increased to 1.9 MPa. A reaction was caused to take place for 1 hour while the pressure was maintained to 1.9 MPa until the internal temperature reached 235 °C by gradually venting water vapor for 1 hour. The pressure was then lowered over 1.5 hours. The interior of the autoclave was then maintained to a reduced pressure of 650 torr for 13 minutes using a vacuum apparatus. At this time, the final internal temperature of the polymerization was 265 °C. Resin 1 (polyamide 66) was then extruded by pressurization with nitrogen through a lower spinneret (nozzle) into strands, which were water-cooled, cut, and discharged in the form of pellets, and dried at 100 °C under a nitrogen atmosphere for 12 hours. Mw was 35000, Mw/Mn was 2.0, the melting point (Tm) was 265 °C, and the glass transition temperature (Tg) was 50 °C.

Resin 2: Polyamide 6I

A polymerization reaction of the polyamide was carried out by the "thermal melting polymerization method" as follows.

To 1500 g of distilled water, 1500 g of an equimolar salt of isophthalic acid (Wako Pure Chemical Industries) and hexamethylene diamine and isophthalic acid in the amount of 4.0 mol% per the entire equimolar salt component. The solution was concentrated by gradually venting water vapor until the concentration of the solution reached 65 mass% while stirring at a temperature of 110 °C or higher and 140 °C or lower. The internal temperature was then raised to 230 °C. At this time, the pressure of the autoclave was increased to 1.9 MPa. A reaction was caused to take place for 1.2 hours while the pressure was maintained to 1.9 MPa until the internal temperature reached 235 °C by gradually venting water vapor for 1.5 hours. The pressure was then lowered over 30 minutes. The interior of the autoclave was then maintained to a reduced pressure of 650 torr for 12 minutes using a vacuum apparatus. At this time, the final internal temperature of the polymerization was 265 °C. Resin 2 (polyamide 6I) was then extruded by pressurization with nitrogen through a lower spinneret (nozzle) into strands, which were water-cooled, cut, and discharged in the form of pellets, and dried at 100 °C under a nitrogen atmosphere for 12 hours. Ms was 20000, Mw/Mn was 2.0, and Tg was 130 °C.

Resin 3: Dry blend of Resin 1 and Resin 2 (PA66 : PA6I = 2:1), Tg = 110 °C

Resin 4: Polyamide 6 (Tm = 225 °C, Tg = 50 °C)

A mixed solution (4) was prepared by dissolving 1500 g of ε-caprolactam and 15 g of hexamethylenediamine in 1875 g of distilled water. The mixed solution (4) was sealed in an autoclave equipped with a pressure control valve and stirring blades. After purging with nitrogen, the pressure inside the autoclave was pressurized to 0.05 MPa with nitrogen. The mixed solution (4) was then stirred while gradually removing water vapor until the concentration of the solution reached 65 mass% at a temperature 110 °C or higher and 140 °C or lower. The internal temperature of the autoclave was then raised to 230 °C. At this time, the pressure of the autoclave was increased to 1.8 MPa. A reaction was caused to take place for 1 hour while the pressure was maintained to 1.8 MPa until the internal temperature reached 235 °C by gradually venting water vapor for 1 hour. The pressure was then lowered over 1.5 hours. The interior of the autoclave was then maintained to a reduced pressure of 650 torr for 13 minutes using a vacuum apparatus. At this time, the final internal temperature of the polymerization was 265 °C. Resin 4 (polyamide 6) was then extruded by pressurization with nitrogen through a lower spinneret (nozzle) into strands, which were water-cooled, cut, and discharged in the form of pellets, and dried at 100 °C under a nitrogen atmosphere for 12 hours. Mw was 24000, Mw/Mn was 2.1, the melting point (Tm) was 225 °C, and the glass transition temperature (Tg) was 50 °C.

Resin 5: Polyamide 9T (Tm = 300 °C, Tg = 125 °C)

A mixed solution (5) was prepared by dissolving 1500 g of an equimolar salt of terephthalic acid and 1,9 nonanediamine in 1500 g distilled water. The solution was concentrated by gradually venting water vapor until the concentration of the solution reached 65 mass% while the mixed solution (5) was stirred at a temperature of 110 °C or higher and 140 °C or lower. The internal temperature was then raised to 260 °C. At this time, the pressure of the autoclave was increased to 2.1 MPa. A reaction was caused to take place for 1.2 hours while the pressure was maintained to 2.1 MPa until the internal temperature reached 265 °C by gradually venting water vapor for 1.8 hours. The pressure was then lowered over 40 minutes. The interior of the autoclave was then maintained to a reduced pressure of 650 torr for 20 minutes using a vacuum apparatus. At this time, the final internal temperature of the polymerization was 300 °C. Resin 5 (polyamide 9T) was then extruded by pressurization with nitrogen through a lower spinneret (nozzle) into strands, which were water-cooled, cut, and discharged in the form of pellets, and dried at 100 °C under a nitrogen atmosphere for 12 hours. Ms was 26000, Mw/Mn was 2.0, and Tg was 125 °C.

Resin 6: Polyamide 12 (Tm = 175 °C, Tg = 50 °C)

Resin 7: Polyamide 1010 (Daicel-Evonik Ltd., Tm = 202 °C, Tg = 37 °C)

[Production of thermoplastic resin film]

Thermoplastic resin films were produced by molding the above-described resins 1 to 7 using a T-die extrusion molding machine (manufactured by SOUKEN CO. LTD.). The thickness of the films was 200 μm.

[Example 1]

Thermoplastic resin films 1 were obtained by using Resin 1 by the method described above. Five glass cloths 1 (GC1) and six thermoplastic resin films 1 were prepared. The glass cloths 1 and the thermoplastic resin films 1 were alternately overlapping one another so that the thermoplastic resin films 1 were disposed on the surfaces, and molded under the following conditions, thereby obtaining a continuous fiber reinforced thermoplastic (1). At this time, the ratio of the charged volume of the thermoplastic resin was 50%.

The molding conditions used in Example 1 are as follows

The molding machine used for the molding was a continuous compression molding machine. A laminate of the glass cloths 1 and the thermoplastic resin films 1 overlapped one another as described above was placed in the molding machine. The temperature inside the heating zone of the continuous compression molding machine was adjusted to 330 °C and the temperature of the cooling zone was controlled by water cooling, and compression-molding was performed at a pressure of 3 MPa and a belt speed of 0.5 m/min to produce the continuous fiber reinforced thermoplastic (1). Subsequently, the obtained continuous fiber reinforced thermoplastic (1) underwent a load test under the conditions summarized in Table 1 and the following recovery step (1). The recovery ratio of the bending strength, the recovery ratio of the bending elastic modulus, the recovery ratio of the continuous fiber reinforced thermoplastic, the recovery ratio by the bending test, the recovery ratio by the impact test, the recovery ratio of long-term property, the interfacial polishing strength of the continuous fiber reinforced thermoplastic, and handleability at high temperatures of the continuous fiber reinforced thermoplastic were evaluated. The results are summarized in Table 1.

The recovery step (1) in Example 1 is as follows.

Recovery step (1): The test specimen after the load test was placed in a mold with an spigot joint-type structure. A hydraulic molding machine with a maximum clamping force of 50 tons (SHOJI Co., Ltd.) was used, the internal temperature of the molding machine was heated to 150 °C, and heat-pressing was then performed while clamping at a clamping force of 5 MPa for 15 minutes. After heating, cooling was performed. The mold was then opened and the test specimen after recovery were removed.

The following experiments were also conducted to confirm the change in interfacial polishing strength with the type of glass cloth.

Continuous fiber reinforced thermoplastics (1 (GF2)) and continuous fiber reinforced thermoplastics (1 (GC3)) were also prepared in the same manner as in Example 1 described above, except that GF2 and GF3 were used, respectively, instead of glass cloth 1 (GC1) used to produce the above-described continuous fiber reinforced thermoplastics (1). The interfacial polishing strength when the glass cloth 2 (GC2) or glass cloth 3 (GC3) was used was measured according to the procedure described in the above [Interfacial polishing strength of continuous fiber reinforced thermoplastic] section. The results are summarized in Table 1.

[Example 2]

Continuous fiber reinforced thermoplastics (2) were obtained in the same manner as in Example 1, except that the recovery step was changed to the following recovery step (2), and the characteristics summarized in Table 1 were evaluated as in Example 1.

Recovery step (2): The test specimen after the load test was placed in a thermostatic water bath set at 80 °C for 1 hour. After the test specimen was removed from the thermostatic water bath, the test specimen was dried in a vacuum dryer set at 80 °C to obtain a test specimen after recovery.

In addition, similarly to Example 1, continuous fiber reinforced thermoplastics (2 (GC2)) and continuous fiber reinforced thermoplastics (2 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (2). The interfacial polishing strength when GF2 or GF3 was used was measured according to the procedure described in the above [Interfacial polishing strength of continuous fiber reinforced thermoplastic] section. The results are summarized in Table 1.

[Example 3]

Continuous fiber reinforced thermoplastics (3) were obtained in the same manner as in Example 1, except that the recovery step was changed to the following recovery step (3), and the characteristics summarized in Table 1 were evaluated as in Example 1.

Recovery step (3): After the load test, the test specimen was placed in a hot-air circulating dryer set at 150 °C for 15 minutes, and then the test specimen after recovery was removed.

In addition, similarly to Example 1, continuous fiber reinforced thermoplastics (3 (GF2)) and continuous fiber reinforced thermoplastics (3 (GC3)) were also prepared in the same manner as in Example 1, except that glass cloth 3 (GF2) and glass cloth 3 (GC3) were used, respectively, instead of glass cloth 1 (GC1) used to produce the above-described continuous fiber reinforced thermoplastics (3). The interfacial polishing strength when GF2 or GF3 was used was measured according to the procedure described in the above [Interfacial polishing strength of continuous fiber reinforced thermoplastic] section. The results are summarized in Table 1.

[Example 4]

Continuous fiber reinforced thermoplastics (4) were obtained in the same manner as in Example 1 except that resin 2 was used as the thermoplastic resin, the recovery step (1) was performed, and the characteristics summarized in Table 1 were evaluated as in Example 1.

In addition, similarly to Example 1, continuous fiber reinforced thermoplastics (4 (GC2)) and continuous fiber reinforced thermoplastics (4 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (4). The interfacial polishing strength when GF2 or GF3 was used was measured according to the procedure described in the above [Interfacial polishing strength of continuous fiber reinforced thermoplastic] section. The results are summarized in Table 1.

[Example 5]

Continuous fiber reinforced thermoplastics (5) were obtained in the same manner as in Example 1, except that resin 3 was used as the thermoplastic resin, the recovery step was changed to the following recovery step (4), and the characteristics summarized in Table 1 were evaluated as in Example 1.

Recovery step (4): The recovery step (4) was conducted in the same manner as in Example 1, except that the heating temperature was set to 110 °C.

In addition, similarly to Example 1, continuous fiber reinforced thermoplastics (5 (GC2)) and continuous fiber reinforced thermoplastics (5 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (5). The interfacial polishing strength when GF2 or GF3 was used was measured according to the procedure described in the above [Interfacial polishing strength of continuous fiber reinforced thermoplastic] section. The results are summarized in Table 1.

[Example 6]

Continuous fiber reinforced thermoplastics (6) were obtained in the same manner as in Example 2 except that resin 4 was used as the thermoplastic resin, the recovery step (2) was performed, and the characteristics summarized in Table 1 were evaluated as in Example 1.

In addition, similarly to Example 1, continuous fiber reinforced thermoplastics (6 (GC2)) and continuous fiber reinforced thermoplastics (6 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (6). The interfacial polishing strength when GF2 or GF3 was used was measured according to the procedure described in the above [Interfacial polishing strength of continuous fiber reinforced thermoplastic] section. The results are summarized in Table 1.

[Example 7]

Continuous fiber reinforced thermoplastics (7) were obtained in the same manner as in Example 3, except that resin 5 was used as the thermoplastic resin, the recovery step was changed to the following recovery step (5), and the characteristics summarized in Table 1 were evaluated as in Example 1.

Recovery step (5): The recovery step (5) was conducted in the same manner as in Example 3, except that the heating temperature was set to 160 °C.

In addition, similarly to Example 1, continuous fiber reinforced thermoplastics (7 (GC2)) and continuous fiber reinforced thermoplastics (7 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (7). The interfacial polishing strength when GF2 or GF3 was used was measured according to the procedure described in the above [Interfacial polishing strength of continuous fiber reinforced thermoplastic] section. The results are summarized in Table 1.

[Example 8]

Continuous fiber reinforced thermoplastics (8) were obtained in the same manner as in Example 1, except that the recovery step was changed to the following recovery step (6) and the characteristics summarized in Table 1 were evaluated as in Example 1.

Recovery step (6): The recovery step (6) was conducted in the same manner as in Example 1, except that the heating temperature was set to 265 °C.

In addition, similarly to Example 1, continuous fiber reinforced thermoplastics (8 (GC2)) and continuous fiber reinforced thermoplastics (8 (GC3)) were also prepared in the same manner as in Example 1, except that glass cloth 2 (GC2) or glass cloth 3 (GC3) was used instead of glass cloth 1 (GC1) used to produce the above-described continuous fiber reinforced thermoplastics (8). The interfacial polishing strength when GF2 or GF3 was used was measured according to the procedure described in the above [Interfacial polishing strength of continuous fiber reinforced thermoplastic] section. The results are summarized in Table 1.

[Example 9]

Continuous fiber reinforced thermoplastics (9) were obtained in the same manner as in Example 1, except that the recovery step was as follows, the recovery step (7) was performed, and the characteristics summarized in Table 1 were evaluated as in Example 1.

Recovery step (7): After the load test, the test specimen was placed in a thermostatic humidity chamber set at 80 °C and a humidity of 57% for 24 hours.

In addition, similarly to Example 1, continuous fiber reinforced thermoplastics (9 (GC2)) and continuous fiber reinforced thermoplastics (9 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (9). The interfacial polishing strength when GF2 or GF3 was used was measured according to the procedure described in the above [Interfacial polishing strength of continuous fiber reinforced thermoplastic] section. The results are summarized in Table 1.

[Example 10]

Continuous fiber reinforced thermoplastics (10) were obtained in the same manner as in Example 5, except that the recovery step was as follows, the recovery step (8) was performed, and the characteristics summarized in Table 1 were evaluated as in Example 1.

Recovery step (8): The recovery step (8) was conducted in the same manner as in Example 1, except that the heating temperature was set to 110 °C.

In addition, similarly to Example 1, continuous fiber reinforced thermoplastics (10 (GC2)) and continuous fiber reinforced thermoplastics (10 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (10). The interfacial polishing strength when GF2 or GF3 was used was measured according to the procedure described in the above [Interfacial polishing strength of continuous fiber reinforced thermoplastic] section. The results are summarized in Table 1.

[Example 11]

Continuous fiber reinforced thermoplastics (11) were obtained in the same manner as in Example 1, except that the recovery step was as follows, the recovery step (9) was performed, and the characteristics summarized in Table 1 were evaluated as in Example 1.

Recovery step (9): The recovery step (9) was conducted in the same manner as in Example 1, except that the heating temperature was set to 80 °C.

In addition, similarly to Example 1, continuous fiber reinforced thermoplastics (11 (GC2)) and continuous fiber reinforced thermoplastics (11 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (11). The interfacial polishing strength when GF2 or GF3 was used was measured according to the procedure described in the above [Interfacial polishing strength of continuous fiber reinforced thermoplastic] section. The results are summarized in Table 1.

[Comparative Example 1]

Commercially available prepreg ("Tepex dynalite 101" manufactured by Bond Laminate) produced by impregnating glass cloth with polyamide 66 was used as continuous fiber reinforced thermoplastics (c1), the same recovery step (1) as in Example 1 was performed, and the characteristics summarized in Table 1 were evaluated.
In addition, similarly to Example 1, continuous fiber reinforced thermoplastics (c1 (GC2)) and continuous fiber reinforced thermoplastics (c1 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (c1). The interfacial polishing strength when GF2 or GF3 was used was measured according to the procedure described in the above [Interfacial polishing strength of continuous fiber reinforced thermoplastic] section. The results are summarized in Table 1.

[Comparative Example 2]

Continuous fiber reinforced thermoplastics (c2) were obtained in the same manner as in Example 1 except that resin 6 was used as the thermoplastic resin, the recovery step (1) was performed, and the characteristics summarized in Table 1 were evaluated.
In addition, similarly to Example 1, continuous fiber reinforced thermoplastics (c2 (GC2)) and continuous fiber reinforced thermoplastics (c2 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (c2). The interfacial polishing strength when GF2 or GF3 was used was measured according to the procedure described in the above [Interfacial polishing strength of continuous fiber reinforced thermoplastic] section. The results are summarized in Table 1.

[Comparative Example 3]

Continuous fiber reinforced thermoplastics (c3) were obtained in the same manner as in Example 1 except that resin 7 was used as the thermoplastic resin, the recovery step (1) was performed, and the characteristics summarized in Table 1 were evaluated.
In addition, similarly to Example 1, continuous fiber reinforced thermoplastics (c3 (GC2)) and continuous fiber reinforced thermoplastics (c3 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (c3). The interfacial polishing strength when GF2 or GF3 was used was measured according to the procedure described in the above [Interfacial polishing strength of continuous fiber reinforced thermoplastic] section. The results are summarized in Table 1.

[Reference Example 1]

Continuous fiber reinforced thermoplastics (1) obtained in the same manner as in Example 1 were evaluated for the characteristics summarized in Table 1 without performing the recovery step.
In addition, similarly to Example 1, continuous fiber reinforced thermoplastics (1 (GC2)) and continuous fiber reinforced thermoplastics (1 (GC3)) were also prepared in the same manner as in Example 1, except that glass cloth 2 (GC2) and glass cloth 3 (GC3) were used, respectively, instead of glass cloth 1 (GC1) used to produce the above-described continuous fiber reinforced thermoplastics (1). The interfacial polishing strength when GF2 or GF3 was used was measured according to the procedure described in the above [Interfacial polishing strength of continuous fiber reinforced thermoplastic] section. The results are summarized in Table 1.

# [Table 1]

| Table 1 | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Reference Example 1 |
|---|---|---|---|---|---|---|---|---|---|---|---|---|---|---|---|---|
| Type of thermoplastic resin | | Resin 1 | Resin 1 | Resin 1 | Resin 2 | Resin 3 | Resin 4 | Resin 5 | Resin 1 | Resin 1 | Resin 3 | Resin 1 | TEPEX | Resin 6 | Resin 7 | Resin 1 |
| Type of continuous reinforcing fiber substrate | | GC1 | GC1 | GC1 | GC1 | GC1 | GC1 | GC1 | GC1 | GC1 | GC1 | GC1 | - | GC1 | GC1 | GC1 |
| Type of recovery step | | Press | Hot water treatment | Hot air circulation drying | Press | Press | Hot water treatment | Hot air circulating drying | Press | Thermostatic humidity chamber | Press | Press | Press | Press | Press | No recovery step |
| Heating temperature (°C) in recovery step | | 150 °C | 80 °C | 150 °C | 150 °C | 110 °C | 80 °C | 160 °C | 265 °C | 80 °C | 180 °C | 80 °C | 150 °C | 150 °C | 150 °C | |
| Recovery ratio (%) of interface by load test (bending test) | | 93 | 94 | 93 | 61 | 54 | 88 | 74 | 92 | 86 | 78 | 60 | 0 | 10 | 7 | 0 |
| Recovery ratio of bending strength (%) | | 78 | 78 | 74 | 63 | 59 | 70 | 66 | 79 | 69 | 71 | 62 | 51 | 55 | 53 | 51 |
| Recovery ratio by bending elastic modulus (%) | | 78 | 84 | 76 | 65 | 61 | 72 | 66 | 81 | 72 | 70 | 60 | 44 | 50 | 52 | 48 |
| Recovery ratio (%) of interface by load test (impact test) | | 93 | 94 | 93 | 61 | 54 | 88 | 74 | 92 | 86 | 78 | 60 | 0 | 10 | 7 | 0 |
| Recovery ratio of long-term property (%) | | 93 | 92 | 91 | 83 | 80 | 87 | 85 | 84 | 86 | 83 | 82 | 29 | 44 | 35 | 31 |
| Interfacial polishing strength (MPa) | | 1160 | 1160 | 1160 | 3940 | 3800 | 980 | 930 | 1160 | 1160 | 3800 | 1160 | 420 | 660 | 520 | 1160 |
| Interfacial polishing strength when GC3 is used instead of GC1 | Evaluation target | Continuous fiber reinforced resin composite material (1 (GC3)) | Continuous fiber reinforced resin composite material (2 (GC3)) | Continuous fiber reinforced resin composite material (3 (GC3)) | Continuous fiber reinforced resin composite material (4 (GC3)) | Continuous fiber reinforced resin composite material (5 (GC3)) | Continuous fiber reinforced resin composite material (6 (GC3)) | Continuous fiber reinforced resin composite material (7 (GC3)) | Continuous fiber reinforced resin composite material (8 (GC3)) | Continuous fiber reinforced resin composite material (9 (GC3)) | Continuous fiber reinforced resin composite material (10 (GC3)) | Continuous fiber reinforced resin composite material (11 (GC3)) | - | Continuous fiber reinforced resin composite material (c2 (GC3)) | Continuous fiber reinforced resin composite material (c3 (GC3)) | Continuous fiber reinforced resin composite material (1 (GC3)) |
| | MPa | 1120 | 1120 | 1120 | 3920 | 3760 | 900 | 810 | 1120 | 1120 | 3760 | 1120 | - | 320 | 310 | 1120 |
| Interfacial polishing strength when GC2 is used instead of GC1 | Evaluation target | Continuous fiber reinforced resin composite material (1 (GC2)) | Continuous fiber reinforced resin composite material (2 (GC2)) | Continuous fiber reinforced resin composite material (3 (GC2)) | Continuous fiber reinforced resin composite material (4 (GC2)) | Continuous fiber reinforced resin composite material (5 (GC2)) | Continuous fiber reinforced resin composite material (6 (GC2)) | Continuous fiber reinforced resin composite material (7 (GC2)) | Continuous fiber reinforced resin composite material (8 (GC2)) | Continuous fiber reinforced resin composite material (9 (GC2)) | Continuous fiber reinforced resin composite material (10 (GC2)) | Continuous fiber reinforced resin composite material (11 (GC2)) | - | Continuous fiber reinforced resin composite material (c2 (GC2)) | Continuous fiber reinforced resin composite material (c3 (GC2)) | Continuous fiber reinforced resin composite material (1 (GC2)) |
| | MPa | 220 | 220 | 220 | 210 | 200 | 320 | 330 | 220 | 220 | 200 | 220 | - | 340 | 310 | 220 |
| Handleability at high temperatures | Retainability of shape | good | good | good | good | good | good | good | poor | good | good | good | good | good | good | - |
| | Thickness change | good | good | good | good | good | good | good | good | good | good | good | poor | poor | poor | poor |

In Table 1 above, Examples 1 to 11 exhibited recovery ratios of 50% or higher, exhibiting very high bending recovery characteristic, impact recovery characteristic, and recovery characteristic of long-term property.

(Modifications)

It has been described that the proportion for learning calculation unit 13 determines a plurality of classes CL based on the hammering data in the distribution in the embodiment described above. However, this is not limiting, and the proportion for learning calculation unit 13 may determine a plurality of provisional classes by non-hierarchical clustering or the like. In such a configuration, the proportion for learning calculation unit 13 may determine a plurality of classes CL, corresponding to the largest rectangle included within respective regions indicating a plurality of provisional classes, in a graph representing the distribution of hammering data having a plurality of characteristic values included in the hammering data on each axis. This allows the testing apparatus 2 to reduce the processing load for determining hammering data of an unknown material included in which of the plurality of classes CL. As a result, the testing apparatus 2 can reduce the processing load for testing unknown materials.

In addition, in the embodiment described above, the testing model learning apparatus 1 may further include an output unit. In such a configuration, the output unit may output a model learned by the model learning unit 14 to a plurality of other computers via a communication network, and the model may be managed by a blockchain composed of the plurality of other computers. Furthermore, the testing apparatus 2 can perform tests as described above using the model managed by the blockchain.

<Program>

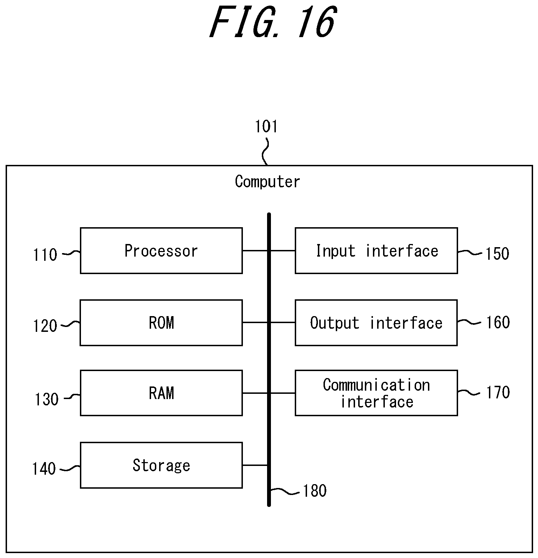

The testing model learning apparatus 1 and the testing apparatus 2 described above can be embodied by a computer 101. A program to cause it to function as the testing model learning apparatus 1 and the testing apparatus 2 may also be provided. The program may be stored in a storage medium or provided through a network. FIG. 16 is a block diagram illustrating the schematic configuration of a computer 101 that functions as the testing model learning apparatus 1 and the testing apparatus 2. Here, the computer 101 may be a general-purpose computer, dedicated computer, workstation, PC (Personal Computer), electronic notepad, or the like. Program instructions may be program codes, code segments, or the like to perform necessary tasks.

In addition, the fracture state input unit 31 and the recovery condition determination unit 32 of the recovery control apparatus 3 can be embodied by the computer 101. A program to cause it to function as the fracture state input unit 31 and the recovery condition determination unit 32 of the recovery control apparatus 3 may be provided. The program may be stored in a storage medium or provided through a network. The computer functioning as the fracture state input unit 31 and the recovery condition determination unit 32 of the recovery control apparatus 3 may also be configured in the same manner as the computer 101 illustrated in FIG. 16.

As illustrated in FIG. 16, the computer 101 includes a processor 110, a ROM 120, a RAM 130, a storage 140, an input interface (I/F) 150, an output interface (I/F) 160, and a communication interface (I/F) 170. Each component is communicatively connected to each other via a bus 180. Specifically, the processor 110 is a CPU (Central Processing Unit), MPU (Micro Processing Unit), GPU (Graphics Processing Unit), DSP (Digital Signal Processor), SoC (System on a Chip), or the like, and may be configured by a plurality of processors of the same or different types.

The processor 110 controls each of the above components and performs various processing operations. Specifically, the processor 110 reads a program from the ROM 120 or the storage 140 and executes the program using the RAM 130 as the work area. The processor 110 controls each of the above components and performs various processing operations according to a program stored in the ROM 120 or the storage 140. In the embodiment described above, the program according to the present disclosure is stored in the ROM 120 or the storage 140.

The program may be stored on a storage medium readable by the computer 101. The program can be installed on the computer 101 with such a storage medium. Here, the storage medium in which the program is stored may be a non-transitory storage medium. The non-transient storage medium may be, for example, but is not limited to, a CD-ROM, DVD-ROM, USB (Universal Serial Bus) memory, or the like. Alternatively, the program may be downloaded from an external device via a network.

The ROM 120 stores various programs and data. The RAM 130 functions as a work area to temporarily store programs or data. The storage 140 is configured by an HDD or SSD and stores various programs including various programs including the operating system and various data.

The input interface 150 includes one or more input interfaces that receive an input operation by the user to obtain information based on the operation by the user. For example, the input interface 150 may be, but is not limited to, a pointing device, keyboard, mouse, and the like.

The output interface 160 is, but is not limited to, a display that outputs information in the form of graphics. When the output interface 160 is a touch panel, it also functions as the input interface 150.

The communication interface (I/F) 170 is an interface for communicating with external devices.

With regard to the above embodiment, the following addenda are further disclosed.

(Addendum 1)

A testing model learning apparatus comprising:

an input interface that receives an input of known material data indicating a distribution of hammering sound data comprising a plurality of characteristic values related to a hammering sound generated when a known material of which fracture state is known is struck and the fracture state of the known material; and
a controller,
wherein the controller:

determines, based on the known material data, a plurality of classes for dividing the distribution, and calculates proportions for learning that are proportions that the hammering sound data corresponding to the fracture state is included in the respective plurality of classes; and
learns a model that outputs a fracture state of an unknown material of which fracture state is unknown, based on the proportions for learning.

(Addendum 2)

The testing model learning apparatus according to addendum 1, wherein the controller determines the plurality of classes by non-hierarchical clustering.

(Addendum 3)

The testing model learning apparatus according to addendum 1 or 2, wherein the plurality of characteristic values are an amplitude and a duration.

(Addendum 4)

The testing model learning apparatus according to any one of addenda 1 to 3, wherein the plurality of characteristic values related to the hammering sound are obtained by acoustic emission.

(Addendum 5)

A testing apparatus that conducts a test using a model, the model being learned with known material data indicating a distribution of hammering sound data comprising a plurality of characteristic values related to a hammering sound generated when a known material of which fracture state is known is struck and the fracture state of the known material, for outputting a fracture state of an unknown material of which fracture state is unknown, based on proportions for learning that are proportions that the hammering sound data is included in a respective plurality of classes in the distribution, the testing apparatus comprising:

an input interface that receives an input of unknown material data indicating a distribution of hammering sound data indicating the plurality of characteristic values related to a hammering sound generated when the unknown material is struck; and
a controller,
wherein the controller:

calculates proportions for determination that are proportions that the hammering sound data of which distribution is indicated by the unknown material data is included in the respective plurality of classes; and
inputs the proportions for determination to the model and causes the model to output a fracture state of the unknown material based on the proportions for determination.

(Addendum 6)

The testing apparatus according to addendum 5, wherein the controller causes the model to output the fracture state based on a proportion for determination included in one of the plurality of classes in the hammering sound data and a proportion for determination included in another class that is different from the one class in the hammering sound data.

(Addendum 7)

The testing apparatus according to addendum 5 or 6, wherein the plurality of classes are determined by dividing the distribution of the hammering data by non-hierarchical clustering.

(Addendum 8)

The testing apparatus according to any one of addenda 5 to 7, wherein the plurality of characteristic values are an amplitude and a duration.

(Addendum 9)

The testing apparatus according to any one of addenda 5 to 8, wherein the plurality of characteristic values related to the hammering sound are obtained by acoustic emission.

(Addendum 10)

A learning method for a testing model, comprising the steps of:

receiving an input of known material data indicating a distribution of hammering sound data comprising a plurality of characteristic values related to a hammering sound generated when a known material of which fracture state is known is struck and the fracture state of the known material;
determining, based on the known material data, a plurality of classes for dividing the distribution, and calculating proportions for learning that are proportions that the hammering sound data corresponding to the fracture state is included in the respective plurality of classes; and
learning a model that outputs a fracture state of an unknown material of which fracture state is unknown, based on the proportions for learning.

(Addendum 11)

The learning method for a testing model according to addendum 10, wherein the plurality of characteristic values related to the hammering sound are obtained by acoustic emission.

(Addendum 12)

A testing method performed by a testing apparatus that conducts a test using a model, the model being learned with known material data indicating a distribution of hammering sound data comprising a plurality of characteristic values related to a hammering sound generated when a known material of which fracture state is known is struck and the fracture state of the known material, for outputting a fracture state of an unknown material of which fracture state is unknown, based on proportions for learning that are proportions that the hammering sound data is included in a respective plurality of classes in the distribution, the testing method comprising the steps of:

receiving an input of unknown material data indicating a distribution of hammering sound data indicating a plurality of characteristic values related to a hammering sound generated when the unknown material is struck;
calculating proportions for determination that are proportions that the hammering sound data of which distribution is indicated by the unknown material data is included in the respective plurality of classes; and
inputting the proportions for determination to the model and causing the model to output a fracture state of the unknown material based on the proportions for determination.

(Addendum 13)

The testing method according to addendum 12, wherein the plurality of characteristic values related to the hammering sound are obtained by acoustic emission.

(Addendum 14)

A non-transitory storage medium storing a program executable by a computer, the program causing the computer to function as a testing model learning apparatus according to any one of addenda 1 to 4.

(Addendum 15)

A non-transitory storage medium storing a program executable by a computer, the program causing the computer to function as a testing apparatus according to any one of addenda 5 to 9.

(Addendum 16)

A method of recovering an unknown material, comprising the steps of:

receiving an input of data indicating the fracture state of the unknown material determined using the testing method according to addendum 12 or 13;
determining a recovery condition for recovering an interface of the unknown material based on the fracture state; and
recovering the interface of the unknown material according to the recovery condition.

(Addendum 17)

A continuous fiber reinforced thermoplastic comprising continuous reinforcing fibers and a thermoplastic resin, measurable by the testing method according to addendum 12 or 13,

the continuous fiber reinforced thermoplastic having a recovery ratio (%) expressed by the following Formula (1) in a range of 50 to 100%:

$$\text{the recovery ratio (\%)} = (B/A) \times 100 \qquad \text{Formula (1)}$$

(in the above Formula (1), A represents, when scanning electron microscope images (at a magnification ratio from 4000 to 4500) of a test specimen (a) cut out from the continuous fiber reinforced thermoplastic are obtained at 20 arbitrary-selected points so that cross-sections of continuous reinforcing fibers are included in the images, a number of continuous reinforcing fibers without voids at an interface between the continuous reinforcing fibers and the thermoplastic resin among continuous reinforcing fibers present in the images; and
B represents, when the continuous fiber reinforced thermoplastic is subjected to a load test and is then subjected to a recovery step after the load test, and scanning electron microscope images (at a magnification ratio from 4000 to 4500) of a test specimen (b) cut out from the continuous fiber reinforced thermoplastic after recovery are obtained at 20 arbitrary-selected points so that cross-sections of continuous reinforcing fibers in the continuous fiber reinforced thermoplastic after recovery are included in the images, a number of continuous reinforcing fibers without voids at the interface between the continuous reinforcing fibers and the thermoplastic resin among continuous reinforcing fibers present in the images).

(Addendum 18)

The continuous fiber reinforced thermoplastic according to addendum 17, wherein the recovery step of the formula (1) is a step of heating the continuous fiber reinforced thermoplastic after the load test in a temperature range equal to or higher than a glass transition temperature of the thermoplastic resin in the continuous fiber reinforced thermoplastic and equal to or lower than the glass transition temperature + 150 °C.

(Addendum 19)

The continuous fiber reinforced thermoplastic according to addendum 17 or 18, wherein the recovery step of the formula (1) comprises heating the continuous fiber reinforced thermoplastic after the load test at a temperature equal to or higher than the glass transition temperature of the thermoplastic resin and lower than a melting point of the thermoplastic resin.

(Addendum 20)

The continuous fiber reinforced thermoplastic according to any one of addenda 17 to 19, wherein the recovery step of the formula (1) comprises heating the continuous fiber reinforced thermoplastic after the load test while a water absorption ratio of the continuous fiber reinforced thermoplastic after the load test is kept in a range of at least 0.3 mass%.

(Addendum 21)

The continuous fiber reinforced thermoplastic according to any of addenda 17 to 20, wherein the recovery step of the formula (1) comprises heating the continuous fiber reinforced thermoplastic after the load test under pressurization.

(Addendum 22)

The continuous fiber reinforced thermoplastic according to any of addenda 17 to 20, wherein the recovery step of the formula (1) comprises heating the continuous fiber reinforced thermoplastic after the load test without pressurization.

(Addendum 23)

A production method of the continuous fiber reinforced thermoplastic according to any of addenda 17 to 22, comprising

obtaining the continuous fiber reinforced thermoplastic by stacking continuous reinforcing fibers that have been surface-treated with a bundling agent (1) containing a coupling agent and a thermoplastic resin,
wherein an interfacial polishing strength of the continuous fiber reinforced thermoplastic is 0.8 to 1.2 times an interfacial polishing strength of a continuous fiber reinforced thermoplastic obtained by stacking continuous fibers that have been surface-treated only with the coupling agent and the thermoplastic resin.

(Addendum 24)

A production method of the continuous fiber reinforced thermoplastic according to any of addenda 17 to 22, comprising

obtaining the continuous fiber reinforced thermoplastic comprising a bundling agent (1) containing a coupling agent, continuous reinforcing fibers, and a thermoplastic resin by stacking the continuous reinforcing fibers and the thermoplastic resin,
wherein an interfacial polishing strength of the continuous fiber reinforced thermoplastic is twice or more an interfacial polishing strength of a continuous fiber reinforced thermoplastic obtained by stacking the continuous fibers when a surface treated portion by the bundling agent (1) is removed and the thermoplastic resin.

All references, patent applications, and technical standards described herein are incorporated herein by reference to the same extent as if each of the references, patent applications, and technical standards was specifically and individually stated to be incorporated by reference.
Although the above embodiment has been described as a typical example, it is apparent to those skilled in the art that many modifications and substitutions can be made within the gist and scope of the present disclosure. Accordingly, the present disclosure should not be interpreted to be limited to the embodiment described above, and various variations and modifications can be made without departing from the scope of the claims. For example, it is possible to combine multiple element blocks described in the configuration diagrams of the disclosure into one, or one multiple element may be divided.

INDUSTRIAL APPLICABILITY

The continuous fiber reinforced thermoplastic of the present embodiment is industrially applicable as recoverable reinforcing materials for materials subjected to fracture due to fatigue, impact, etc., such as structural components of a variety of machines and automobiles, and as composite materials of thermoplastic resin compositions.

REFERENCE SIGNS LIST

1       Testing model learning apparatus
2       Testing apparatus
3       Recovery control apparatus
11      Known material data input unit
12      Known material data storing unit
13      Proportion for learning calculation unit
14      Model learning unit
15      Model storing unit
21      Unknown material data input unit
22      Proportion for determination calculation unit
23      Determination unit
24      Output unit
31      Fracture state input unit
32      Recovery condition determination unit
33      Recovery condition output unit
34      Recovery unit
35      Display unit
101     Computer
110     Processor
120     ROM
130     RAM
140     Storage
150     Input interface
160     Output interface
170     Communication interface
180     Bus

**Claims**

1. A testing model learning apparatus comprising:

   a known material data input unit that receives an input of known material data indicating a distribution of hammering sound data comprising a plurality of characteristic values related to a hammering sound generated when a known material of which fracture state is known is struck and the fracture state of the known material;
   a proportion for learning calculation unit that determines, based on the known material data, a plurality of classes for dividing the distribution, and calculates proportions for learning that are proportions that the hammering sound data corresponding to the fracture state is included in the respective plurality of classes; and
   a model learning unit that learns a model that outputs a fracture state of an unknown material of which fracture state is unknown, based on the proportions for learning.

2. The testing model learning apparatus according to claim 1, wherein the proportion for learning calculation unit determines the plurality of classes by non-hierarchical clustering.

3. The testing model learning apparatus according to claim 1 or 2, wherein the plurality of characteristic values are an amplitude and a duration.

4. The testing model learning apparatus according to claim 1 or 2, wherein the plurality of characteristic values related to the hammering sound are obtained by acoustic emission.

5. A testing apparatus that conducts a test using a model, the model being learned with known material data indicating a distribution of hammering sound data comprising a plurality of characteristic values related to a hammering sound generated when a known material of which fracture state is known is struck and the fracture state of the known material, for outputting a fracture state of an unknown material of which fracture state is unknown, based on proportions for learning that are proportions that the hammering sound data is included in a respective plurality of classes in the distribution, the testing apparatus comprising:

   an unknown material data input unit that receives an input of unknown material data indicating a distribution of hammering sound data indicating the plurality of characteristic values related to a hammering sound generated when the unknown material is struck;

a proportion for determination calculation unit that calculates proportions for determination that are proportions that the hammering sound data of which distribution is indicated by the unknown material data is included in the respective plurality of classes; and

a determination unit that inputs the proportions for determination to the model and causes the model to output a fracture state of the unknown material based on the proportions for determination.

6. The testing apparatus according to claim 5, wherein the determination unit causes the model to output the fracture state based on a proportion for determination included in one of the plurality of classes in the hammering sound data and a proportion for determination included in another class that is different from the one class in the hammering sound data.

7. The testing apparatus according to claim 5 or 6, wherein the plurality of classes are determined by dividing the distribution of the hammering data by non-hierarchical clustering.

8. The testing apparatus according to claim 5 or 6, wherein the plurality of characteristic values are an amplitude and a duration.

9. The testing apparatus according to claim 5 or 6, wherein the plurality of characteristic values related to the hammering sound are obtained by acoustic emission.

10. A learning method for a testing model, comprising the steps of:

receiving an input of known material data indicating a distribution of hammering sound data comprising a plurality of characteristic values related to a hammering sound generated when a known material of which fracture state is known is struck and the fracture state of the known material;

determining, based on the known material data, a plurality of classes for dividing the distribution, and calculating proportions for learning that are proportions that the hammering sound data corresponding to the fracture state is included in the respective plurality of classes; and

learning a model that outputs a fracture state of an unknown material of which fracture state is unknown, based on the proportions for learning.

11. The learning method for a testing model according to claim 10, wherein the plurality of characteristic values related to the hammering sound are obtained by acoustic emission.

12. A testing method performed by a testing apparatus that conducts a test using a model, the model being learned with known material data indicating a distribution of hammering sound data comprising a plurality of characteristic values related to a hammering sound generated when a known material of which fracture state is known is struck and the fracture state of the known material, for outputting a fracture state of an unknown material of which fracture state is unknown, based on proportions for learning that are proportions that the hammering sound data is included in a respective plurality of classes in the distribution, the testing method comprising the steps of:

receiving an input of unknown material data indicating a distribution of hammering sound data indicating a plurality of characteristic values related to a hammering sound generated when the unknown material is struck;

calculating proportions for determination that are proportions that the hammering sound data of which distribution is indicated by the unknown material data is included in the respective plurality of classes; and

inputting the proportions for determination to the model and causing the model to output a fracture state of the unknown material based on the proportions for determination.

13. The testing method according to claim 12, wherein the plurality of characteristic values related to the hammering sound are obtained by acoustic emission.

14. A program for causing a computer to function as a testing model learning apparatus according to claim 1 or 2.

15. A program for causing a computer to function as a testing apparatus according to claim 5 or 6.

16. A method of recovering an unknown material, comprising the steps of:

receiving an input of data indicating the fracture state of the unknown material determined using the testing method according to claim 12;

determining a recovery condition for recovering an interface of the unknown material based on the fracture state; and

recovering the interface of the unknown material according to the recovery condition.

17. A continuous fiber reinforced thermoplastic comprising continuous reinforcing fibers and a thermoplastic resin, measurable by the testing method according to claim 12,

the continuous fiber reinforced thermoplastic having a recovery ratio (%) expressed by the following Formula (1) in a range of 50 to 100%:

$$\text{the recovery ratio (\%)} = (B/A) \times 100 \qquad \text{Formula (1)}$$

(in the above Formula (1), A represents, when scanning electron microscope images (at a magnification ratio from 4000 to 4500) of a test specimen (a) cut out from the continuous fiber reinforced thermoplastic are obtained at 20 arbitrary-selected points so that cross-sections of continuous reinforcing fibers are included in the images, a number of continuous reinforcing fibers without voids at an interface between the continuous reinforcing fibers and the thermoplastic resin among continuous reinforcing fibers present in the images; and
B represents, when the continuous fiber reinforced thermoplastic is subjected to a load test and is then subjected to a recovery step after the load test, and scanning electron microscope images (at a magnification ratio from 4000 to 4500) of a test specimen (b) cut out from the continuous fiber reinforced thermoplastic after recovery are obtained at 20 arbitrary-selected points so that cross-sections of continuous reinforcing fibers in the continuous fiber reinforced thermoplastic after recovery are included in the images, a number of continuous reinforcing fibers without voids at the interface between the continuous reinforcing fibers and the thermoplastic resin among continuous reinforcing fibers present in the images).

18. The continuous fiber reinforced thermoplastic according to claim 17, wherein the recovery step of the formula (1) is a step of heating the continuous fiber reinforced thermoplastic after the load test in a temperature range equal to or higher than a glass transition temperature of the thermoplastic resin in the continuous fiber reinforced thermoplastic and equal to or lower than the glass transition temperature + 150 °C.

19. The continuous fiber reinforced thermoplastic according to claim 17 or 18, wherein the recovery step of the formula (1) comprises heating the continuous fiber reinforced thermoplastic after the load test at a temperature equal to or higher than the glass transition temperature of the thermoplastic resin and lower than a melting point of the thermoplastic resin.

20. The continuous fiber reinforced thermoplastic according to claim 17 or 18, wherein the recovery step of the formula (1) comprises heating the continuous fiber reinforced thermoplastic after the load test while a water absorption ratio of the continuous fiber reinforced thermoplastic after the load test is kept in a range of at least 0.3 mass%.

21. The continuous fiber reinforced thermoplastic according to claim 17 or 18, wherein the recovery step of the formula (1) comprises heating the continuous fiber reinforced thermoplastic after the load test under pressurization.

22. The continuous fiber reinforced thermoplastic according to claim 17 or 18, wherein the recovery step of the formula (1) comprises heating the continuous fiber reinforced thermoplastic after the load test without pressurization.

23. A production method of the continuous fiber reinforced thermoplastic according to claim 17 or 18, comprising

obtaining the continuous fiber reinforced thermoplastic by stacking continuous reinforcing fibers that have been surface-treated with a bundling agent (1) containing a coupling agent and a thermoplastic resin, wherein an interfacial polishing strength of the continuous fiber reinforced thermoplastic is 0.8 to 1.2 times an interfacial polishing strength of a continuous fiber reinforced thermoplastic obtained by stacking continuous fibers that have been surface-treated only with the coupling agent and the thermoplastic resin.

24. A production method of the continuous fiber reinforced thermoplastic according to claim 17 or 18, comprising

obtaining the continuous fiber reinforced thermoplastic comprising a bundling agent (1) containing a coupling agent, continuous reinforcing fibers, and a thermoplastic resin by stacking the continuous reinforcing fibers and the thermoplastic resin,

wherein an interfacial polishing strength of the continuous fiber reinforced thermoplastic is twice or more an interfacial polishing strength of a continuous fiber reinforced thermoplastic obtained by stacking the continuous fibers when a surface treated portion by the bundling agent (1) is removed and the thermoplastic resin.

## FIG. 1

1

Testing model learning apparatus

11

Known material data
input unit

12

Known material data
storing unit

13

Proportion for learning
calculation unit

14

Model learning unit

15

Model storing unit

# FIG. 2

FIG. 3

EP 4 431 938 A1

# FIG. 4

## FIG. 5

| ID | Count of hammering data | Ra1 | Ra2 | Ra3 | Ra4 | Ra5 | Ra6 |
|---|---|---|---|---|---|---|---|
| 1 | 12107 | 0 | 3.882052 | 0.718593 | 14.08276 | 0.859007 | 78.06228 |
| 2 | 14092 | 0.659949 | 5.322169 | 1.156685 | 12.7732 | 5.208629 | 72.18989 |
| 3 | 8543 | 2.130399 | 2.130399 | 0.948145 | 35.35058 | 0.011705 | 55.32015 |
| 4 | 26440 | 0.170197 | 5.816944 | 0.533283 | 3.195915 | 12.69289 | 74.86384 |
| 5 | 20834 | 0.239992 | 8.279735 | 0.897571 | 7.108573 | 8.999712 | 69.68417 |
| 6 | 26753 | 0.224274 | 6.855306 | 0.74758 | 3.764064 | 7.165552 | 77.37824 |
| 7 | 25052 | 0.359253 | 6.522433 | 3.03369 | 5.320932 | 8.841609 | 71.92639 |
| 8 | 20953 | 0.725433 | 5.498019 | 1.398368 | 2.806281 | 2.553334 | 82.74233 |
| 9 | 7215 | 0.554401 | 3.589744 | 9.60499 | 45.40541 | 2.300762 | 36.1885 |

EP 4 431 938 A1

FIG. 6

# FIG. 7

Start

S11

Receive input of known measurement data

S12

Determine plurality of classes

S13

Calculate proportions for learning

S14

Learn model for outputting fracture state

End

# FIG. 8

~2

**Testing apparatus**

~21
Unknown material data input unit

~22
Proportion for determination calculation unit

~15
Model storing unit

~23
Determination unit

~24
Output unit

FIG. 9

EP 4 431 938 A1

# FIG. 10

```
            ┌──────────────────────┐
            │        Start         │
            └──────────┬───────────┘
                       │                          ∿ S21
    ┌──────────────────▼───────────────────────┐
    │    Receive input of unknown material data │
    └──────────────────┬───────────────────────┘
                       │                          ∿ S22
    ┌──────────────────▼───────────────────────┐
    │    Calculate proportions for determination│
    └──────────────────┬───────────────────────┘
                       │                          ∿ S23
    ┌──────────────────▼───────────────────────┐
    │        Determine fracture state           │
    └──────────────────┬───────────────────────┘
                       │
            ┌──────────▼───────────┐
            │         End          │
            └──────────────────────┘
```

# *FIG. 11*

~3

**Recovery control apparatus**

~31

Fracture state
input unit

~32

Recovery condition
determination unit

~33

Recovery condition
output unit

~34

Recovery unit

~35

Display unit

# FIG. 12

```
┌─────────────────────────────┐
│            Start            │
└─────────────────────────────┘
              │
              ▼                              S31
┌───────────────────────────────────────────┐
│  Receive input of data indicating fracture state │
└───────────────────────────────────────────┘
              │
              ▼                              S32
┌───────────────────────────────────────────┐
│          Calculate recovery condition       │
└───────────────────────────────────────────┘
              │
              ▼                              S33
┌───────────────────────────────────────────┐
│        Recover interface of unknown material │
└───────────────────────────────────────────┘
              │
              ▼
┌─────────────────────────────┐
│             End             │
└─────────────────────────────┘
```

# FIG. 13

| Algorithm | R2 |
|---|---|
| Random forest | 80% |
| MLP | 80% |
| Logistic regression | 74% |
| SVM | 76% |
| kNN | 67% |

# FIG. 14

## FIG. 15

# FIG. 16

101

## Computer

| 110 | Processor | | Input interface | 150 |
| 120 | ROM | | Output interface | 160 |
| 130 | RAM | | Communication interface | 170 |
| 140 | Storage | | | |

180

## INTERNATIONAL SEARCH REPORT

International application No.

**PCT/JP2022/040840**

### A. CLASSIFICATION OF SUBJECT MATTER

*G01N 29/04*(2006.01)i; *C08J 5/08*(2006.01)i; *G01N 29/14*(2006.01)i; *G01N 29/44*(2006.01)i
FI: G01N29/04; G01N29/14; G01N29/44; C08J5/08

According to International Patent Classification (IPC) or to both national classification and IPC

### B. FIELDS SEARCHED

Minimum documentation searched (classification system followed by classification symbols)

G01N29/00-29/52

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2018-163049 A (SHOWA TEKKUSU KK) 18 October 2018 (2018-10-18) paragraphs [0005]-[0008], [0082]-[0095], [0207], fig. 11 | 1, 4-5, 9-16 |
| A | | 2-3, 6-8, 17-24 |
| A | JP 2018-13348 A (NIPPON TELEGR. & TELEPH. CORP.) 25 January 2018 (2018-01-25) | 1-24 |
| A | JP 2021-38936 A (OKUMURA CORP.) 11 March 2021 (2021-03-11) | 1-24 |
| A | US 2017/0234837 A1 (RENISHAW PLC) 17 August 2017 (2017-08-17) | 1-24 |
| A | CN 112255308 A (INSTITUTE OF THERMAL POWER GENERATION TECHNOLOGY, CHINA DATANG CORPORATION SCIENCE AND TECHNOLOGY RESEARCH INSTITUTE CO., LTD.) 22 January 2021 (2021-01-22) | 1-24 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2022** | **13 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

### INTERNATIONAL SEARCH REPORT
Information on patent family members

International application No.

**PCT/JP2022/040840**

| Patent document cited in search report | | | Publication date (day/month/year) | Patent family member(s) | | | Publication date (day/month/year) |
|---|---|---|---|---|---|---|---|
| JP | 2018-163049 | A | 18 October 2018 | (Family: none) | | | |
| JP | 2018-13348 | A | 25 January 2018 | (Family: none) | | | |
| JP | 2021-38936 | A | 11 March 2021 | (Family: none) | | | |
| US | 2017/0234837 | A1 | 17 August 2017 | WO | 2016/062897 | A1 | |
| | | | | EP | 3210011 | A1 | |
| CN | 112255308 | A | 22 January 2021 | (Family: none) | | | |

Form PCT/ISA/210 (patent family annex) (January 2015)

**REFERENCES CITED IN THE DESCRIPTION**

**Patent documents cited in the description**

- JP 2020163783 A
- JP 2015101794 A